(19) Europäisches Patentamt
European Patent Office
Office européen des brevets

(11) EP 2 084 222 B1

(12) **EUROPEAN PATENT SPECIFICATION**

(45) Date of publication and mention of the grant of the patent:
**17.03.2010 Bulletin 2010/11**

(21) Application number: **07844770.3**

(22) Date of filing: **31.10.2007**

(51) Int Cl.:
***C08L 23/00*** *(2006.01)* ***C08L 75/04*** *(2006.01)*

(86) International application number:
**PCT/US2007/083163**

(87) International publication number:
**WO 2008/057886 (15.05.2008 Gazette 2008/20)**

(54) **POLYURETHANE COMPOSITIONS AND ARTICLES PREPARED THEREFROM, AND METHODS FOR MAKING THE SAME**

POLYURETHANZUSAMMENSETZUNGEN UND DARAUS HERGESTELLTE GEGENSTÄNDE UND HERSTELLUNGSVERFAHREN DAFÜR

COMPOSITIONS DE POLYURÉTHANE ET ARTICLES PRÉPARÉS À PARTIR DE CES DERNIÈRES, PROCÉDÉS DE PRODUCTION CORRESPONDANTS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.11.2006 US 863887 P**
**12.03.2007 US 894353 P**
**27.07.2007 US 952254 P**
**27.07.2007 US 952266 P**

(43) Date of publication of application:
**05.08.2009 Bulletin 2009/32**

(73) Proprietor: **DOW GLOBAL TECHNOLOGIES INC.**
**Midland, MI 48674 (US)**

(72) Inventors:
- **WEAVER, Laura B.**
  **Lake Jackosn, TX 77566 (US)**
- **BATRA, Ashish**
  **Lake Jackson, TX 77566 (US)**
- **ANSEMS, Patricia**
  **Lake Jackson, TX 77566 (US)**

(74) Representative: **Burford, Anthony Frederick**
**Beck Greener**
**Fulwood House**
**12 Fulwood Place**
**London**
**WC1V 6HR (GB)**

(56) References cited:
**EP-A- 0 347 794** **WO-A-2006/101968**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 084 222 B1

## Description

FIELD OF INVENTION

The invention provides polyurethane compositions comprising the following: a) at least olefin multi-block interpolymer; b) at least one thermoplastic polyurethane; and c) at least one polydiene- or polydiol-based polyurethane.

Polyolefins, as a class of materials, have relatively poor adhesion and compatibility with more polar polymeric materials. In most cases, a separate adhesive is required in order to adhere polyolefins to polar substrates like polyesters, polyamides, polyurethanes, and the like. Similarly, a third component compatibilizer typically has to be used to prepare satisfactory melt blends of polyolefins with other more polar thermoplastics. However significant amounts of compatibilizers are usually required to maintain the intimate blend of the polyolefin and polyurethane.

In North America, approximately 25 million lbs of flexible polyvinyl chloride (f-PVC) goes into thermoformed sheeting for automotive applications, such as instrument and door panels. Such sheeting is grained, and is color matched with other interior components. Sheeting for automotive applications has to meet several end-use requirements. Key end-use requirements include a low gloss value, a high surface scratch/mar resistance, high heat resistance and good cold temperature impact resistance. In addition, the sheeting must have good adhesion to any intermediate polyurethane (PU) foam layer, for example a foam layer used to provide a softening or cushioning effect to an automotive panel.

The polymeric sheets or skins must be of low gloss, or low glare, especially, if the sheet is placed under a window, such as, in the instrument panel (IP), under the front window of an automobile. Moreover, the gloss of the material must remain low over the vehicle life-time. The gloss of a material is typically determined by measuring reflected light at specified angles, and a typical test measurement is done at 60 degrees. The reflection measurements are converted into gloss values, and these values are typically less than, or equal to, 2, for automotive applications. Flexible or plasticized polyvinyl chloride typically has high gloss values. To reduce the gloss of flexible polyvinylchloride, to acceptable levels for automotive applications, a liquid polyurethane top-coating is typically applied.

Thermoplastic polyolefins (TPOs) sheets can also be used in automotive applications. Thermoplastic polyolefin sheets or skins generally have lower gloss values compared to flexible polyvinyl chloride, but are also polyurethane top-coated to primarily enhance the surface scratch/mar characteristics, and with the secondary benefit of lowering the gloss value. New surface graining technologies (for example, micro-graining, imparted from a grained roller surface to the extruded sheet, during an extrusion) are emerging, however, which will allow for consistent gloss control over a wide variety of grain patterns. These new technologies could foreseeably eliminate the need for PU top-coating of polyolefins that have the right amount of scratch/mar resistance to meet the application requirements. Examples of such new technologies are described in U.S. Patent 5,902,854, which is incorporated herein by reference.

Another end-use requirement is that the sheeting (f-PVC or TPO) needs to withstand the upper service temperatures experienced in the auto interiors, especially in the heat of the summer. The current criterion is that the sheeting withstand a temp. of 120°C oven aging over 500 hours, while maintaining 50 percent of the original elongation (ISO 188/ASTM E 145, Type IIA, 500 hr at 120°C), without melting, distorting, becoming tacky, or exhibiting other physical changes. Concurrent with this requirement, is the necessity that the sheeting provide good impact properties at low temperatures, such as at -40°C. This property is particular important when such sheeting is used to form seamless airbags (occupant safety during airbag deployment in winter is of paramount importance; no flying debris is the criteria). The glass transition temperature (Tg) of plasticized polyvinyl chloride is typically -20°C to -30°C, and thus, this polymer has impaired cold temperature impact properties at temperatures lower than its Tg. Thermoplastic polyolefins, however, typically have lower glass transition temperatures, compared to that of polyvinyl chloride, and thus, have better cold temperature impact properties. Thermoplastic polyolefins are typically the material of choice for seamless airbags and other safety devices, which deploy during a vehicular impact, particularly in cold climates.

Thermoplastic polyolefins also have better long-term durability compared to flexible polyvinyl chloride, as shown by little change in rheological and/or mechanical properties upon heat aging at 120°C. At 120°C, polyvinyl chloride typically loses plasticizer, and therefore loses elongation (elasticity), and becomes brittle and prone to cracking.

Thermoplastic olefin (TPO) sheeting is increasingly being used for soft covered instrument panels and door panels. The typical assembly process requires joining together, in a molding process, a thermoformed flexible thermoplastic polyolefin skin and a hard surface substrate, by forming a polyurethane foam between the two layers. The hard surface substrate is typically composed of a thermoplastic polyolefin, an acrylonitrile-butadiene-styrene (ABS) or an acrylonitrile-butadiene-styrene/polycarbonate (ABS/PC) blend. In instrument panel applications, the ABS and ABS/PC substrates are being replaced by hard TPOs, which are usually reinforced with a filler. A polyurethane precursor mixture (a liquid isocyanate, a liquid polyol and catalyst) is injected between the TPO skin and the hard surface, and then reacted to form a foamed, intermediate layer.

Thermoplastic polyolefins, due to their nonpolar nature, generally lack adhesion to polar materials, such as polyurethanes. Thus, a flexible thermoplastic olefin sheet is conventionally surface treated with a primer solution, containing one or more polar compounds, to increase the adhesion to a polyurethane surface. Typical primer solutions

contain a chlorinated maleated polyolefin. Such a surface treatment requires a large ventilation area, equipped to handle sheeting through a gravure application; a primer application mechanism, such as a dip tank; and a drying means to flash off the water and other solvent carriers. In addition, the flexible thermoplastic olefin skin must adhere, without voids and other visible defects, to the polyurethane foam. The polyurethane foam should adhere to the thermoplastic polyolefin surface, without delamination at the interface (or adhesive failure). A discontinuous application of a primer solution may lead to the formation of voids between the thermoplastic olefin skin and polyurethane foam in areas that lack the primer. Surface voids are a costly problem for automotive parts manufacturers, since parts that have surface voids cannot be used in an automotive assembly, and are instead scraped.

There is a need to develop polyolefin compositions containing a polyurethane component, and which requires a minimal amount compatibilizer or other type of stabilization agent to maintain the stability of the polymer phases of the composition, and which have high surface energies and good adhesive properties.

International Publication No. 2007/033117 relates to ethylene/$\alpha$-olefin compositions containing at least one ethylene/$\alpha$-olefin random interpolymer and at least one polydiene diol-based polyurethane, and where the at least one ethylene/$\alpha$-olefin interpolymer has a PRR from -6 to 75, and a density less than, or equal to, 0.93 g/cc.

U.S. Patent 6,251,982 discloses a compounded rubber composition comprising: (a) a hydrogenated, polydiene diol based polyurethane having a hard segment content of 10% or greater; (b) a non-polar extender oil in an amount from 10 to 400 phr; and/or (c) one or more thermoplastic resin(s) in an amount from 5 to 100 phr. The invention further relates to molded articles prepared from the compounded rubber composition of the present invention.

U.S. Patent 6,054,533 discloses a compatibilized blend of a thermoplastic elastomer and a polyolefin. The compatibilizer is a thermoplastic polyurethane formed by the reaction of a substantially hydrocarbon intermediate such as a polybutadiene polyol, a diisocyanate such as MDI, and an amine or diol chain extender, such as neopentyl glycol. The compatibilizer has high amounts of soft segments therein, and imparts improved properties to blends of a thermoplastic elastomer and polyolefin, such as good impact resistance, good tensile strength, good tear resistance, and good delamination resistance.

U.S. Patent 6,469,099 discloses a blend of a polymeric hydrocarbon and a thermoplastic polyurethane which is compatibilized with a polymeric hydrocarbon that contains low concentrations of isocyanate reactive group. The compatibilizer can be prepared by reacting a modified polymer having pendant, or incorporated, amine-reactive groups, with a hydroxyl amine, a diamine, or a polyethermonoamine. The compatibilized blend may further include a non-TPU engineering thermoplastic to form compatible blends of the polymeric hydrocarbon and the non-TPU engineering thermoplastic.

International Publication No. WO 00/63293 discloses a thermoplastic polyurethane/olefin-graft polymer blend with an optional compatibilizing polymer. The compatibilizing polymer is a modified polyolefin selected from ionomers, and block and graft olefin polymers that have an unsaturated organic compound in the main or side chain.

European Application No. 0347794A1 discloses a thermoplastic compatible blended composition comprising: (A) from 15 to 60 weight percent of a polyolefin, (B) from 30 to 70 weight percent of a thermoplastic polyurethane, and (C) from 10 to 35 weight percent of at least one modified polyolefin, defined as a random, block or graft olefin copolymer, having in a main or side chain thereof a functional group selected from carboxylic acid, carboxylate ester, carboxylic acid anhydride, carboxylate salts, amide, epoxy, hydroxy, or acyloxy.

Additional compositions are disclosed in International Publication No. WO 96/27622; U.S. Patent Nos. 4,883,837; 5,623,019; and U.S. Publication No. 2004/0106744.

There remains a need for improved, low cost polyolefin/polyurethane compositions containing low levels, preferably less than 10 weight percent (based on total weight of composition), compatibilizers, and that can be used to for, articles, such as sheets and films, and which have high surface energies, preferably greater than 30 dyne/cm, and good adhesion properties. There is an additional need for low cost compatiblized compositions that have improved heat aging performance, and are particularly suited for automotive interior applications that experience elevated temperatures (as high as 120°C). There is a further need for such compositions that can be used in automotive interior applications (thermoformed skins), and which provide one or more of the following properties: a luxurious feel, lower gloss, and improved grain replication required for negative pressure thermoforming processes.

There are additional needs for suitable thermoplastic polyolefin compositions, which can be used to form sheets that do not require a polyurethane top-coating for gloss or scratch control, and which have good adhesion to polyurethane foams. There is also a need to develop a wheatherable, low gloss and/or good scratch mar resistance sheet that has good adhesion to PU foams, PU adhesives and coatings. Some of these needs and others have been met by the following invention..

## SUMMARY OF THE INVENTION

In one embodiment, the invention provides a composition comprising the following:

A) at least one olefin multi-block interpolymer;
B) at least one thermoplastic polyurethane; and
C) at least one polydiene-based polyurethane.

In another embodiment, the invention provides a composition comprising the following:

D) at least one olefin multi-block interpolymer;
E) at least one thermoplastic polyurethane; and
F) at least one polydiol-based polyurethane.

BRIEF DESCRIPTION OF THE FIGURES

Figure 1 depicts melting point as a function of density for several ethylene/α-olefin multi-block interpolymers (inventive polymers) and comparative polymers (traditional random and Ziegler-Natta).
Figure 2 depicts "DSC Tm - CrystafTc" as a function of Heat of Fusion for several polymers.
Figure 3 depicts the effect of density on elastic recovery for unoriented films made from certain olefin multi-block interpolymers and some traditional random copolymers.
Figure 4 depicts comonomer content versus TREF elution temperature for several random ethylene/1-octene copolymers and a multi-block ethylene/1-octene copolymer.
Figure 5 depicts TREF profiles and comonomer content for multi-block copolymer (Example 5) and a comparative copolymer (Example F*).
Figure 6 depicts storage modulus as a function of temperature for several multi-block copolymers (inventive polymers) and comparative random copolymers.
Figure 7 depicts TMA (Thermomechanical Analysis) data versus flex modulus data for a multi-block copolymer (inventive polymer) and some comparative examples (Versify™, Ethylene/Styrene, Affinity™).

DETAILED DESCRIPTION OF THE INVENTION

As described above, the invention provides a composition comprising the following:

A) at least one olefin multi-block interpolymer;
B) at least one thermoplastic polyurethane; and
C) at least one polydiene-based or polydiol-based polyurethane.

In one embodiment, component C) is a polydiene-based polyurethane. In a preferred embodiment, the polydiene-based polyurethane is a polydiene diol-based polyurethane. In a further embodiment, the polydiene diol-based polyurethane is a polybutadiene diol or polyisoprene diol or a combination thereof, and preferably a polybutadiene diol.
In another embodiment, component C) is a polydiol-based polyurethane. In a further embodiment, the polydiol-based polyurethane comprises at least one diol made from one or more seed oil triglycerides selected from the group consisting of palmitic, stearic, oleic, linoleic and linolenic acid or ester.
Examples of the polydiol-based polyurethanes include, but are not limited to, polyurethanes formed from polyester polyols and seed oil-based polyols.
In one embodiment, the polydiene-based polyurethane and, preferably, a polydiene diol-based polyurethane, is formed from at least one aliphatic or cyclo-aliphatic diisocyanate. In a further embodiment, both the polydiene-based polyurethane, and preferably a polydiene diol-based polyurethane, and the thermoplastic polyurethane are each, independently, formed from at least one aliphatic diisocyanate.
In another embodiment, the polydiol-based polyurethane is formed from at least one aliphatic or cyclo-aliphatic diisocyanate. In a further embodiment, both the poly diol-based polyurethane and the thermoplastic polyurethane are each, independently, formed from at least one aliphatic diisocyanate. In yet a further embodiment, the polydiol-based polyurethane comprises at least one diol made from one or more seed oil triglycerides selected from the group consisting of palmitic, stearic, oleic, linoleic and linolenic acid or ester.
In some embodiments of this invention, the olefin multi-block interpolymer is an ethylene/α-olefin multi-block interpolymer, which has one or more of the following characteristics:

(1) an average block index greater than zero and up to about 1.0 and a molecular weight distribution, Mw/Mn, greater than about 1.3;

(2) at least one molecular fraction which elutes between 40°C and 130°C when fractionated using TREF, **characterized in that** the fraction has a block index of at least 0.5 and up to about 1;

(3) an Mw/Mn from about 1.7 to about 3.5, at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)^2;$$

(4) an Mw/Mn from about 1.7 to about 3.5, and is characterized by a heat of fusion, ΔH in J/g, and a delta quantity, ΔT, in degrees Celsius, defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30°C;

(5) an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of a cross-linked phase: Re >1481-1629(d);

(6) a molecular fraction which elutes between 40°C and 130°C when fractionated using TREF, **characterized in that** the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer; or

(7) a storage modulus at 25°C, G'(25°C), and a storage modulus at 100°C, G'(100°C), wherein the ratio of G'(25°C) to G'(100°C) is in the range of about 1:1 to about 9:1.

In some embodiments of this invention, the at least one polydiene- or polydiol-based polyurethane is present in an amount less than, or equal to, 20 weight percent, based on the total weight of the composition. In other embodiments, the at least one polydiene- or polydiol-based polyurethane is present in an amount less than, or equal to, 10 weight percent, based on the total weight of the composition.

In some embodiments of this invention, the at least one polydiene- or polydiol-based polyurethane has a density from 0.90 g/cc to 1.3 g/cc, and/or a melt index ($I_2$) from 1 g/10 min to 300 g/10 min, and/or a number average molecular weight from 500 g/mole to 1,000,000 g/mole.

In some embodiments of this invention, the at least one polydiene- or polydiol-based polyurethane is formed from a composition that comprises from 15 to 40 weight percent of a diisocyanate, based on the total weight of the composition. In other embodiments, the diisocyanate is an aromatic diisocyanate.

In some embodiments of this invention, the at least one polydiene- or polydiol-based polyurethane is formed from a composition that comprises (i) from 50 to 75 weight percent of a polydiene diol, based on the total weight of the composition, and/or (ii) from 5 to 15 weight percent of a chain extender, based on the total weight of the composition.

In some embodiments of this invention, the at least one thermoplastic polyurethane comprises chemical units derived from a polyester, and at least one aromatic diisocyanate or at least one aliphatic diisocyanate.

In some embodiments of this invention, the at least one thermoplastic polyurethane comprises chemical units derived from a polyester, and at least one aromatic diisocyanate.

In some embodiments of this invention, the at least one thermoplastic polyurethane comprises chemical units derived from a polyester, and at least one aliphatic diisocyanate.

In some embodiments of this invention, the at least one thermoplastic polyurethane comprises chemical units derived from a polyester and a mixture of 1,3-bis(isocyanatomethyl)-cyclohexane and 1,4-bis(isocyanatomethyl)cyclohexane. In a further embodiment, the weight ratio of the 1,3-bis(isocyanatomethyl)cyclohexane to the 1,4-bis(isocyanatomethyl)cyclohexane is about 1 to 1.

In some embodiments of this invention, the polyester is formed from caprolactone.

In some embodiments of this invention, the thermoplastic polyurethane comprises a monomeric unit derived from caprolactone. In one embodiment, the thermoplastic polyurethane comprises a monomeric unit derived from diol derivative, derived from N-octyl pyrrolidone. In one embodiment, the thermoplastic polyurethane comprises a monomeric unit derived from polytetramethylene ether glycol. In one embodiment, the thermoplastic polyurethane comprises a monomeric unit derived from a polyether.

In some embodiments of this invention, the thermoplastic polyurethane is a PELLETHANE™ polyurethane.

In some embodiments of this invention, the at least one thermoplastic polyurethane has a density from 0.90 g/cc to 1.3 g/cc and/or a melt index ($I_2$) from 1 g/10 min to 10 g/10 min.

In some embodiments of this invention, an inventive composition comprises one or more additives.

In some embodiments of this invention, an inventive composition further comprises a polar polymer selected from the group consisting of polyesters, polyamides, polyethers, polyetherimides, polyvinyl alcohols, polycarbonates, polyurethanes, polylactic acids, and polyamide esters.

The invention also provides an article comprising at least one component formed from the composition of any of the preceding claims.

In one embodiment, the article is an sheet, a carpet, an adhesive, a wire sheath, a cable, a protective apparel, an automotive part, a footwear component, a coating, or a foam laminate, an automotive skin, an awning, a tarp, a roofing construction article, a steering wheel, a powder coating, a powder slush molding, a consumer durable, a grip, a handle, a computer component, a belt, an appliqué, a footwear component, a conveyor or timing belt, or a fabric.

In another embodiment, the article is a tie layer between extruded sheets, a tie layer between extruded films, a tie layer between extruded profiles, a tie layer between cast sheets, tie layer between cast films, or tie layer between cast profiles.

The invention also provides an extruded sheet formed from an inventive composition. In a further embodiment, the sheet has a surface energy greater than, or equal to, 30 dyne/cm, preferably greater than, or equal to, 33 dyne/cm, more preferably greater than, or equal to 35 dyne/cm. in another embodiment, the sheet has a thickness from 10 mils to 1000 mils, preferably from 15 mils to 500 mils, and more preferably from 20 mils to 100 mils.

The invention also provides a painted substrate, wherein the substrate is formed from an inventive composition. In one embodiment, the paint comprises at least one additive of selected from the group consisting of an acrylic polymer, an alkyd resin, a cellulose-based material, a melamine resin, a urethane resin, a carbamate resin, a polyester resin, a vinyl acetate resin, a polyol and an alcohol. In another embodiment, the paint is a water-based paint. In another embodiment, the paint is an organic solvent based.

The invention also provides an over-molded article comprising the following: (a) a substrate formed from a composition comprising a polar polymer, and (b) a molded overlay formed from an inventive composition. In one embodiment, the polar polymer is a polycarbonate.

The invention also provides an over-molded article comprising the following: (a) a substrate formed from an inventive composition, and (b) a molded overlay formed from a composition comprising a polar polymer. In one embodiment, the article is in the form of a grip, handle or belt.

The invention also provides a laminated structure comprising a first layer and a second layer, and wherein the first layer is formed from an inventive composition, and wherein the second layer is formed from a composition comprising a polar polymer. In one embodiment, one of the layers is in the form of a foam. In another embodiment, one of the layers is in the form of a fabric. In another embodiment, the laminated structure is in the form of an awning, tarp or automobile skin or steering wheel. In another embodiment, the second layer is formed from a composition comprising a polycarbonate.

The invention also provides a molded article comprising a first component and a second component, and wherein the first component is formed from a composition comprising a polar polymer, and wherein the second component is formed from an inventive composition. In one embodiment, the article is in the form of an automobile skin, an appliqué, a footwear component, a conveyor belt, a timing belt or a consumer durable.

The invention also provides a dispersion comprising an inventive composition. In one embodiment, the dispersion further comprises at least one additive selected from the group consisting of an acrylic polymer, an alkyd resin, a cellulose-based material, a melamine resin, a urethane resin, a carbamate resin, a polyester resin, a vinyl acetate resin, an epoxy a polyol, an alcohol, and combinations thereof. In another embodiment, the dispersion is a water-based dispersion. In another embodiment, the dispersion is an organic solvent-based dispersion.

The invention also provides an injection molded article comprising at least one component formed from an inventive composition.

The invention also provides an RF welded article comprising at least one component formed from an inventive composition.

The invention also provides a molded article comprising a first component and a second component, and wherein the first component is formed from a composition comprising a polar polymer, and wherein the second component is formed from an inventive composition. In one embodiment, the article is in the form of an automobile skin, an appliqué,

a footwear component, a conveyor belt, a timing belt, artificial leather, or a consumer durable.

The invention also provides a footwear article comprising at least one component formed from an inventive composition. In one embodiment, the article is selected from the group consisting of shoe outsole, shoe midsole, shoe unit-sole, an over-molded article, a natural leather article, a synthetic leather article, an upper, a laminated article, a coated article, a boot, a sandal, galoshes, a plastic shoe, and combinations thereof.

The invention also provides a thermoformed sheet comprising at least one layer formed from an inventive composition.

The invention also provides an automotive part comprising at least one layer formed from an inventive composition. In one embodiment, the part is an instrument panel or a door panel.

The invention also provides artificial leather comprising at least one component formed from an inventive composition.

The invention also provides artificial turf comprising at least one component formed from an inventive composition.

The invention also provides an adhesive comprising at least one component formed from an inventive composition. The invention also provides a coated substrate comprising an inventive adhesive, and at least one component formed from Kevlar.

The invention also provides a method of making an inventive composition, said method comprising melt mixing Components A, B and C. In one embodiment, Components A, B and C are mixed simultaneously. In another embodiment, Components A, B and C are mixed sequentially, in any order. In another embodiment, the melt mixing takes place in an extruder. In another embodiment, the melt mixing takes place in an "in-line" compounding process. "In-line compounding process" and like terms mean a process, typically continuous, in which the components of the composition are continuously fed to and mixed within an extruder or like piece of equipment from which a composition comprising the mixed components is discharged and, optionally, is further processed into an article of manufacture, e.g., a film, sheet, fiber, etc.

An inventive composition may comprise a combination of two or more embodiments as described herein.

A polymer component of an inventive composition may comprise a combination of two or more embodiments as described herein.

An inventive article may comprise a combination of two or more embodiments as described herein.

An inventive method may comprise a combination of two or more embodiments as described herein.

Polydiene-Based and Polydiol-Based Polyurethanes

Suitable polydiene-based polyurethanes for use in the inventive compositions are described in International Publication No. WO 2007/033117 and International Application No. PCT/US2006/035384, each fully incorporated herein by reference. "Polydiene-based thermoplastic polyurethane", "polydiene-based polyurethane", "pd-TPU" and like terms mean a polyurethane polymer formed, in part, from a polydiene containing at least one isocyanate-reactive group, e.g., hydroxyl and/or amine, preferably a hydroxyl group. "Polydiene diol-based thermoplastic polyurethane", "polydiene diol-based polyurethane" and like terms mean a polyurethane polymer formed, in part, from a polydiene diol containing at least two hydroxyl groups. "Diol-based thermoplastic polyurethane", "d-TPU" and like terms mean a polyurethane polymer formed, in part, from a diol. The diol can be either a natural-sourced diol or a pd-TPU.

In one embodiment, component C) is a polydiene-based polyurethane. In a preferred embodiment, the polydiene-based polyurethane is a polydiene diol-based polyurethane. In a further embodiment, the polydiene diol-based polyurethane is a polybutadiene diol or polyisoprene diol or a combination thereof, and preferably a polybutadiene diol.

In another embodiment, component C) is a polydiol-based polyurethane. In a further embodiment, the polydiol-based polyurethane comprises at least one diol made from one or more seed oil triglycerides selected from the group consisting of palmitic, stearic, oleic, linoleic and linolenic acid or ester.

In one embodiment, the polydiene- or polydiol-based polyurethane has a density less than, or equal to, 1.00 g/cc, preferably less than, or equal to, 0.99 g/cc, and more preferably less than, or equal to, 0.98 g/cc. In another embodiment, the polydiene- or polydiol-based polyurethane has a density greater than, or equal to, 0.94 g/cc, preferably greater than, or equal to, 0.95 g/cc, and more preferably greater than, or equal to, 0.96 g/cc. In another embodiment, the polydiene- or polydiol-based polyurethane has a density from 0.94 g/cc to 1.00 g/cc, preferably from 0.96 g/cc to 0.99 g/cc, and more preferably from 0.96 g/cc to 0.98 g/cc.

In one embodiment, the polydiene- or polydiol-based polyurethane has a melt index ($I_2$) less than, or equal to, 20 g/10 min, preferably less than, or equal to, 15 g/10 min, and more preferably less than, or equal to, 10 g/10 min. In another embodiment, the polydiene- or polydiol-based polyurethane has a melt index ($I_2$) greater than, or equal to, 0.5 g/10 min, preferably greater than, or equal to, 1 g/10 min, and more preferably greater than, or equal to, 2 g/10 min. In another embodiment, the polydiene- or polydiol based polyurethane has a melt index ($I_2$) from 0.5 g/10 min to 20 g/10 min, preferably from 1 g/cc to 15 g/10 min, and more preferably from 2 g/cc to 10 g/10 min.

In one embodiment, the polydiene- or polydiol based polyurethane contains a hard segment formed from a polydiisocyanate, in an amount from 20 to 40 weight percent, and preferably from 25 to 35 weight percent, based on the total weight of the polyurethane.

In one embodiment, the polydiene- or polydiol-based polyurethane is a polydiene diol based polyurethane that is formed from conjugated dienes having 4 to 24 carbons, and preferably having 4 to 8 carbons. Typical dienes include butadiene and isoprene, and typical polydienes include polybutadiene and polyisoprene, and hydrogenated polybutadiene and hydrogenated polyisoprene. In a preferred embodiment, these polydienes have at least one, and more preferably at least two, hydroxyl groups in the molecule, and typically have a Mn from 500 to 10,000, more preferably from 1,000 to 5,000, and even more preferably from 1,500 to 3,000 g/mol. Preferably, the polydiene diol is a polybutadiene diol or a polyisoprene diol, and more preferably a polybutadiene diol.

In another embodiment, the polydiene-based polyurethane is a polydiene diol-based polyurethane, and it is formed from a composition comprising 15 to 40 weight percent of di-isocyanate, 50 to 75 weight percent of a polydiene diol, and 5 to 15 weight percent of a chain extender, each weight percent (wt%) based on the total weight of the composition. In a further embodiment, the polydiene diol is a polybutadiene diol or a polyisoprene diol, and preferably is a polybutadiene diol. In a further embodiment, the di-isocyanate is an aliphatic or aromatic di-isocyanate, preferably an aromatic di-isocyanate, and more preferably 4,4'-diphenylmethane di-isocyanate. In yet a further embodiment, the chain extender is an aliphatic diol. In another embodiment, the polydiene diol has a Mn from 500 to 10,000, more preferably from 1,000 to 5,000 and even more preferably from 1,500 to 3,000, g/mol. In another embodiment, the polydiene diol is non-hydrogenated. In another embodiment, the polydiene diol is hydrogenated. In another embodiment, the polydiene diol is partially hydrogenated.

In another embodiment, the polydiol-based polyurethane is formed from a natural-sourced diol. As here used, "natural-sourced diol", "natural oil polyols" and like terms mean a diol derived from an agricultural product, e.g., seed oils such soy, sunflower, corn and canola. Such a diol may or may not contain dienic unsaturation. The composition of seed oil triglycerides is well understood. Triglycerides are fatty acid esters of glycerin, and the composition depends on the source of the oil. The nomenclature used is standard in the fats and oils industry, with the number of carbons in the fatty acid indicated first, followed by the number of sites of unsaturation in parentheses. Representative fatty acids or esters derived from these oils include palmitic, stearic, oleic, linoleic and linolenic acid or ester. For the purpose of making polyols from these triglycerides, oils which contain a high level of unsaturation are desirable. Oils such as soy, canola and sunflower are acceptable due to the relatively low levels of saturated fatty acids that they contain, while feedstocks such as palm oil are considered unusable without further purification or refinement due to high levels of saturated fatty acids.

The polydiene- or polydiol-based polyurethane may contain a combination of two or more embodiments as described above.

The polyurethanes of the present invention are each independently prepared from a polydiol or a functional polydiene containing at least one (preferably about two) "isocyanate-reactive group(s)" attached at the ends of the molecule or attached pendantly within the molecule. This functionality may be any of the groups that react with isocyanates to form covalent bonds. This functionality preferably contains "active hydrogen atoms," with typical examples being hydroxyl, primary amine, secondary amine, sulfhydryl, and mixtures thereof. The term "active hydrogen atoms" refers to hydrogen atoms that, because of their placement in a molecule, display activity according to the Zerewitinoff test, as described by Kohler in J. Am. Chemical Soc., 49, 31-81 (1927), incorporated herein by reference. The content of the unsaturated segment in the polydiene-based polyurethane is from 1 to 95 wt%, and preferably from 10 to 50 weight percent, based on the total weight of the polyurethane. In a preferred embodiment, the polyurethane component is prepared from a polydiene diol. In another embodiment, the polyurethane is prepared from a functionalized polydiene, which contains "isocyanate reactive groups" other than hydroxyl.

One method for preparing such functional polydienes is a two-step process in which a conjugated diene is grown by anionic polymerization from both ends of a difunctional initiator. The molecular weight of the polydiene is controlled by the molar ratio of the conjugated diene to the initiator. In the second step, the ends are then capped with alkylene oxide (such as ethylene or propylene oxide) to produce an unsaturated diol. This particular process is described in USP 4,039,593, incorporated herein by reference. In such processes, it is possible to add excess alkylene oxide and form short poly(alkylene oxide) chains at the ends of the polydiene. Such materials are within the scope of this invention.

The conjugated dienes used to prepare the functional polydiene typically contains from 4 to 24 carbons, and preferably from 4 to 8 carbons. Typical dienes include butadiene and isoprene, and typical functional polydienes are polybutadiene and polyisoprene, each capped at each end with ethylene oxide. These polydienes have at least one functional group per molecule, and typically have a number average molecular weight (Mn) from 500 to 10,000 grams per mole (g/mol), and preferably from 500 to 5,000 g/mol. The functional group is preferably a hydroxyl group. Two preferred polydiene diols are polybutadiene diol and polyisoprene diol, and more preferably polybutadiene diol.

In one embodiment, the at least one polydiene diol-based polyurethane is formed from a non-hydrogenated polydiene diol. In another embodiment, the at least one polydiene diol-based polyurethane is formed from a hydrogenated

polydiene diol. In another embodiment, the at least one polydiene diol-based polyurethane is formed from a partially hydrogenated polydiene diol.

The term "hydrogenation" is known in the art, and is used in reference to the hydrogenation (reaction of hydrogen with alkene groups) of double bonds within the polydiene diol, and is in reference to the final (hydrogenated) product. The term "hydrogenation" refers to the complete hydrogenation of all the double bonds, or the near complete hydrogenation (approximately greater than 95 mole percent) of the double bonds, within the polydiene diol. The term "partial hydrogenation," is used in reference to a hydrogenation reaction, and the final product, both in which a significant amount (approximately greater than 5 mole percent) of the double bonds, within the polydiene diol, are not hydrogenated.

The polyurethane used in the practice of the present invention is prepared by reacting the polydiol and/or functional polydiene with an isocyanate and optionally a chain extender. In the 'prepolymer' method, typically one or more polydiols and/or functional polydienes are reacted with one or more isocyanates to form a prepolymer. The prepolymer is further reacted with one or more chain extenders. Alternatively, the polyurethanes may be prepared by a one-shot reaction of all of the reactants. Typical polyurethanes have a number average molecular weight from 5,000 to 1,000,000 g/mol, preferably from 10,000 to 500,000 g/mol, and more preferably from 20,000 to 100,000 g/mol.

Some examples of polydiene diols, and corresponding polyurethanes, are described in Pytela et al, "Novel Polybutadiene Diols for Thermoplastic Polyurethanes," International Polyurethane Conference, PU Lat. Am. 2001; and in Pytela et al, "Novel Thermoplastic Polyurethanes for Adhesives and Sealants," Adhesives & Sealant Industry, June 2003, pp. 45-51; each fully incorporated herein by reference. Some examples of some hydrogenated polydiene diols, and corresponding polyurethanes, are described in WO 99/02603, and corresponding European Patent EP 0 994 919 B1; each fully incorporated herein by reference. As discussed in these references, the hydrogenation may be carried out by a variety of established processes, including hydrogenation in the presence of catalysts as Raney Nickel, noble metals, such as platinum, soluble transition metal catalysts and titanium catalysts, as in USP 5,039,755, fully incorporated herein by reference. Also, the polymers may have different diene blocks and these diene blocks may be selectively hydrogenated as described in USP 5,229,464, fully incorporated herein by reference.

Di-isocyanates suitable for use in preparing the hard segment of the polyurethanes according to this invention include aromatic, aliphatic, and cycloaliphatic di-isocyanates, and combinations of two or more of these compounds. An example of a structural unit derived from di-isocyanate (OCN-R-NCO) is represented by formula (I) below:

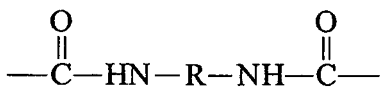 (I),

in which R is an alkylene, cycloalkylene, or arylene group. Representative examples of these di-isocyanates can be found in USP 4,385,133, 4,522,975 and 5,167,899, each fully incorporated herein by reference.

Preferred di-isocyanates include, but are not limited to, 4,4'-di-isocyanato-diphenylmethane, p-phenylene di-isocyanate, 1,3-bis(isocyanatomethyl)-cyclohexane, 1,4-di-isocyanato-cyclohexane, hexamethylene di-isocyanate, 1,5-naphthalene di-isocyanate, 3,3'-dimethyl-4,4'-biphenyl di-isocyanate, 4,4'-di-isocyanato-dicyclohexylmethane, and 2,4-toluene di-isocyanate. More preferred are 4,4'-di-isocyanato-dicyclohexylmethane and 4,4'-di-isocyanato-diphenylmethane. In one embodiment, the di-isocyanate is 4,4'-di-isocyanatodiphenylmethane.

In one embodiment, the polydiene-based polyurethane and, preferably, a polydiene diol-based polyurethane, is formed from at least one aliphatic or cyclo-aliphatic diisocyanate. In a further embodiment, both the polydiene-based polyurethane, and preferably a polydiene diol-based polyurethane, and the thermoplastic polyurethane are each, independently, formed from at least one aliphatic diisocyanate.

In another embodiment, the polydiol-based polyurethane is formed from at least one aliphatic or cyclo-aliphatic diisocyanate. In a further embodiment, both the poly diol-based polyurethane and the thermoplastic polyurethane are each, independently, formed from at least one aliphatic diisocyanate. In yet a further embodiment, the polydiol-based polyurethane comprises at least one diol made from one or more seed oil triglycerides selected from the group consisting of palmitic, stearic, oleic, linoleic and linolenic acid or ester.

Di-isocyanates also include aliphatic and cycloaliphatic isocyanate compounds, such as 1,6-hexamethylene-di-isocyanate; ethylene di-isocyanate; 1-isocyanato-3,5,5-trimethyl-1-3-isocyanatomethylcyclohexane; 2,4- and 2,6-hexahydrotoluenedi-isocyanate, as well as the corresponding isomeric mixtures; 4,4'-, 2,2'- and 2,4'-dicyclohexyl-methanedi-isocyanate, as well as the corresponding isomeric mixtures. Also, 1,3-tetramethylene xylene di-isocyanate can be used with the present invention. The isocyanate may be selected from organic isocyanates, modified isocyanates, isocyanate-based pre-polymers, and mixtures of two or more of these isocyanates.

As discussed above, the polyurethanes can be prepared by mixing all ingredients, at essentially the same time, in a "one-shot" process, or can be prepared by step-wise addition of the ingredients, in a "prepolymer process," with the

processes being carried out in the presence of, or without the addition of, optional additives. The polyurethane forming reaction can take place in bulk, or in solution, with, or without, the addition of a suitable catalyst that would promote the reaction of isocyanates with hydroxyl or other functionality. Examples of a typical preparation of these polyurethanes are described in USP 5,864,001, fully incorporated herein by reference.

The other main component of the hard segment of the polyurethanes of the present invention is at least one chain extender, which are well know in this technology field. As is known, when the chain extender is a diol, the resulting product is a thermoplastic polyurethane (TPU). When the chain extender is a diamine or an amino alcohol, the resulting product is technically a thermoplastic polyurea (TPUU).

The chain extenders that may be used in the invention are characterized by two or more, preferably two, functional groups, each of which contains "active hydrogen atoms." These functional groups are preferably in the form of hydroxyl, primary amino, secondary amino, or mixtures of two or more of these groups. The term "active hydrogen atoms" refers to hydrogen atoms that, because of their placement in a molecule, display activity according to the Zerewitinoff test as described by Kohler in J. Am. Chemical Soc., 49, 31-81 (1927).

The chain extenders may be aliphatic, cycloaliphatic, or aromatic, and are exemplified by diols, diamines, and amino alcohols. Illustrative of the difunctional chain extenders are ethylene glycol, diethylene glycol, propylene glycol, dipropylene glycol, 1,3-propanediol, 1,3-butanediol, 1,4-butanediol, 1,5-pentanediol and other pentane diols, 2-ethyl-1,3-hexanediol, 2-ethyl-1,6-hexanediol, other 2-ethyl-hexanediols, 1,6-hexanediol and other hexanediols, 2,2,4-trimethylpentane-1,3-diol, decanediols, dodecanediols, bisphenol A, hydrogenated bisphenol A, 1,4-cyclohexanediol, 1,4-bis (2-hydroxyethoxy)-cyclohexane, 1,3-cyclohexanedimethanol, 1,4-cyclohexanediol, 1,4-bis(2-hydroxyethoxy)benzene, Esterdiol 204 (propanoic acid, 3-hydroxy-2,2-dimethyl-, 3-hydroxy-2,2-dimethylpropyl ester available from TCI America), N-methylethanolamine, N-methyl iso-propylamine, 4-aminocyclohexanol, 1,2-diaminotheane, 1,3-diaminopropane, diethylenetriamine, toluene-2,4-diamine, and toluene-1,6-diamine. Aliphatic compounds containing from 2 to 8 carbon atoms are preferred. If thermoplastic or soluble polyurethanes are to be made, the chain extenders will be difunctional in nature. Amine chain extenders include, but are not limited to, ethylenediamine, monomethanolamine, and propylenediamine.

Commonly used linear chain extenders are generally diol, diamine or amino alcohol compounds characterized by having a molecular weight of not more than 400 g/mol (or Dalton). In this context, by "linear," it is meant that no branching from tertiary carbon is included. Examples of suitable chain extenders are represented by the following formulae: $HO-(CH_2)_n-OH$, $H_2N-(CH_2)_n-NH_2$, and $H_2N-(CH_2)_n-OH$, where "n' is typically a number from 1 to 50.

One common chain extender is 1,4-butane diol ("butane diol" or "BDO"), and is represented by the following formula: $HO-CH_2CH_2CH_2CH_2-OH$. Other suitable chain extenders include ethylene glycol; diethylene glycol; 1,3-propanediol; 1,6-hexanediol; 1,5-heptanediol; triethyleneglycol; and combinations of two or more of these extenders.

Also suitable, are cyclic chain extenders, which are generally diol, diamine or amino alcohol compounds, characterized by having a molecular weight of not more than 400 g/mol. In this context, by "cyclic" it is meant a ring structure, and typical ring structures include, but are not limited to, the 5 to 8 member ring structures with hydroxylalkyl branches. Examples of cyclic chain extender are represented by the following formulae: HO-R-(ring)-R'-OH and HO-R-O-(ring)-O-R'-OH, where R and R' are one to five carbon alkyl chains, and each ring has 5 to 8 members, preferably all carbons. In these examples, one or both of the terminal -OH can be replaced with -NH2. Suitable cyclic chain extenders include cyclohexane dimethanol ("CHDM") and hydroquinone bis-2-hydrxyethyl ether (HQEE). A structural unit of CHDM, a preferred cyclic chain extender, is represented by the following formula: $HO-CH_2$-(cyclohexane ring)-$CH_2$-OH.

The chain extender is incorporated into the polyurethane in amounts determined by the selection of the specific reactant components, the desired amounts of the hard and soft segments, and the index sufficient to provide good mechanical properties, such as modulus and tear strength. The polyurethane compositions used in the practice of this invention may contain from 2 to 25, preferably from 3 to 20 and more preferably from 4 to 18, weight percent of the chain extender component, based on the weight of the composition.

If desired, optionally, small amounts of monohydroxylfunctional or monoaminofunctional compounds, often termed "chain stoppers," may be used to control molecular weight. Illustrative of such chain stoppers are the propanols, butanols, pentanols, and hexanols. When used, chain stoppers are typically present in minor amounts from 0.1 to 2 weight percent of the entire reaction mixture leading to the polyurethane composition.

As is well known to those skilled in the art, the ratio of isocyanate to total functional groups determines the Mn of the polymer. In some cases it is desirable to use a very slight excess of isocyanate.

For linear, high Mn polymers, starting materials with two functional groups per chain are desirable. However, it is possible to accommodate starting materials with a range of functionality. For example, a polydiene with one functional end could be used to cap both ends of a polyurethane with a middle portion consisting of repeating isocyanate-chain extender moieties. Polydienes with more than two functional groups will form branched polymers. Although crosslinking and gels can be a problem, if the degree of functionality is too high, this can usually be controlled by process conditions. Such branched polymers will exhibit some rheological characteristics that are desirable in some cases, such as high melt strength.

Optionally, catalysts that will promote or facilitate the formation of urethane groups may be used in the formulation. Illustrative of useful catalysts are stannous octanoate, dibutyltin dilaurate, stannous oleate, tetrabutyltin titanate, tributyltin chloride, cobalt naphthenate, dibutyltin oxide, potassium oxide, stannic chloride, N,N,N,N'-tetramethyl-1,3-butanediamine, bis[2-(N,N-dimethylamino)ethyl] ether, 1,4-diazabicyclo[2.2.2]octane; zirconium chelates, aluminum chelates and bismuth carbonates. The catalysts, when used, are typically employed in catalytic amounts that may range from 0.001 wt%, and lower, to 2 wt%, and higher, based on the total amount of polyurethane-forming ingredients.

Additives may optionally be used to modify the properties of the polyurethane used in the practice of this invention. Additives may be included in the conventional amounts, as already known in the art and literature. Usually additives are used to provide specific desired properties to the polyurethanes, such as various antioxidants, ultraviolet inhibitors, waxes, thickening agents and fillers. When fillers are used, they may be either organic or inorganic, but are generally inorganic, such as clay, talc, calcium carbonate, silica and the like. Also, fibrous additives, such as glass or carbon fiber, may be added to impart certain properties.

In a preferred embodiment of the invention, the polyurethane is formed from a polydiene diol, an isocyanate and a chain extender, and preferably an aliphatic chain extender. In another embodiment, the polydiene diol-based polyurethane is hydrogenated.

In a further embodiment, the polydiene diol is formed from conjugated dienes having 4 to 24 carbons, and preferably having 4 to 8 carbons. As discussed above, typical dienes include butadiene and isoprene, and typical polydienes include polybutadiene and polyisoprene, and hydrogenated polybutadiene and hydrogenated polyisoprene. In a preferred embodiment, these polydienes have at least one, and more preferably at least two, hydroxyl groups in the molecule, and typically have a Mn from 500 to 10,000, more preferably from 1,000 to 5,000 and even more preferably from 1,500 to 3,000 g/mol. Preferably, the polydiene diol is a polybutadiene diol or a polyisoprene diol, and more preferably a polybutadiene diol.

In another embodiment, the polydiene diol-based polyurethane is formed from a composition comprising 15 to 40 weight percent of di-isocyanate, 50 to 75 weight percent of a polydiene diol, and 5 to 15 weight percent of a chain extender, based on the weight of the composition. In a further embodiment, the polydiene diol is a polybutadiene diol or a polyisoprene diol, and preferably is a polybutadiene diol. In a further embodiment, the di-isocyanate is an aliphatic or aromatic di-isocyanate, and more preferably 4,4'-diphenylmethane di-isocyanate. In yet a further embodiment, the chain extender is an aliphatic diol. In another embodiment, the polydiene diol has a Mn from 500 to 10,000, more preferably from 1,000 to 5,000, and even more preferably from 1,500 to 3,000, g/mol. In another embodiment, the polydiene diol is non-hydrogenated. In another embodiment, the polydiene diol is hydrogenated. In another embodiment, the polydiene diol is partially hydrogenated.

The polydiene- or polydiol-based polyurethane used in the practice of the invention may comprise a combination of two or more embodiments as described above.

Olefin Multi-Block Interpolymers

The olefin multi-block interpolymers are described in International Application No. PCT/US05/008917, U.S. Publication No. 2006/0199914, U.S. Provisional Application No. 60/876287, and U.S. Provisional Applications No. 60/876287, each fully incorporated herein by reference.

The term "crystalline," if employed, refers to a polymer that possesses a first order transition or crystalline melting point (Tm) as determined by differential scanning calorimetry (DSC) or equivalent technique. The term may be used interchangeably with the term "semicrystalline." The term "amorphous" refers to a polymer lacking a crystalline melting point as determined by differential scanning calorimetry (DSC) or equivalent technique.

"Olefin multi-block interpolymer", "multi-block interpolymer", "multi-block copolymer", "segmented copolymer" and like terms refers to a polymer comprising two or more chemically distinct regions or segments (referred to as "blocks"), preferably joined in a linear manner, that is, a polymer comprising chemically differentiated units, which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. Compared to block copolymers of the prior art, including copolymers produced by sequential monomer addition, fluxional catalysts, or anionic polymerization techniques, the multi-block copolymers used in the practice of this invention are characterized by unique distributions of both polydispersity index (PDI or Mw/Mn or MWD), block length distribution, and/or block number distribution due, in a preferred embodiment, to the effect of the shuttling agent(s) in combination with multiple catalysts used in their preparation. Representative olefin multi-block interpolymers include the olefin multi-block interpolymers manufactured and sold by The Dow Chemical Company under the trademark INFUSE$^{tm}$.

In a further embodiment, the olefin multi-block interpolymers are characterized, when produced in a continuous

process, as possessing a PDI from 1.7 to 3.5, preferably from 1.8 to 3, more preferably from 1.8 to 2.5, even more preferably from 1.8 to 2.2, and most preferably from 1.8 to 2.1. When produced in a batch or semi-batch process, the polymers possess a PDI from 1.0 to 3.5, preferably from 1.3 to 3, more preferably from 1.3 to 2.5, even more preferably from 1.4 to 2.0, and most preferably from 1.4 to 1.8.

"Ethylene multi-block copolymer" and like terms mean a multi-block copolymer comprising units derived from ethylene and one or more copolymerizable comonomers in which the ethylene-derived units comprise a plurality of the polymerized monomer units of at least one block or segment in the polymer, preferably at least 90, more preferably at least 95 and most preferably at least 98, mole percent of the block. Based on total polymer weight, the ethylene multi-block copolymers used in the practice of the present invention preferably have an ethylene content from 25 to 97, more preferably from 40 to 96, even more preferably from 55 to 95 and most preferably from 65 to 85, percent. When produced in a continuous process, the polymers desirably possess a PDI from 1.7 to 3.5, preferably from 1.8 to 3, more preferably from 1.8 to 2.5, and most preferably from 1.8 to 2.2. When produced in a batch or semi-batch process, the polymers possess a PDI from 1.0 to 3.5, preferably from 1.3 to 3, more preferably from 1.3 to 2.5, even more preferably from 1.4 to 2.0, and most preferably from 1.4 to 1.8.

In a preferred embodiment, the olefin multi-block interpolymer is an ethylene/α-olefin multi-block interpolymer. In a Further embodiment, the ethylene/α-olefin multi-block interpolymer comprises greater than 50 mole percent ethylene (based on total moles polymerizable monomers).

The ethylene/α-olefin multi-block interpolymer has one or more of the following characteristics:

(1) an average block index greater than zero and up to about 1.0 and a molecular weight distribution, Mw/Mn, greater than about 1.3; or

(2) at least one molecular fraction which elutes between 40°C and 130°C when fractionated using TREF, **characterized in that** the fraction has a block index of at least 0.5 and up to about 1; or

(3) an Mw/Mn from about 1.7 to about 3.5, at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)^2;$$

or

(4) an Mw/Mn from about 1.7 to about 3.5, and is characterized by a heat of fusion, ΔH in J/g, and a delta quantity, ΔT, in degrees Celsius, defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48°C \text{ for } \Delta H \text{ greater than } 130 \text{ J/g},$$

wherein the CRYSTAF peak is determined using at least 5 percent of the cumulative polymer, and if less than 5 percent of the polymer has an identifiable CRYSTAF peak, then the CRYSTAF temperature is 30°C; or

(5) an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of a cross-linked phase: Re >1481-1629(d); or

(6) a molecular fraction which elutes between 40°C and 130°C when fractionated using TREF, **characterized in that** the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer; or

(7) a storage modulus at 25°C, G'(25°C), and a storage modulus at 100°C, G'(100°C), wherein the ratio of G'(25°C) to G'(100°C) is in the range of about 1:1 to about 9:1.

In one embodiment, the ethylenela-olefin multi-block interpolymer has one of the properties (1) to (7) as discussed above. In another embodiment, the ethylene/α-olefin multi-block interpolymer has at least property (1) as discussed above.

In another embodiment, the ethylene/α-olefin multi-block interpolymer has a combination of two or more properties (1) to (7) as discussed above. In another embodiment, the ethylene/α-olefin multi-block interpolymer has at least property (1), as discussed above, in combination with two or more addition properties (2) to (7), as discussed above.

In another embodiment, the ethylene/α-olefin multi-block interpolymer characterized by one or more of the following characteristics:

(a) has a Mw/Mn from about 1.7 to about 3.5, at least one melting point, Tm, in degrees Celsius, and a density, d, in grams/cubic centimeter, wherein the numerical values ofTm and d correspond to the relationship:

$$T_m > -2002.9 + 4538.5(d) - 2422.2(d)^2,$$

or

(b) has a Mw/Mn from about 1.7 to about 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48°C \text{ for } \Delta H \text{ greater than } 130 \text{ J/g},$$

wherein the CRYSTAF peak is determined using at least 5 percent of the cumulative polymer, and if less than 5 percent of the polymer has an identifiable CRYSTAF peak, then the CRYSTAF temperature is 30°C; or

(c) is characterized by an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free of a cross-linked phase:

$$Re > 1481 - 1629(d);$$

or

(d) has a molecular fraction which elutes between 40°C and 130°C when fractionated using TREF, **characterized in that** the fraction has a molar comonomer content of at least 5 percent higher than that of a comparable random ethylene interpolymer fraction eluting between the same temperatures, wherein said comparable random ethylene interpolymer has the same comonomer(s) and a melt index, density, and molar comonomer content (based on the whole polymer) within 10 percent of that of the ethylene/α-olefin interpolymer; or

(e) is characterized by a storage modulus at 25°C, G'(25°C), and a storage modulus at 100°C, G'(100°C), wherein the ratio of G'(25°C) to G'(100°C) is from about 1:1 to about 10:1; or

(f) at least one molecular fraction which elutes between 40°C and 130°C when fractionated using TREF, **characterized in that** the fraction has a block index of at least 0.5 and up to about 1 and a molecular weight distribution, Mw/Mn, greater than about 1.3 or

(g) an average block index greater than zero and up to about 1.0 and a molecular weight distribution, Mw/Mn, greater than about 1.3.

In one embodiment, the ethylene/α-olefin multi-block interpolymer has one of the properties (a) to (g) as discussed above. In another embodiment, the ethylene/α-olefin multi-block interpolymer has at least property (g) as discussed above.

In another embodiment, the ethylene/α-olefin multi-block interpolymer has a combination of two or more properties (a) to (g) as discussed above. In another embodiment, the ethylene/α-olefin multi-block interpolymer has at least property (g), as discussed above, in combination with two or more addition properties (a) to (f), as discussed above.

The ethylene/α-olefin multi-block interpolymers typically comprise ethylene and one or more copolymerizable α-olefin comonomers in polymerized form, characterized by multiple blocks or segments of two or more polymerized monomer units differing in chemical or physical properties. That is, the ethylene/α-olefin interpolymers are block interpolymers, preferably multi-block interpolymers or copolymers. The terms "interpolymer" and copolymer" are used interchangeably herein. In some embodiments, the multi-block copolymer can be represented by the following formula:

(AB)n,

where n is at least 1, preferably an integer greater than 1, such as, 2, 3, 4, 5, 10, 15, 20, 30, 40, 50, 60, 70, 80, 90, 100, or higher, "A" represents a hard block or segment, and "B" represents a soft block or segment. Preferably, the As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA—AA-BBB—BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than about 95 weight percent, and preferably greater than about 98 weight percent, based on the weight of the polymer. In other words, the comonomer content (content of monomers other than ethylene) in the hard segments is less than about 5 weight percent, and preferably less than about 2 weight percent, based on the weight of the polymer. In some embodiments, the hard segments comprises all or substantially all ethylene. "Soft" segments, on the other hand, refer to blocks of polymerized units in which the comonomer content (content of monomers other than ethylene) is greater than about 5 weight percent, preferably greater than about 8 weight percent, greater than about 10 weight percent, or greater than about 15 weight percent, based on the weight of the polymer. In some embodiments, the comonomer content in the soft segments can be greater than about 20 weight percent, greater than about 25 weight percent, greater than about 30 weight percent, greater than about 35 weight percent, greater than about 40 weight percent, greater than about 45 weight percent, greater than about 50 weight percent, or greater than about 60 weight percent.

The soft segments can often be present in a block interpolymer from about 1 weight percent to about 99 weight percent of the total weight of the block interpolymer, preferably from about 5 weight percent to about 95 weight percent, from about 10 weight percent to about 90 weight percent, from about 15 weight percent to about 85 weight percent, from about 20 weight percent to about 80 weight percent, from about 25 weight percent to about 75 weight percent, from about 30 weight percent to about 70 weight percent, from about 35 weight percent to about 65 weight percent, from about 40 weight percent to about 60 weight percent, or from about 45 weight percent to about 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application No. 11/376,835 (insert when known), Attorney Docket No. 385063-999558, entitled "Ethylene/α-Olefin Block Interpolymers", filed on March 15, 2006, in the name of Colin L.P. Shan, Lonnie Hazlitt, et. al. and assigned to Dow Global Technologies Inc., the disclosure of which is incorporated by reference herein in its entirety.

In one aspect, the ethylene/α-olefin interpolymers used in embodiments of the invention have a $M_w/M_n$ from about 1.7 to about 3.5, and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

and preferably

$$T_m \geq -6288.1 + 13141(d) - 6720.3(d)^2,$$

and more preferably

$$T_m \geq 858.91 - 1825.3(d) + 1112.8(d)^2.$$

Such melting point/density relationship is illustrated in Figure 1. Unlike the traditional random copolymers of ethylene/α-olefins, whose melting points decrease with decreasing densities, the inventive interpolymers (represented by diamonds) exhibit melting points substantially independent of the density, particularly when density is between about 0.87 g/cc to about 0.95 g/cc. For example, the melting point of such polymers are in the range of about 110°C to about 130°C, when density ranges from 0.875 g/cc to about 0.945 g/cc. In some embodiments, the melting point of such polymers are in the range of about 115°C to about 125°C, when density ranges from 0.875 g/cc to about 0.945 g/cc.

In another aspect, the ethylene/α-olefin interpolymers comprise, in polymerized form, ethylene and one or more α-olefins, and are characterized by a ΔT, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔH satisfy the following relationships:

$$\Delta T > -0.1299(\Delta H) + 62.81,$$

and preferably

$$\Delta T \geq -0.1299(\Delta H) + 64.38,$$

and more preferably

$$\Delta T \geq -0.1299(\Delta H) + 65.95,$$

for ΔH up to 130 J/g. Moreover, ΔT is equal to, or greater than, 48 °C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30°C, and ΔH is the numerical value of the heat of fusion in J/g. More preferably, the highest CRYSTAF peak contains at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene octene comparative polymers corresponds to the equation ΔT = -0.1299 (ΔH) + 62.81.

In yet another aspect, the ethylene/α-olefin interpolymers have a molecular fraction which elutes between 40°C and 130°C, when fractionated using Temperature Rising Elution Fractionation ("TREF"), **characterized in that** said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/α-olefin multi-block interpolymers are characterized by an elastic recovery, Re, in percent at 300 percent strain and 1 cycle, measured on a compression-molded film of an ethylene/α-olefin interpolymer, and has a density, d, in grams/cubic centimeter, and wherein the numerical values of Re and d satisfy the following relationship when ethylene/α-olefin interpolymer is substantially free of a cross-linked phase:

$$Re > 1481-1629(d);$$

and preferably

$$Re \geq 1491-1629(d);$$

and more preferably

$$Re \geq 1501\text{-}1629(d);$$

and even more preferably

$$Re \geq 1511\text{-}1629(d).$$

Figure 3 shows the effect of density on elastic recovery for unoriented films made from certain inventive interpolymers and traditional random copolymers. For the same density, the inventive interpolymers have substantially higher elastic recoveries.

In some embodiments, the ethylene/α-olefin multi-block interpolymers have a tensile strength above 10 MPa, preferably a tensile strength ≥ 11 MPa, more preferably a tensile strength ≥ 13MPa, and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/α-olefin multi-block interpolymers have (1) a storage modulus ratio, G'(25°C)/G'(100°C), of from 1 to 50, preferably from 1 to 20, more preferably from 1 to 10; and/or (2) a 70°C compression set of less than 80 percent, preferably less than 70 percent, especially less than 60 percent, less than 50 percent, or less than 40 percent, down to a compression set of 0 percent.

In still other embodiments, the ethylene/α-olefin multi-block interpolymers have a 70°C compression set of less than 80 percent, less than 70 percent, less than 60 percent, or less than 50 percent. Preferably, the 70°C compression set of the interpolymers is less than 40 percent, less than 30 percent, less than 20 percent, and may go down to about 0 percent.

In some embodiments, the ethylene/α-olefin multi-block interpolymers have a heat of fusion of less than 85 J/g, and/or a pellet blocking strength of equal to, or less than, 100 pounds/foot$^2$ (4800 Pa), preferably equal to, or less than, 50 Ibs/ft$^2$ (2400 Pa), especially equal to, or less than, 5 Ibs/ft$^2$ (240 Pa), and as low as 0 Ibs/ft$^2$ (0 Pa).

In other embodiments, the ethylene/α-olefin interpolymers comprise, in polymerized form, at least 50 mole percent ethylene, and have a 70°C compression set of less than 80 percent, preferably less than 70 percent or less than 60 percent, most preferably less than 40 to 50 percent, and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes, and possessing a most probable distribution of block lengths. Preferred multi-block copolymers are those containing 4 or more blocks or segments, including terminal blocks. More preferably, the copolymers include at least 5, 10 or 20 blocks or segments, including terminal blocks.

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions, each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

In another aspect, the multi-block interpolymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer. Preferably said block interpolymer has a peak (but not just a molecular fraction) which elutes between 40°C and 130°C (but without collecting and/or isolating individual fractions), **characterized in that** said peak, has a comonomer content, estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, and wherein said comparable random ethylene interpolymer has the same comonomer(s), and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [$CH_3$/$CH_2$] from the ATREF infra-red detector, wherein the tallest (highest) peak is identified from the base line, and then the FWHM area

is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/$\alpha$-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl : methylene area ratio [$CH_3$/$CH_2$] of the TREF peak.

Comonomer content may be measured using any suitable technique, with techniques based on nuclear magnetic resonance (NMR) spectroscopy preferred. Using this technique, said blocked interpolymers has higher molar comonomer content than a corresponding comparable interpolymer.

Preferably, for interpolymers of ethylene and 1-octene, the block interpolymer has a comonomer content of the TREF fraction, eluting between 40 and 130°C, greater than, or equal to, the quantity (- 0.2013) T + 20.07, more preferably greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene, where a plot of the comonomer content versus TREF elution temperature for several comparable ethylene/1-octene interpolymers (random copolymers) are fit to a line representing (- 0.2013) T + 20.07 (solid line). The line for the equation (- 0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer, and is believed to be due to the presence of differentiated blocks within the polymer chains, having both crystalline and amorphous nature.

Figure 5 graphically displays the TREF curve and comonomer contents of polymer fractions for an Example 5 (a multi-block copolymer) and a comparative F polymer (physical blend of two polymers from simultaneous polymerization using two catalysts). The peak eluting from 40°C to 130°C, preferably from 60°C to 95°C for both polymers is fractionated into three parts, each part eluting over a temperature range of less than 10°C. Actual data for Example 5 is represented by triangles. The skilled artisan can appreciate that an appropriate calibration curve may be constructed for interpolymers containing different comonomers, and a line used as a comparison fitted to the TREF values obtained from comparative interpolymers of the same monomers, preferably random copolymers made using a metallocene or other homogeneous catalyst composition. Inventive interpolymers are characterized by a molar comonomer content greater than the value determined from the calibration curve at the same TREF elution temperature, preferably at least 5 percent greater, more preferably at least 10 percent greater.

In addition to the above aspects and properties described herein, the inventive polymers can be characterized by one or more additional characteristics. In one aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, **characterized in that** said fraction has a molar comonomer content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer (s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one $\alpha$-olefin, especially those interpolymers having a whole polymer density from about 0.855 to about 0.935 g/$cm^3$, and more especially for polymers having more than about 1 mole percent comonomer, the blocked interpolymer has a comonomer content of the TREF fraction eluting between 40 and 130°C greater than, or equal to, the quantity (- 0.1356) T + 13.89, more preferably greater than, or equal to, the quantity (-0.1356) T+ 14.93, and most preferably greater than, or equal to, the quantity (-0.2013)T + 21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from about 0.855 to about 0.935 g/$cm^3$, and more especially for polymers having more than about 1 mole percent comonomer, the blocked interpolymer has a comonomer content of the TREF fraction eluting between 40 and 130°C greater than, or equal to, the quantity (- 0.2013) T + 20.07, more preferably greater than or equal to the quantity (-0.2013) T + 21.07, where T is the numerical value of the peak elution temperature of the TREF fraction

being compared, measured in °C.

In still another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, **characterized in that** every fraction having a comonomer content of at least about 6 mole percent, has a melting point greater than about 100°C. For those fractions having a comonomer content from about 3 mole percent to about 6 mole percent, every fraction has a DSC melting point of about 110°C or higher. More preferably, said polymer fractions, having at least 1 mol percent comonomer, has a DSC melting point that corresponds to the equation:

$$Tm \geq (-5.5926)(\text{mol percent comonomer in the fraction}) + 135.90.$$

In yet another aspect, the inventive polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, **characterized in that** every fraction that has an ATREF elution temperature greater than, or equal to, about 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58.$$

The inventive block interpolymers have a molecular fraction which elutes between 40°C and 130°C, when fractionated using TREF increments, **characterized in that** every fraction that has an ATREF elution temperature between 40°C and less than about 76°C, has a melt enthalpy (heat of fusion) as measured by DSC, corresponding to the equation: Heat of fusion (J/gm) ≤ (1.1312)(ATREF elution temperature in Celsius) + 22.97.

ATREF Peak Comonomer Composition Measurement by Infra-Red Detector

The comonomer composition of the TREF peak can be measured using an IR4 infra-red detector available from Polymer Char, Valencia, Spain.

The "composition mode" of the detector is equipped with a measurement sensor ($CH_2$) and composition sensor ($CH_3$) that are fixed narrow band infra-red filters in the region of 2800-3000 $cm^{-1}$. The measurement sensor detects the methylene ($CH_2$) carbons on the polymer (which directly relates to the polymer concentration in solution), while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.; Rohlfing, D.C.; Shieh, E.T.; "Quantifying short chain branching microstructures in ethylene-1-olefin copolymers using size exclusion chromatography and Fourier transform infrared spectroscopy (SEC-FTIR)", Polymer (2002), 43, 59-170., both of which are incorporated by reference herein in their entirety.

In other embodiments, the multi-block ethylene/α-olefin interpolymer is characterized by an average block index, ABI, which is greater than zero, and up to about 1.0, and a molecular weight distribution, $M_w/M_n$, greater than about 1.3. The average block index, ABI, is the weight average of the block index ("BI") for each of the polymer fractions obtained in preparative TREF from 20°C and 110°C, with an increment of 5°C:

$$ABI = \sum (w_i BI_i) \ ,$$

where BI, is the block index for the ith fraction of the inventive ethylene/α-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}} \ ,$$

where $T_X$ is the preparative ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/α-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As a first order approximation, the $T_A$ and $P_A$ values are set to those for high density polyethylene homopolymer, if the actual values for the "hard segments" are not available. For calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\text{Ln } P_{AB} = \alpha/T_{AB} + \beta \ ,$$

where α and β are two constants which can be determined by calibration using a number of known random ethylene copolymers. It should be noted that α and β may vary from instrument to instrument. Moreover, one would need to create their own calibration curve with the polymer composition of interest, and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\text{Ln } P = -237.83/T_{ATREF} + 0.639 \ .$$

$T_{XO}$ is the ATREF temperature for a random copolymer of the same composition and having an ethylene mole fraction of $P_X$. $T_{XO}$ can be calculated from $LnP_X = \alpha/T_{XO} + \beta$. Conversely, $P_{XO}$ is the ethylene mole fraction for a random copolymer of the same composition and having an ATREF temperature of $T_X$, which can be calculated from Ln Pxo = $\alpha/T_X + \beta$.

Once the block index (BI) for each preparative TREF fraction is obtained, the weight average block index, ABI, for the whole polymer can be calculated. In some embodiments, ABI is greater than zero, but less than about 0.3, or from about 0.1 to about 0.3. In other embodiments, ABI is greater than about 0.3, and up to about 1.0.
Preferably, ABI should be in the range of from about 0.4 to about 0.7, from about 0.5 to about 0.7, or from about 0.6 to about 0.9. In some embodiments, ABI is in the range of from about 0.3 to about 0.9, from about 0.3 to about 0.8, or from about 0.3 to about 0.7, from about 0.3 to about 0.6, from about 0.3 to about 0.5, or from about 0.3 to about 0.4. In other embodiments, ABI is in the range of from about 0.4 to about 1.0, from about 0.5 to about 1.0, or from about 0.6 to about 1.0, from about 0.7 to about 1.0, from about 0.8 to about 1.0, or from about 0.9 to about 1.0.

Another characteristic of the multi-block ethylene/α-olefin interpolymer is that the multi-block ethylene/α-olefin

interpolymer comprises at least one polymer fraction which can be obtained by preparative TREF, wherein the fraction has a block index greater than about 0.1 and up to about 1.0, and a molecular weight distribution, $M_w/M_n$, greater than about 1.3. In some embodiments, the polymer fraction has a block index greater than about 0.6 and up to about 1.0, greater than about 0.7 and up to about 1.0, greater than about 0.8 and up to about 1.0, or greater than about 0.9 and up to about 1.0. In other embodiments, the polymer fraction has a block index greater than about 0.1 and up to about 1.0, greater than about 0.2 and up to about 1.0, greater than about 0.3 and up to about 1.0, greater than about 0.4 and up to about 1.0, or greater than about 0.4 and up to about 1.0. In still other embodiments, the polymer fraction has a block index greater than about 0.1 and up to about 0.5, greater than about 0.2 and up to about 0.5, greater than about 0.3 and up to about 0.5, or greater than about 0.4 and up to about 0.5. In yet other embodiments, the polymer fraction has a block index greater than about 0.2 and up to about 0.9, greater than about 0.3 and up to about 0.8, greater than about 0.4 and up to about 0.7, or greater than about 0.5 and up to about 0.6.

For copolymers of ethylene and an α-olefin, the multi-block interpolymers preferably possess (1) a PDI of at least 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, Tg, of less than -25°C, more preferably less than -30°C, and/or (5) one and only one $T_m$.

Further, the multi-block interpolymers can have, alone, or in combination with any other properties disclosed herein, a storage modulus, G', such that log (G') is greater than or equal to 400 kPa, preferably greater than, or equal to, 1.0 MPa, at a temperature of 100°C. Moreover, the multi-block interpolymers possess a relatively flat storage modulus as a function of temperature in the range from 0 to 100°C (illustrated in Figure 6) that is characteristic of block copolymers, and heretofore unknown for an olefin copolymer, especially a copolymer of ethylene and one or more $C_{3-8}$ aliphatic α-olefins. (By the term "relatively flat" in this context is meant that log G' (in Pascals) decreases by less than one order of magnitude between 50 and 100°C, preferably between 0 and 100°C).

The multi-block interpolymers may be further characterized by a thermomechanical analysis penetration depth of 1 mm at a temperature of at least 90°C, as well as a flexural modulus of from 3 kpsi (20 MPa) to 13 kpsi (90 MPa). Alternatively, the multi-block interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the multi-block interpolymers, as compared to other known polymers. The multi-block interpolymers have significantly better flexibility-heat resistance balance than the other polymers.

Additionally, the multi-block ethylene/α-olefin interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. In certain embodiments, the ethylene/α-olefin interpolymers have a melt index, $I_2$, from 0.01 to 10 g/10 minutes, from 0.5 to 50 g/10 minutes, from 1 to 30 g/10 minutes, from 1 to 6 g/10 minutes or from 0.3 to 10 g/10 minutes. In certain embodiments, the melt index for the ethylene/α-olefin polymers is 1g/10 minutes, 3 g/10 minutes or 5 g/10 minutes.

The multi-block interpolymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 g/$cm^3$ and preferably for ethylene containing polymers from 0.85 g/$cm^3$ to 0.97 g/$cm^3$. In certain embodiments, the density of the ethylene/α-olefin polymers ranges from 0.860 to 0.925 g/$cm^3$ or 0.867 to 0.910 g/$cm^3$.

The process of making the multi-block interpolymers has been disclosed in the following patent applications: U.S. Provisional Application No. 60/553,906, filed March 17, 2004; U.S. Provisional Application No. 60/662,937, filed March 17, 2005; U.S. Provisional Application No. 60/662,939, filed March 17, 2005; U.S. Provisional Application No. 60/5662938, filed March 17, 2005; PCT Application No. PCT/US2005/008916, filed March 17, 2005; PCT Application No. PCT/US2005/008915, filed March 17, 2005; and PCT Application No. PCT/US2005/008917, filed March 17, 2005, all of which are incorporated by reference herein in their entirety. For example, one such method comprises contacting ethylene and optionally one or more addition polymerizable monomers, other than ethylene, under addition polymerization conditions with a catalyst composition comprising:

the admixture or reaction product resulting from combining:

(A) a first olefin polymerization catalyst having a high comonomer incorporation index,

(B) a second olefin polymerization catalyst having a comonomer incorporation index less than 90 percent, preferably less than 50 percent, most preferably less than 5 percent of the comonomer incorporation index of catalyst (A), and

(C) a chain shuttling agent.

Representative catalysts and chain shuttling agent are as follows.

Catalyst (A1) is [N-(2,6-di(1-methylethyl)phenyl)amido)(2-isopropylphenyl)(α-naphthalen-2-diyl(6-pyridin-2-diyl) methane)]hafnium dimethyl, prepared according to the teachings of WO 03/40195, 2003US0204017, USSN 10/429,024, filed May 2, 2003, and WO 04/24740.

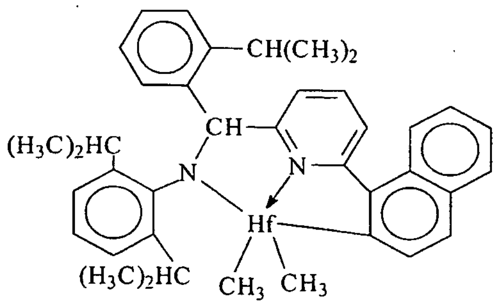

Catalyst (A2) is [N-(2,6-di(1-methylethyl)phenyl)amido)(2-methylphenyl)(1,2-phenylene-(6-pyridin-2-diyl)methane)] hafnium dimethyl, prepared according to the teachings of WO 03/40195, 2003US0204017, USSN 10/429,024, filed May 2, 2003, and WO 04/24740.

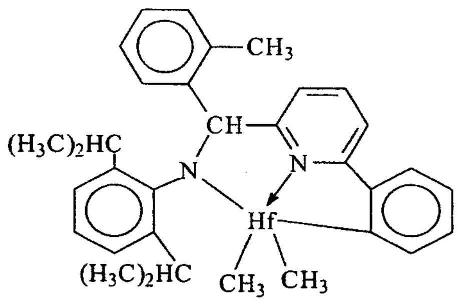

Catalyst (A3) is bis[N,N'''-(2,4,6-tri(methylphenyl)amido)ethylenediamine]hafnium dibenzyl.

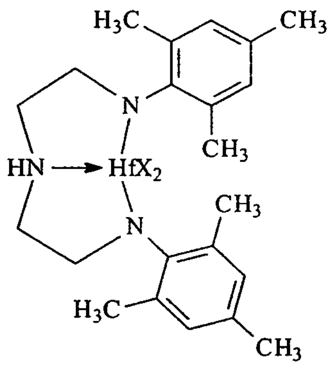

X= $CH_2C_6H_5$

Catalyst (A4) is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

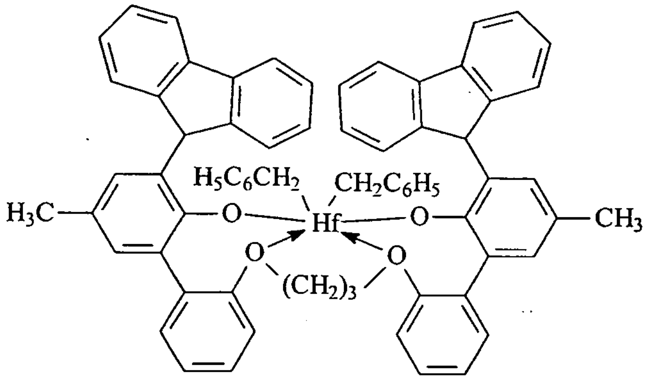

Catalyst (B1) is 1,2-bis-(3,5-di-t-butylphenylene)(1-(N-(1-methylethyl)immino)methyl)(2-oxoyl) zirconium dibenzyl

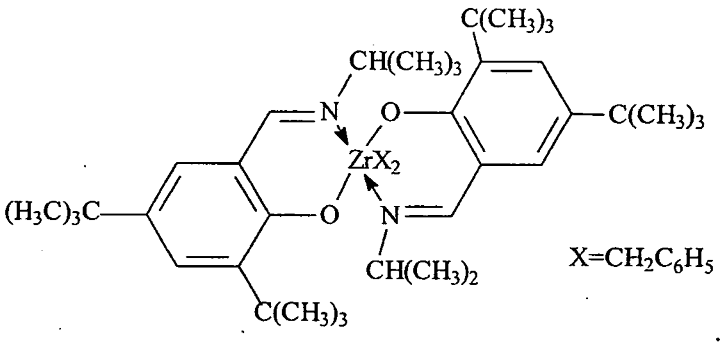

Catalyst (B2) is 1,2-bis-(3,5-di-t-butylphenylene)(1-(N-(2-methylcyclohexyl)-immino)methyl)(2-oxoyl) zirconium dibenzyl

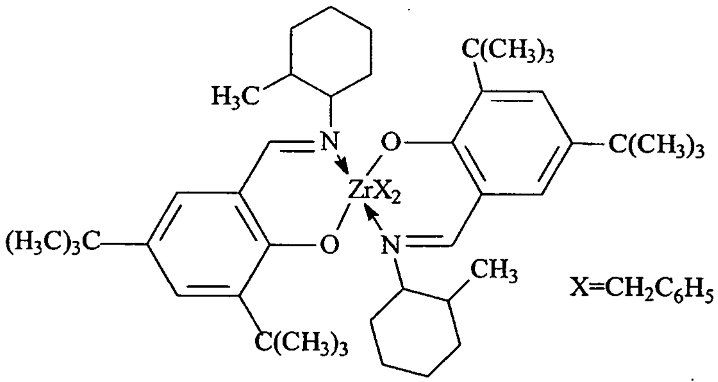

Catalyst (C1) is (t-butylamido)dimethyl(3-N-pyrrolyl-1,2,3,3a,7a-η-inden-1-yl)silanetitanium dimethyl prepared substantially according to the techniques of USP 6,268,444:

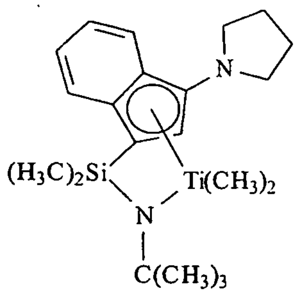

Catalyst (C2) is (t-butylamido)di(4-methylphenyl)(2-methyl-1,2,3,3a,7a-η-inden-1-yl)silanetitanium dimethyl prepared substantially according to the teachings of US-A-2003/004286:

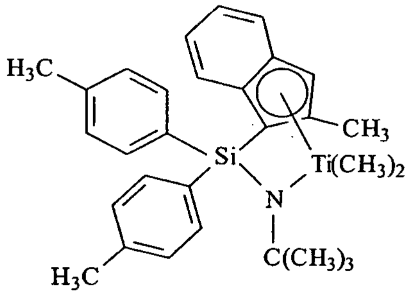

Catalyst (C3) is (t-butylamido)di(4-methylphenyl)(2-methyl-1,2,3,3a,8a-η-s-indacen-1-yl)silanetitanium dimethyl prepared substantially according to the teachings of US-A-2003/004286:

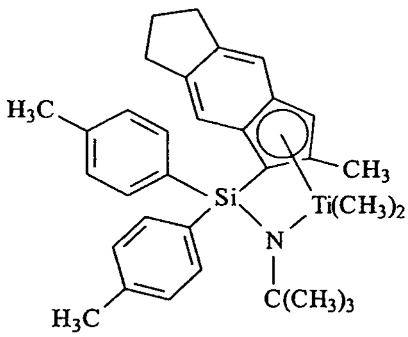

Catalyst (D1) is bis(dimethyldisiloxane)(indene-1-yl)zirconium dichloride available from Sigma-Aldrich:

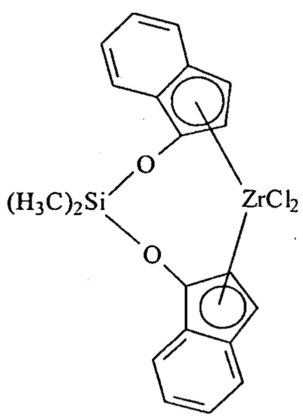

Shuttling Agents The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The multi-block interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The multi-block interpolymers also exhibit a unique crystallization and branching distribution relationship. That is, the inventive interpolymers have a relatively large difference between the tallest peak temperature measured using CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the multi-block interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased,

the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of ethylene/α-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene/α-olefin multi-block interpolymers used in the embodiments of the invention are preferably interpolymers of ethylene with at least one $C_3$-$C_{20}$ α-olefin. Copolymers of ethylene and a $C_3$-$C_{20}$ α-olefin are especially preferred. The interpolymers may further comprise $C_4$-$C_{18}$ diolefin and/or alkenylbenzene. Suitable unsaturated comonomers useful for polymerizing with ethylene include, for example, ethylenically unsaturated monomers, conjugated or nonconjugated dienes, polyenes, alkenylbenzenes, etc. Examples of such comonomers include $C_3$-$C_{20}$ α -olefins such as propylene, isobutylene, 1-butene, 1-hexene, 1-pentene, 4-methyl-1-pentene, 1-heptene, 1-octene, 1-nonene, 1-decene, and the like. 1-Butene and 1-octene are especially preferred. Other suitable monomers include styrene, halo- or alkyl-substituted styrenes, vinylbenzocyclobutane, 1,4-hexadiene, 1,7-octadiene, and naphthenics (e.g., cyclopentene, cyclohexene and cyclooctene).

While ethylene/α-olefin multi-block interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_3$-$C_{20}$ aliphatic and aromatic compounds containing vinylic unsaturation, as well as cyclic compounds, such as cyclobutene, cyclopentene, dicyclopentadiene, and norbornene, including but not limited to, norbornene substituted in the 5 and 6 position with $C_1$-$C_{20}$ hydrocarbyl or cyclohydrocarbyl groups. Also included are mixtures of such olefins as well as mixtures of such olefins with $C_4$-$C_{40}$ diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, norbornadiene, ethylidene norbornene, cyclopentene, cyclohexene, dicyclopentadiene, cyclooctene, $C_4$-$C_{40}$ dienes, including but not limited to 1,3-butadiene, 1,3-pentadiene, 1,4-hexadiene, 1,5-hexadiene, 1,7-octadiene, 1,9-decadiene, other $C_4$-$C_{40}$ α-olefins, and the like. In certain embodiments, the α-olefin is propylene,1-butene, 1-pentene,1-hexene, 1-octene or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin, optionally comprising a $C_4$-$C_{20}$ diene, having improved properties can be prepared.

Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadiene, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopentadiene; 1,4-cyclohexadiene; 1,5-cyclooctadiene and 1,5-cyclododecadiene, and multi-ring alicyclic fused and bridged ring dienes, such as tetrahydroindene, methyl tetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbornene (MNB); 5-propenyl-2-norbornene, 5-isopropylidene-2-norbornene, 5-(4-cyclopentenyl)-2-norbornene, 5-cyclohexylidene-2-norbornene, 5-vinyl-2-norbomene, and

norbornadiene. Of the dienes typically used to prepare EPDMs, the particularly preferred dienes are 1,4-hexadiene (HD), 5-ethylidene-2-norbornene (ENB), 5-vinylidene-2-norbornene (VNB), 5-methylene-2-norbornene (MNB), and dicyclopentadiene (DCPD). The especially preferred dienes are 5-ethylidene-2-norbornene (ENB) and 1,4-hexadiene (HD).

One class of desirable polymers that can be made in accordance with embodiments of the invention are elastomeric interpolymers of ethylene, a $C_3$-$C_{20}$ α-olefin, especially propylene, and optionally one or more diene monomers. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes comprising from 4 to 20 carbons. Preferred dienes include 1,4-pentadiene, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

Because the diene containing polymers comprise alternating segments or blocks containing greater or lesser quantities of the diene (including none) and α-olefin (including none), the total quantity of diene and α-olefin may be reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts, incorporating differing quantities of comonomer, have a weight ratio of blocks formed thereby from 95:5 to 5:95. The elastomeric polymers desirably have an ethylene content of from 20 to 90 percent, a diene content of from 0.1 to 10 percent, and an α-olefin content of from 10 to 80 percent, based on the total weight of the polymer. Further preferably, the multi-block elastomeric polymers have an ethylene content of from 60 to 90 percent, a diene content of from 0.1 to 10 percent, and an α-olefin content of from 10 to 40 percent, based on the total weight of the polymer. Preferred polymers are high molecular weight polymers, having a weight average molecular weight (Mw) from 10,000 to about 2,500,000, preferably from 20,000 to 500,000, more preferably from 20,000 to 350,000, and a polydispersity less than 3.5, more preferably less than 3.0, and a Mooney viscosity (ML (1+4) 125°C.) from 1 to 250. More preferably, such polymers have an ethylene content from 65 to 75 percent, a diene content from 0 to 6 percent, and an α-olefin content from 20 to 35 percent.

*Catalysts*

The term "overnight", if used, refers to a time of approximately 16-18 hours, the term "room temperature", refers to a temperature of 20-25 °C, and the term "mixed alkanes" refers to a commercially obtained mixture of C6-9 aliphatic hydrocarbons, available under the trade designation Isopar E®, from ExxonMobil Chemical Company. In the event the name of a compound herein does not conform to the structural representation thereof, the structural representation shall control. The synthesis of all metal complexes and the preparation of all screening experiments were carried out in a dry nitrogen atmosphere, using dry box techniques. All solvents used, were HPLC grade, and were dried before their use. MMAO refers to modified methylalumoxane, a triisobutylaluminum modified methylalumoxane available commercially from Akzo-Noble Corporation.
The preparation of catalyst (B1) is conducted as follows.

a) Preparation of (1-methylethyl)(2-hydroxy-3,5-di(t-butyl)phenyl)methylimine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow, crystalline solid (97 percent yield).

b) Preparation of 1,2-bis-(3,5-di-t-butylphenylene)(1-(N-(1-methylethyl)immino)methyl)(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$ (500 mg, 1.1 mmol) in 50 mL toluene. The resulting dark yellow solution is stirred for 30 min. Solvent is removed under reduced pressure to yield the desired product as a reddish-brown solid.

The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried under reduced pressure. The yield is 11.17 g of a yellow solid. $^1$H NMR is consistent with the desired product as a mixture of isomers.

b) Preparation of bis-(1-(2-methylcydohexyl)ethyl)(2-oxoyl-3,5-di(t-butyl)phenyl) immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

Cocatalyst 1 A mixture of methyldi($C_{14-18}$ alkyl)ammonium salts of tetrakis(pentafluorophenyl)borate (here-inafter armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883, Ex. 2.

Cocatalyst 2 Mixed $C_{14-18}$ alkyldimethylammonium salt of bis(tris(pentafluorophenyl)-alumane)-2-undecylimidazolide, prepared according to USP 6,395,671, Ex. 16.

Shuttling Agents The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-1-azacycloheptaneamide) (SA17), n-octylaluminum bis (dimethyl(t-butyl)siloxide(SA18), ethylzinc (2,6-diphenylphenoxide) (SA19), and ethylzinc (t-butoxide) (SA20).

*Examples 1-4, Comparative A-C General High Throughput Parallel Polymerization Conditions*

Polymerizations were conducted using a high throughput, parallel polymerization reactor (PPR) available from Symyx technologies, Inc., and operated substantially according to USP's 6,248,540, 6,030,917, 6,362,309, 6,306,658, and 6,316,663. Ethylene copolymerizations are conducted at 130°C and 200 psi (1.4 MPa), with ethylene on demand, using 1.2 equivalents of cocatalyst 1, based on total catalyst used (1.1 equivalents when MMAO is present). A series of polymerizations are conducted in a parallel pressure reactor (PPR), contained of 48 individual reactor cells in a 6 x 8 array that are fitted with a pre-weighed glass tube. The working volume in each reactor cell is 6000 $\mu$L. Each cell is temperature and pressure controlled, with stirring provided by individual stirring paddles. The monomer gas and quench gas are plumbed directly into the PPR unit, and controlled by automatic valves. Liquid reagents are robotically added to each reactor cell by syringes, and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO, or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO, the reactors are cooled, and the glass tubes are unloaded. The tubes are transferred to a centrifuge/vacuum drying unit, and dried for 12 hours at 60°C. The tubes containing dried polymer are weighed, and the difference between this weight and the tare weight gives the net yield of polymer. Results are contained in Table 1. In Table 1 and elsewhere in the application, comparative compounds are indicated by an asterisk (*).

Examples 1-4 demonstrate the synthesis of linear block copolymers (multi-block) by the present invention, as evidenced by the formation of a very narrow MWD, essentially monomodal copolymer when DEZ is present, and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting copolymers of the invention are distinguishable based on branching or density.

Table 1
Net Yield of Polymer from Various Catalysts

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the multi-block polymers produced according to the invention have a relatively narrow polydispersity (Mw/Mn) and larger block-copolymer content (trimer, tetramer, or larger) than polymers prepared in the absence of the shuttling agent.

Further characterizing data for the polymers of Table 1 are determined by reference to the figures. More specifically DSC and ATREF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C melting point (Tm) with a heat of fusion of 214.0 J/g. The corresponding CRYSTAF curve shows the tallest peak at 46.2°C with a peak area of 57.0 percent. The difference between the DSC Tm and the Tcrystaf is 63.5°C.

The DSC curve for the polymer of example 3 shows a peak with a 120.7°C melting point (Tm) with a heat of fusion of 160.1 J/g. The corresponding CRYSTAF curve shows the tallest peak at 66.1 °C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30°C with a peak area of 18.2 percent. The difference between the DSC Tm and the Tcrystaf is 74.5°C.

The DSC curve for comparative A shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for comparative B shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for comparative C shows a 125.3°C melting point (Tm) with a heat of fusion of 143.0 J/g. The corresponding CRYSTAF curve shows the tallest peak at 81.8°C with a peak area of 34.7 percent, as well as a lower crystalline peak at 52.4 °C. The separation between the two peaks is consistent with the presence of a high crystalline and a low crystalline polymer. The difference between the DSC Tm and the Tcrystaf is 43.5°C.

*Examples 5-19, Comparatives D-F, Continuous Solution Polymerization, Catalyst A1/B2 + DEZ*

Continuous solution polymerizations were carried out in a computer controlled autoclave reactor equipped with an internal stirrer. Purified mixed alkanes solvent (Isopar™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This

stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line, along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 2. Selected polymer properties are provided in Table 3.

Table 2

Process Details for Preparation of Exemplary Polymers

| Ex. | $C_8H_{16}$ kg/hr | Solv. kg/hr | $H_2$ sccm[1] | T °C | Cat Al[2] ppm | Cat A1 Flow kg/hr | Cat B2[3] ppm | B2 Flow kg/hr | DEZ Conc % | DEZ Flow kg/hr | Cocat Conc. ppm | Cocat Flow kg/hr | $[C_2H_4]/[DEZ]$[4] | Poly Rate[5] kg/hr | Conv %[6] | Solids % | Eff.[7] |
|---|---|---|---|---|---|---|---|---|---|---|---|---|---|---|---|---|---|
| D* | 1.63 | 12.7 | 29.90 | 120 | 142.2 | 0.14 | - | -- | 0.19 | 0.32 | 820 | 0.17 | 536 | 1.81 | 88.8 | 11.2 | 95.2 |
| E* | | 9.5 | 5.00 | " | -- | -- | 109 | 0.10 | 0.19 | " | 1743 | 0.40 | 485 | 1.47 | 89.9 | 11.3 | 126.8 |
| F* | " | 11.3 | 251.6 | " | 71.7 | 0.06 | 30.8 | 0.06 | -- | -- | " | 0.11 | - | 1.55 | 88.5 | 10.3 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 30.3 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 90.2 |
| 19 | 0.32 | " | " | 122 | 71.1 | 0.06 | " | " | " | 0.09 | 1743 | 0.08 | 367 | 1.16 | 90.74 | 8.4 | 106.0 |

* Comparative, not an example of the invention

[1] standard $cm^3$/min

[2]. [N-(2,6-di(1-methylethyl)phenyl)amido)(2-isopropylphenyl)(a-naphthalen-2-diyl(6-pyridin-2-diyl)methane)]hafnium dimethyl

[3]. bis-(1-(2-methylcyclohexyl)ethyl)(2-oxoyl-3,5-di(t-butyl)phenyl)immino) zirconium dibenzyl

[4]. molar ratio in reactor

[5]. polymer production rate

[6]. percent ethylene conversion in reactor

[7] efficiency, kg polymer/g M where g M = g Hf + g Zr

Table 3

| Properties of Exemplary Polymers | | | | | | | | | | | | | |
|---|---|---|---|---|---|---|---|---|---|---|---|---|---|
| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | $T_{CRYSTAF}$ (°C) | Tm-$T_{CRYSTAF}$ (°C) | CRYSTAF Peak Area (percent) |
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

The resulting polymers are tested by DSC and ATREF as with previous examples. Results are as follows:

The DSC curve for the polymer of example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1°C.

The DSC curve for the polymer of example 8 shows a peak with a 123.5 °C melting point (Tm) with a heat of fusion of 67.9 J/g. The corresponding CRYSTAF curve shows the tallest peak at 80.1 °C with a peak area of 12.7 percent. The delta between the DSC Tm and the Tcrystaf is 43.4°C.

The DSC curve for the polymer of example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1°C.

The DSC curve for the polymer of example 12 shows a peak with a 113.2 °C melting point (Tm) with a heat of fusion of 48.9 J/g. The corresponding CRYSTAF curve shows no peak equal to or above 30 °C. (Tcrystaf for purposes of further calculation is therefore set at 30°C). The delta between the DSC Tm and the Tcrystaf is 83.2°C.

The DSC curve for the polymer of example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of comparative D shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of comparative E shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of comparative F shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

*Physical Property Testing*

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100°C). Several commercially available polymers are included in the tests: Comparative G* is a substantially linear ethylene/1-octene copolymer (AFFINITY®, available from The Dow Chemical Company), Comparative H* is an elastomeric, substantially linear ethylene/1-octene copolymer (AFFINITY®EG8100, available from The Dow Chemical Company), Comparative I is a substantially linear ethylene/1-octene copolymer (AFFINITY®PL1840, available from The Dow Chemical Company), Comparative J is a hydrogenated styrene/butadiene/styrene triblock copolymer (KRATON™ G1652, available from KRATON Polymers), Comparative K is a thermoplastic vulcanizate (TPV, a polyolefin blend containing dispersed therein a crosslinked elastomer). Results are presented in Table 4.

Table 4

| High Temperature Mechanical Properties | | | | | |
|---|---|---|---|---|---|
| Ex. | TMA-1mm penetration (°C) | Pellet Blocking Strength lb/ft$^2$ (kPa) | G'(25°C)/G' (100°C) | 300 % Strain Recovery (80°C) (percent) | Compression Set (70°C) (percent) |
| D* | 51 | - | 9 | Failed | - |
| E* | 130 | - | 18 | - | - |
| F* | 70 | 141 (6.8) | 9 | Failed | 100 |
| 5 | 104 | 0 (0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0 (0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (10.2) | 29 | Failed | 100 |
| I* | 111 | - | 11 | - | - |
| J* | 107 | - | 5 | Failed | 100 |
| K* | 152 | - | 3 | - | 40 |

In Table 4, Comparative F (which is a physical blend of the two polymers resulting from simultaneous polymerizations using catalyst A1 and B1) has a 1 mm penetration temperature of about 70°C, while Examples 5-9 have a 1 mm penetration temperature of 100°C or greater. Further, examples 10-19 all have a 1 mm penetration temperature of greater than 85°C, with most having 1 mm TMA temperature of greater than 90°C or even greater than 100°C. This

shows that the multi-block polymers have better dimensional stability at higher temperatures compared to a physical blend. Comparative J (a commercial SEBS) has a good 1 mm TMA temperature of about 107°C, but it has very poor (high temperature 70°C) compression set of about 100 percent, and it also failed to recover (sample broke) during a high temperature (80°C) 300 percent strain recovery. Thus the exemplified polymers have a unique combination of properties unavailable even in some commercially available, high performance thermoplastic elastomers.

Similarly, Table 4 shows a low (good) storage modulus ratio, G'(25°C)/G'(100°C), for the multi-block polymers of 6 or less, whereas a physical blend (Comparative F) has a storage modulus ratio of 9 and a random ethylene/octene copolymer (Comparative G) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications, such as in pressure sensitive adhesive formulations.

The data in Table 4 also demonstrate that the multi-block polymers of the invention possess improved pellet blocking strength. In particular, Example 5 has a pellet blocking strength of 0 MPa, meaning it is free flowing under the conditions tested, compared to Comparatives F and G which show considerable blocking. Blocking strength is important since bulk shipment of polymers having large blocking strengths can result in product clumping or sticking together upon storage or shipping, resulting in poor handling properties.

High temperature (70°C) compression set for the inventive polymers is generally good, meaning generally less than about 80 percent, preferably less than about 70 percent and especially less than about 60 percent. In contrast, Comparatives F, G, H and J all have a 70°C compression set of 100 percent (the maximum possible value, indicating no recovery). Good high temperature compression set (low numerical values) is especially needed for applications such as gaskets, window profiles, o-rings, and the like.

Table 5

| Ambient Temperature Mechanical Properties | | | | | | | | | | | | | |
|---|---|---|---|---|---|---|---|---|---|---|---|---|---|
| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss (mm[1]) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1247 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |

(continued)

| Ambient Temperature Mechanical Properties | | | | | | | | | | | | | |
|---|---|---|---|---|---|---|---|---|---|---|---|---|---|
| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^1$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (Percent) | Stress Relaxation at 50 % Strain[2] |
| 16 | 23 | 20 | - | - | 12 | 968 | - | - | 88 | 83 | 1040 | 13 | - |
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |
| K* | - | - | - | - | - | - | - | - | - | - | - | 30 | - |

1. Tested at 51 cm/minute
2. measured at 38°C for 12 hours

Table 5 shows results for mechanical properties for the new polymers as well as for various comparison polymers at ambient temperatures. It may be seen that the multi-block polymers have very good abrasion resistance when tested according to ISO 4649, generally showing a volume loss of less than about 90 $mm^3$, preferably less than about 80 $mm^3$, and especially less than about 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 5. Tear strength for the inventive polymers can be as high as 3000 mJ, or even as high as 5000 mJ. Comparative polymers generally have tear strengths no higher than 750 mJ.

Table 5 also shows that the multi-block polymers of the invention have better retractive stress at 150 percent strain (demonstrated by higher retractive stress values) than some of the comparative samples. Comparative Examples F, G and H have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 5 also shows that stress relaxation (at 50 percent strain) is also improved (less) for the inventive polymers as compared to, for example, Comparative G. Lower stress relaxation means that the polymer retains its force better in applications such as diapers and other garments where retention of elastic properties over long time periods at body temperatures is desired.

An olefin multi-block interpolymer, and preferably an ethylene/α-olefin multi-block interpolymer, may comprise a combination of two or more suitable embodiments as described herein.

<u>Thermoplastic Polyurethanes</u>

The polyurethane component B) has no limitation in respect of its formulation, other than (i) it is different from the polydiene-based polyurethane or the polydiol-based polyurethane of component C) as described above in one or more of chemical composition, density and melt index ($I_2$), and (ii) it is thermoplastic in nature, which means that it is prepared from substantially difunctional ingredients, for example, organic diisocyanates and components being substantially difunctional in active hydrogen containing groups. However, some times minor proportions of ingredients with functionalities higher than two may be employed. This is particularly true when using extenders such as glycerin, trimethylolpropane, and the like. Such thermoplastic polyurethane compositions are generally referred to as TPU materials. Accordingly, any of the TPU materials known in the art can be employed in the present compositions. For representative teaching on the preparation of TPU materials see Polyurethanes: Chemistry and Technology, Part II, Saunders and Frisch, 1964 pp 767 to 769, Interscience Publishers, New York, N.Y. and Polyurethane Handbook, Edited by G. Oertel 1985, pp 405 to 417, Hanser Publications, distributed in U.S.A. by Macmillan Publishing Co., Inc., New York, N.Y. For particular teaching on various TPU materials and their preparation see U.S. Pat. Nos. 2,929,800; 2,948,691; 3,493,634; 3,620,905; 3,642,964; 3,963,679; 4,131,604; 4,169,196; Re 31,671; 4,245,081; 4,371, 684; 4,379,904; 4,447,590; 4,523,005; 4,621, 113; and 4,631,329; the disclosures of which are hereby incorporated herein by reference.

The preferred TPU is a polymer prepared from a mixture comprising an organic diisocyanate, at least one polymeric diol and at least one difunctional extender. The TPU may be prepared by the prepolymer, quasi-prepolymer, or one-shot methods in accordance with the methods described in the incorporated references above.

Di-isocyanates suitable for use in preparing the hard segment of the polyurethanes according to this invention include aromatic, aliphatic, and cycloaliphatic di-isocyanates and combinations of two or more of these compounds. An example of a structural unit derived from di-isocyanate (OCN-R-NCO) is represented by formula (I) below:

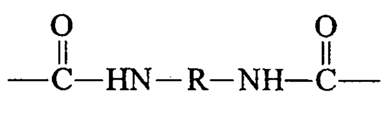

(I),

in which R is an alkylene, cycloalkylene, or arylene group. Representative examples of these di-isocyanates can be found in USP 4,385,133, 4,522,975 and 5,167,899.

Preferred di-isocyanates include, but are not limited to, 4,4'-di-isocyanatodiphenylmethane, p-phenylene di-isocyanate, 1,3-bis(isocyanatomethyl)-cyclohexane, 1,4-di-isocyanato-cyclohexane, hexamethylene di-isocyanate, 1,5-naphthalene di-isocyanate, 3,3'-dimethyl-4,4'-biphenyl di-isocyanate, 4,4'-di-isocyanato-dicyclohexylmethane, and 2,4-toluene di-isocyanate. More preferred are 4,4'-di-isocyanato-dicyclohexylmethane and 4,4'-di-isocyanato-diphenylmethane. A preferred is 4,4'-di-isocyanatodiphenylmethane.

Di-isocyanates also include aliphatic and cycloaliphatic isocyanate compounds, such as 1,6-hexamethylene-di-isocyanate; ethylene di-isocyanate; 1-isocyanato-3,5,5-trimethyl-1-3-isocyanatomethylcyclohexane; 2,4- and 2,6-hexahydrotoluenedi-isocyanate, as well as the corresponding isomeric mixtures; 4,4'-, 2,2'- and 2,4'-dicyclohexyl-methanedi-isocyanate, as well as the corresponding isomeric mixtures. Also, 1,3-tetramethylene xylene di-isocyanate can be used with the present invention. The isocyanate may be selected from organic isocyanates, modified isocyanates, isocyanate-based pre-polymers, and mixtures of two or more of these isocyanates.

Any of the organic diisocyanates previously employed in TPU preparation can be employed, including aromatic, aliphatic, and cycloaliphatic diisocyanates, and mixtures thereof. Illustrative isocyanates include, but are not limited to, methylenebis(phenyl isocyanate), including the 4,4'-isomer, the 2,4'-isomer and mixtures thereof; m-and p-phenylene diisocyanates; chlorophenylene diisocyanates; $\alpha,\alpha'$-xylylene diisocyanate; 2, 4-and 2,6-toluene diisocyanate and the mixtures of these latter two isomers, which are available commercially; tolidine diisocyanate; hexamethylene diisocyanate; 1,5-naphthalene diisocyanate; isophorone diisocyanate and the like; cycloaliphatic diisocyanates, such as methylenebis(cyclohexyl isocyanate), including the 4,4'-isomer, the 2,4'-isomer and mixtures thereof, and all the geometric isomers thereof, including trans/trans, cis/trans, cis/cis, and mixtures thereof; cyclohexylene diisocyanates (1,2-; 1,3-; or 1,4-); 1-methyl-2,5-cyclohexylene diisocyanate; 1-methyl-2,4-cyclohexylene diisocyanate; 1-methyl-2,6-cyclohexylene diisocyanate; 4, 4'-isopropylidenebis-(cyclohexyl isocyanate); 4,4'-diisocyanatodicyclohexyl, and all geometric isomers and mixtures thereof and the like.

Also included are the modified forms of methylenebis(phenyl isocyanate). By the latter are meant those forms of methylenebis(phenyl isocyanate) which have been treated to render them stable liquids at ambient temperature (circa 20°C). Such products include those which have been reacted with a minor amount (up to about 0.2 equivalents per equivalent of polyisocyanate) of an aliphatic glycol or a mixture of aliphatic glycols, such as the modified methylenebis (phenyl isocyanates) described in U.S. Pat. Nos. 3,394,164; 3,644,457; 3,883,571; 4,031,026; 4,115,429; 4,118,411; and 4,299,347; each incorporated herein by reference. The modified methylenebis(phenyl isocyanates) also include those, which have been treated so as to convert a minor proportion of the diisocyanate to the corresponding carbodiimide, which then interacts with further diisocyanate to form uretone-imine groups, the resulting product being a stable liquid at ambient temperatures as described, for example, in U.S. Pat. No. 3,384,653; incorporate herein by reference. Mixtures of any of the above-named polyisocyanates can be employed if desired.

Suitable classes of organic diisocyanates include the aromatic and cycloaliphatic diisocyanates. Preferred species within these classes are methylenebis(phenyl isocyanate) including the 4,4'-isomer, the 2,4'-isomer, and mixtures thereof, and methylenebis(cyclohexyl isocyanate), inclusive of the isomers described above. In a preferred embodiment the isocyanate is a mixture of 1,3-bis(isocyanatomethyl)cyclohexane and 1,4-bis(isocyanatomethyl)cyclohexane. In a further embodiment, these two isocyanates are present in a weight ratio of about 1 to 1.

In one embodiment, the polydiene-based polyurethane and, preferably, a polydiene diol-based polyurethane, is formed from at least one aliphatic or cyclo-aliphatic diisocyanate. In a further embodiment, both the polydiene-based polyurethane, and preferably a polydiene diol-based polyurethane, and the thermoplastic polyurethane are each, independently, formed from at least one aliphatic diisocyanate.

In another embodiment, the polydiol-based polyurethane is formed from at least one aliphatic or cyclo-aliphatic diisocyanate. In a further embodiment, both the poly diol-based polyurethane and the thermoplastic polyurethane are each, independently, formed from at least one aliphatic diisocyanate. In yet a further embodiment, the polydiol-based polyurethane comprises at least one diol made from one or more seed oil triglycerides selected from the group consisting of palmitic, stearic, oleic, linoleic and linolenic acid or ester.

The polymeric diols which can be used include those conventionally employed in the art for the preparation of TPU elastomers. The polymeric diols are responsible for the formation of soft segments in the resulting polymer, and preferably have molecular weights (number average) falling in the range from 200 to 10,000 g/mole, preferably from 400 to 4,000 g/mole, and, more preferably from 500 to 3,000 g/mole. It is not unusual, and, in some cases, it can be advantageous, to employ more than one polymeric diol. Exemplary of the diols are polyether diols, polyester diols, hydroxy-terminated polycarbonates, hydroxy-terminated polybutadienes, hydroxy-terminated polybutadiene-acrylonitrile copolymers, hydroxy-terminated copolymers of dialkyl siloxane and alkylene oxides, such as ethylene oxide, propylene oxide, and the like, and mixtures, in which any of the above polyols are employed as major component (greater than 50% w/w) with amine-terminated polyethers and amino-terminated polybutadiene-acrylonitrile copolymers. Additional examples of the diols include the natural oil diols.

Suitable polyether polyols include polyoxyethylene glycols, polyoxypropylene glycols, which, optionally, have been capped with ethylene oxide residues; random and block copolymers of ethylene oxide and propylene oxide; polytetramethylene glycol; random and block copolymers of tetrahydrofuran and ethylene oxide and/or propylene oxide; and products derived from any of the above reaction with di-functional carboxylic acids or esters derived from said acids, in which latter case, ester interchange occurs, and the esterifying radicals are replaced by polyether glycol radicals. The preferred polyether polyols are random and block copolymers of ethylene and propylene oxide of functionality about 2.0 and polytetramethylene glycol polymers of functionality about 2.0.

Suitable polyester polyols include those prepared by polymerizing epsilon-caprolactone using an initiator such as ethylene glycol, ethanolamine, and the like; and those prepared by esterification of polycarboxylic acids such as phthalic, terephthalic, succinic, glutaric, adipic azelaic, and the like acids, with polyhydric alcohols, such as ethylene glycol, butanediol, cyclohexanedimethanol, and the like.

Suitable amine-terminated polyethers are the aliphatic primary diamines structurally derived from polyoxypropylene glycols. Polyether diamines of this type were available from Jefferson Chemical Company under the trademark JEFFAMINE (now available from Basell).

Suitable polycarbonates containing hydroxyl groups include those prepared by reaction of diols, such as propane-1,3-diol, butane-1,4-diol, hexan-1,6-diol, 1,9-nonanediol, 2-methyloctane-1,8-diol, diethylene glycol, triethylene glycol, dipropylene glycol, and the like, with diarylcarbonates, such as diphenylcarbonate, or with phosgene.

Suitable silicon-containing polyethers include the copolymers of alkylene oxides with dialkylsiloxanes, such as dimethylsiloxane, and the like (see, for example, U.S. Pat. No. 4,057,595, or U.S. Pat. No. 4,631, 329 cited supra, and already incorporated herein).

Suitable hydroxy-terminated polybutadiene copolymers include the compounds available under the trade name Poly BD Liquid Resins from Arco Chemical Company. Hydroxy-terminated polybutadiene copolymers are also available from Sartomer. Illustrative of the hydroxy-and amine-terminated butadiene/acrylonitrile copolymers are the materials available under the trade name HYCAR hydroxyl-terminated (HT) Liquid Polymers and amine-terminated (AT) Liquid Polymers, respectively. Preferred diols are the polyether and polyester diols set forth above.

The difunctional extender employed can be any of those known in the TPU art disclosed above. Typically the extenders can be aliphatic straight and branched chain diols having from 2 to 10 carbon atoms, inclusive, in the chain. Illustrative of such diols are ethylene glycol, 1,3-propanediol, 1,4-butanediol, 1,5-pentanediol, 1,6-hexanediol, neopentyl glycol, and the like; 1,4-cyclohexanedimethanol; hydroquinonebis-(hydroxyethyl)ether; cyclohexylenediols (1,4-, 1,3-, and 1,2-isomers), isopropylidenebis(cyclohexanols); diethylene glycol, dipropylene glycol, ethanolamine, N-methyl-diethanolamine, and the like; and mixtures of any of the above. As noted previously, in some cases, minor proportions (less than about 20 equivalent percent) of the difunctional extender may be replaced by trifunctional extenders, without detracting from the thermoplasticity of the resulting TPU; illustrative of such extenders are glycerol, trimethylolpropane, and the like.

While any of the diol extenders, described and exemplified above, can be employed alone, or in admixture, it is preferred to use 1,4-butanediol, 1,6-hexanediol, neopentyl glycol, 1,4-cyclohexanedimethanol, ethylene glycol, and diethylene glycol, either alone, or in admixture, with each other, or with one or more aliphatic diols previously named. Particularly preferred diols are 1,4-butanediol, 1,6-hexanediol and 1,4-cyclohexanedimethanol.

The chain extender is incorporated into the polyurethane in amounts determined by the selection of the specific reactant components, the desired amounts of the hard and soft segments, and the index sufficient to provide good mechanical properties, such as modulus and tear strength. The polyurethane compositions used in the practice of this invention may contain from 2 to 25, preferably from 3 to 20 and more preferably from 4 to 18, wt% of the chain extender component.

If desired, optionally, small amounts of monohydroxylfunctional or monoaminofunctional compounds, often termed "chain stoppers," may be used to control molecular weight. Illustrative of such chain stoppers are the propanols, butanols, pentanols, and hexanols. When used, chain stoppers are typically present in minor amounts from 0.1 to 2 weight percent of the entire reaction mixture leading to the polyurethane composition.

The equivalent proportions of polymeric diol to said extender can vary considerably depending on the desired hardness for the TPU product. Generally speaking, the proportions fall within the respective range of from about 1:1 to about 1:20, preferably from about 1:2 to about 1:10. At the same time the overall ratio of isocyanate equivalents to equivalents of active hydrogen containing materials is within the range of 0.90:1 to 1.10:1, and preferably, 0.95:1 to 1.05:1.

The TPU forming ingredients can be reacted in organic solvents, but are preferably reacted, in the absence of solvent, by melt-extrusion, at a temperature of from about 125°C to about 250°C, preferably from about 160°C to about 225°C.

It is frequently desirable, but not essential, to include a catalyst in the reaction mixture employed to prepare the compositions of the invention. Any of the catalysts, conventionally employed in the art, to catalyze the reaction of an isocyanate with a reactive hydrogen containing compound, can be employed for this purpose; see, for example, Saunders et al., Polyurethanes, Chemistry and Technology, Part I, Interscience, New York, 1963, pages 228-232; see also, Britain et al., J. Applied Polymer Science, 4, 207-211, 1960; each incorporated herein by reference. Such catalysts include organic and inorganic acids salts of, and organometallic derivatives of, bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines. Representative organotin catalysts are stannous octoate, stannous oleate, dibutyltin dioctoate, dibutyltin dilaurate, and the like. Representative tertiary organic amine catalysts are triethylamine; triethylenediamine; N,N,N',N'-tetramethylethylenediamine; N,N,N',N'-tetraethylethylenediamine, N-methylmorpholine; N-ethylmorpholine; N,N,N', N'-tetramethylguanidine; N, N,N',N'-tetramethyl-1,3-butanediamine; N,N-dimethylethanolamine; N,N-diethylethanolamine; and the like. The amount of catalyst employed, is generally within the range of about 0.02 to about 2.0 percent by weight, based on the total weight of the reactants.

As discussed above, the polyurethanes can be prepared by mixing all ingredients, at essentially the same time in a "one-shot" process, or can be prepared by step-wise addition of the ingredients in a "prepolymer process," with the processes being carried out in the presence of, or without the addition of, optional additives. The polyurethane forming reaction can take place in bulk, or in solution, with, or without, the addition of a suitable catalyst that would promote the reaction of isocyanates with hydroxyl or other functionality. Examples of a typical preparation of these polyurethanes are described in USP 5,864,001.

As discussed above, the other main component of the hard segment of the polyurethanes of the present invention is at least one chain extender, which are well know in this technology field. As is known, when the chain extender is a diol, the resulting product is a thermoplastic polyurethane (TPU). When the chain extender is a diamine or an amino alcohol, the resulting product is technically a thermoplastic polyurea (TPUU).

The chain extenders that may be used in the invention are characterized by two or more, preferably two, functional groups, each of which contains "active hydrogen atoms." These functional groups are preferably in the form of hydroxyl, primary amino, secondary amino, or mixtures of two or more of these groups. The term "active hydrogen atoms" refers to hydrogen atoms that, because of their placement in a molecule, display activity according to the Zerewitinoff test as described by Kohler in J. Am. Chemical Soc., 49, 31-81 (1927).

The chain extenders may be aliphatic, cycloaliphatic, or aromatic and are exemplified by diols, diamines, and amino alcohols. Illustrative of the difunctional chain extenders are ethylene glycol, diethylene glycol, propylene glycol, dipropylene glycol, 1,3-propanediol, 1,3-butanediol, 1,4-butanediol, 1,5-pentanediol and other pentane diols, 2-ethyl-1,3-hexanediol, 2-ethyl-1,6-hexanediol, other 2-ethyl-hexanediols, 1,6-hexanediol and other hexanediols, 2,2,4-trimethylpentane-1,3-diol, decanediols, dodecanediols, bisphenol A, hydrogenated bisphenol A, 1,4-cyclohexanediol, 1,4-bis (2-hydroxyethoxy)-cyclohexane, 1,3-cyclohexanedimethanol, 1,4-cyclohexanediol, 1,4-bis(2-hydroxyethoxy)benzene, Esterdiol 204 (propanoic acid, 3-hydroxy-2,2-dimethyl-, 3-hydroxy-2,2-dimethylpropyl ester available from TCI America), N-methylethanolamine; N-methyl iso-propylamine, 4-aminocyclo-hexanol, 1,2-diaminotheane, 1,3-diaminopropane, diethylenetriamine, toluene-2,4-diamine, and toluene-1,6-diamine. Aliphatic compounds containing from 2 to 8 carbon atoms are preferred. If thermoplastic or soluble polyurethanes are to be made, the chain extenders will be difunctional in nature. Amine chain extenders include, but are not limited to, ethylenediamine, monomethanolamine, and propylenediamine.

Commonly used linear chain extenders are generally diol, diamine or amino alcohol compounds characterized by having a molecular weight of not more than 400 g/mol (or Dalton). In this context, by "linear" it is meant that no branching from tertiary carbon is included. Examples of suitable chain extenders are represented by the following formulae: $HO-(CH_2)_n-OH$, $H_2N-(CH_2)_n-NH_2$, and $H_2N-(CH_2)_n-OH$, where "n' is typically a number from 1 to 50.

One common chain extender is 1,4-butane diol ("butane diol" or "BDO"), and is represented by the following formula: $HO-CH_2CH_2CH_2CH_2-OH$. Other suitable chain extenders include ethylene glycol; diethylene glycol; 1,3-propanediol; 1,6-hexanediol; 1,5-heptanediol; triethyleneglycol; 1,2-ethyl hexenediol (EHD diol); and combinations of two or more of these extenders. In one embodiment, the chain extender is 1,2-ethyl hexenediol (EHD diol).

Also suitable, are cyclic chain extenders which are generally diol, diamine or amino alcohol compounds characterized by having a molecular weight of not more than 400 g/mol. In this context, by "cyclic" it is meant a ring structure, and typical ring structures include, but are not limited to, the 5 to 8 member ring structures with hydroxylalkyl branches. Examples of cyclic chain extender are represented by the following formulae: HO-R-(ring)-R'-OH and HO-R-O-(ring)-O-R'-OH, where R and R' are one to five carbon alkyl chains, and each ring has 5 to 8 members, preferably all carbons. In these examples, one or both of the terminal -OH can be replaced with $-NH_2$. Suitable cyclic chain extenders include cyclohexane dimethanol ("CHDM") and hydroquinone bis-2-hydrxyethyl ether (HQEE). A structural unit of CHDM, a-preferred cyclic chain extender, is represented by the following formula: $HO-CH_2$-(cyclohexane ring)-$CH_2$-OH.

The chain extender is incorporated into the polyurethane in amounts determined by the selection of the specific reactant components, the desired amounts of the hard and soft segments and the index sufficient to provide good mechanical properties, such as modulus and tear strength. The polyurethane compositions used in the practice of this invention may contain from 2 to 25, preferably from 3 to 20 and more preferably from 4 to 18, wt% of the chain extender component.

If desired, optionally, small amounts of monohydroxylfunctional or monoaminofunctional compounds, often termed "chain stoppers," may be used to control molecular weight. Illustrative of such chain stoppers are the propanols, butanols, pentanols, and hexanols. When used, chain stoppers are typically present in minor amounts from 0.1 to 2 wt% of the entire reaction mixture leading to the polyurethane composition.

As is well known to those skilled in the art, the ratio of isocyanate to total functional groups determines the Mn of the polymer. In some cases it is desirable to use a very slight excess of isocyanate.

For linear, high Mn polymers, starting materials with two functional groups per chain are desirable. However, it is possible to accommodate starting materials with a range of functionality. For example, a polydiene with one functional

end could be used to cap both ends of a polyurethane with the middle portion consisting of repeating isocyanate-chain extender moieties. Polydienes with more than two functional groups will form branched polymers. Although crosslinking and gels can be a problem, if the degree of functionality is too high, this can usually be controlled by process conditions. Such branched polymers will exhibit some rheological characteristics that are desirable in some cases, such as high melt strength.

As discussed above, catalysts that will promote or facilitate the formation of urethane groups may optionally be used in the formulation. Illustrative of useful catalysts are stannous octanoate, dibutyltin dilaurate, stannous oleate, tetrabutyltin titanate, tributyltin chloride, cobalt naphthenate, dibutyltin oxide, potassium oxide, stannic chloride, N,N,N, N'-tetramethyl-1,3-butanediamine, bis[2-(N,N-dimethylamino)ethyl] ether, 1,4-diazabicyclo[2.2.2]octane; zirconium chelates, aluminum chelates and bismuth carbonates. The catalysts, when used, are typically employed in catalytic amounts that may range from 0.001 wt%, and lower, to 2 wt%, and higher, based on the total amount of polyurethane-forming ingredients.

Additives may be used to modify the properties of the polyurethane used in the practice of this invention. Additives may be included in the conventional amounts as already known in the art and literature. Usually additives are used to provide specific desired properties to the polyurethanes such as various antioxidants, ultraviolet inhibitors, waxes, thickening agents and fillers. When fillers are used, they may be either organic or inorganic, but are generally inorganic such as clay, talc, calcium carbonate, silica and the like. Also, fibrous additives, such as glass or carbon fiber, may be added to impart certain properties.

The polyurethane used in the practice of the present invention is preferably prepared by reacting the functional polyester with an isocyanate, and optionally a chain extender. In the 'prepolymer' method, typically one or more functional polydienes are reacted with one or more isocyanates to form a prepolymer. The prepolymer is further reacted with one or more chain extenders. Alternatively, the polyurethanes may be prepared by a one-shot reaction of all of the reactants. Typical polyurethanes have a number average molecular weight from 5,000 to 1,000,000 g/mol, and more preferably from 20,000 to 100,000 g/mol.

In a preferred embodiment of the invention, the polyurethane is formed from a polyester, an isocyanate and a chain extender, and preferably an aliphatic chain extender. In a preferred embodiment, these polyesters have at least one, and more preferably at least two ester groups in the molecule, and typically have a Mn from 500 to 10,000, more preferably from 1,000 to 5,000 and even more preferably from 1,500 to 3,000 g/mol.

In another embodiment, the polyurethane is formed from a composition comprising 10 to 40 wt% of di-isocyanate, preferably 15 to 35 wt% of di-isocyanate; 50 to 85 wt% of a polyester, preferably 55 to 80 wt% of a polyester, and more preferably 60 to 80 wt% of a polyester; and 2 to 15 wt% of a chain extender, preferably 2 to 10 wt% of a chain extender (each weight percentage based on the total weight of reactants). In a further embodiment, the di-isocyanate is an aliphatic or aromatic di-isocyanate, and more preferably 4,4'-diphenylmethane di-isocyanate. In yet a further embodiment, the chain extender is an aliphatic diol. In another embodiment, the polydiene diol has a Mn from 500 to 10,000, more preferably from 1,000 to 5,000 and even more preferably from 1,500 to 3,000, g/mol.

In one embodiment, the polyurethane has a density greater than, or equal to, 0.90 g/cc, preferably greater than, or equal to, 0.95 g/cc, and more preferably greater than, or equal to, 1.00 g/cc. In another embodiment, the polyurethane has a density less than, or equal to, 1.30 g/cc, preferably less than, or equal to, 1.25 g/cc, and more preferably less than, or equal to, 1.20 g/cc. In another embodiment, the polyurethane has a density from 0.90 g/cc to 1.30 g/cc, preferably from 0.95 g/cc to 1.25 g/cc, and more preferably from 1.00 g/cc to 1.20 g/cc. All individual values and subranges from 0.90 g/cc to 1.30 g/cc are included and described herein.

In another embodiment, the polyurethane has a melt index greater than, or equal to, 0.1 g/10 min, preferably greater than, or equal to, 0.5 g/10 min, and more preferably greater than, or equal to, 1 g/10 min (ASTM D-1238-04, 190°C, 8.7kg). In another embodiment, the polyurethane has a melt index less than, or equal to, 100 g/10 min, preferably less than, or equal to, 50 g/10 min, more preferably less than, or equal to, 20 g/10 min, and even more preferably less than, or equal to, 10 g/10 min (ASTM D-1238-04, 230°C, 8.7kg). In another embodiment, the polyurethane has a melt index from 0.1 g/10 min to 100 g/10 min, preferably from 0.5 g/10 min to 50 g/10 min, more preferably from 1 g/10 min to 20 g/10 min, and even more preferably from 1 g/10 min to 10 g/10 min. In a preferred embodiment, the polyurethane has a melt index from 6 g/10 min to 10 g/10 min, and preferably from 7 g/10 min to 9 g/10 min. All individual values and subranges from 0.1 g/10 min to 100 g/10 min are included and described herein.

Preferred polyurethanes include the Pellethane™ thermoplastic polyurethane elastomers available from The Dow Chemical Company.

Additional polyurethanes suitable for use in the invention include, but are not limited to, ESTANE thermoplastic polyurethanes, TECOFLEX thermoplastic polyurethanes, CARBOTHANE thermoplastic polyurethanes, TECOPHILIC thermoplastic polyurethanes, TECOPLAST thermoplastic polyurethanes, and TECOTHANE thermoplastic polyurethanes, all available from Noveon; ELASTOLLAN thermoplastic polyurethanes and other thermoplastic polyurethanes available from BASF; and commercial thermoplastic polyurethanes available from Bayer, Huntsman and Merquinsa.

The polyurethane component of the compatibilized blends used in the practice of the invention may contain a

combination of two or more suitable embodiments as described above.

If desired, the polyurethanes can have incorporated in them, at any appropriate stage of preparation, additives such as pigments, fillers, lubricants, stabilizers, antioxidants, coloring agents, fire retardants, and the like, which are commonly used in conjunction with polyurethane elastomers.

Compositions

Compositions of the invention contain the following: a) at least one olefin multi-block interpolymer, b) at least one thermoplastic polyurethane; and c) at least one polydiene- or polydiol-based polyurethane. Preferably, the polydiene- or polydiol-based polyurethane is present in an amount less than, or equal to, 20 weight percent, more preferably less than, or equal to, 15 weight percent, and even more preferably less than, or equal to, 10 weight percent, based on the total weight of the composition.

In one embodiment, the composition comprises from 15 to 35 weight percent, and preferably from 20 to 30 weight percent of the thermoplastic polyurethane, based on the total weight of the composition.

In another embodiment, the composition comprises from 55 to 80 weight percent, and preferably from 60 to 75 weight percent of an olefin multi-block interpolymer, and preferably an ethylene/α-olefin multi-block interpolymer.

In another embodiment, the composition comprises from 55 to 80 weight percent, and preferably from 60 to 75 weight percent of an ethylene/α-olefin multi-block interpolymer, based on the total weight of the composition. Preferably, the α-olefin is selected from the group consisting of propylene, 1-butene, 1-hexene and 1-octene, and more preferably 1-butene or 1-octene.

In one embodiment, the composition comprises from 5 to 10 weight percent of the polydiene- or polydiol-based polyurethane; from 15 to 35 weight percent of the polyurethane; and from 55 to 80 weight percent of an ethylene/α-olefin interpolymer, as described herein, each based on the total weight of the composition. Preferably, the α-olefin is selected from the group consisting of propylene, 1-butene, 1-hexene and 1-octene, and more preferably 1-octene.

In another embodiment, the composition comprises from 5 to 10 weight percent of the polydiene- or polydiol-based polyurethane; from 20 to 30 weight percent of the thermoplastic polyurethane; and from 60 to 75 weight percent of an ethylene/α-olefin multi-block interpolymer, each based on the total weight of the composition. Preferably, the α-olefin is selected from the group consisting of propylene, 1-butene, 1-hexene and 1-octene, and more preferably 1-butene or 1-octene.

Additives such as process oils, slip agents, anti-block, AO, UV, fillers, may be added to the inventive compositions. Typically the composition will contain one or more stabilizers, for example, antioxidants, such as Irganox™ 1010 and Irgafos™ 168, both supplied by Ciba Specialty Chemicals. An example of a hindered phenolic antioxidant is Irganox® 1076 antioxidant, available from Ciba-Geigy Corp. Polymers are typically treated with one or more stabilizers before an extrusion or other melt processes. Other polymeric additives include, but are not limited to, ultraviolet light absorbers, antistatic agents, pigments, dyes, nucleating agents, fillers, slip agents, fire retardants, plasticizers, processing aids, lubricants, stabilizers, smoke inhibitors, viscosity control agents and antiblocking agents. Additional additives include, but not limited to, surface tension modifiers, pigments, process oil, wax, blowing agents, anti-block agents, foaming agents, antistatic agents, release agents, blowing agents, foaming agents, antistatic agents, release agents, flame resistant agents, abrasion and scratch mar additives, antimicrobial agents, antistatic agents, and crosslinking agents.

In one embodiment, the compositions o this invention further comprise a styrenic block copolymer. These styrenic block copolymer may be a triblock copolymer including but not limited to styrene-butadiene-styrene triblock copolymers (SBS) and hydrogenated SBS copolymers, styrene-butadiene diblock copolymers and hydrogenated styrene-butadiene diblock copolymers, styrene-isoprene-styrene triblock copolymers (SIS) and hydrogenated SIS copolymers, styrene-isoprene diblock copolymers and hydrogenated styrene-isoprene diblock copolymers, styrene-ethylene-butylene-styrene (SEBS) tetrablock copolymers and hydrogenated SEBS copolymers, styrene-acrylonitrile copolymers (SAN), and elastomer-modified SAN. The styrenic polymer may be a hydrogenated styrene-butadiene-styrene triblock copolymer, available from Shell Chemical under the trade name KRATON G-1652.

In one embodiment, the compositions of this invention further comprise a crosslinking agent. If crosslinking is desired, then it can be effected by the use of any one of a number of different agents, e.g., by the use of thermally activated initiators, e.g., peroxides and azo compounds; photoinitiators, e.g., benzophenone; a vinyl silane, e.g., vinyl tri-ethoxy or vinyl tri-methoxy silane; and the like. Alternatively, crosslinking can be obtained by substituting a crosslinking technique for a crosslinking agent, e.g., the use of radiation techniques other than sunlight and UV light, e.g., E-beam and x-ray, and moisture cure although both of these techniques can benefit from the use of an initiator. These crosslinking agents and techniques are used in known amounts and using known equipment and procedures.

In one embodiment, the compositions used in the practice of the invention have a melt index ($I_2$) from 0.01 to 100, preferably from 0.1 to 50, and more preferably from 1 to 40 and even more preferably from 5 to 40, g/10min as determined using ASTM D-1238 (190°C, 2.16 kg load). In another embodiment, the blend has an $I_2$ greater than, or equal to, 0.01, preferably greater than, or equal to 1 and more preferably greater than, or equal to 5, g/10min. In another

embodiment the composition has an $I_2$ less than, or equal to 100, preferably less than or equal to 50 and more preferably less than or equal to 20, g/10min. The $I_2$ of the composition as described above is measured on a neat blend, i.e., a blend without other components that may significantly affect the measurement of the $I_2$.

In one embodiment, the compositions have a percent crystallinity of less than or equal to 50, preferably less than or equal to 30 and more preferably less than or equal to 20, percent as measured by DSC. Preferably, these polymers have a percent crystallinity from 2 to 50 percent, including all individual values and subranges from 2 to 50 percent. The crystallinity of the composition as described above is measured on a neat blend, i.e., a blend without other components that may significantly affect the measurement of the crystallinity.

In one embodiment, the compositions have a density greater than, or equal to, 0.855, preferably greater than, or equal to, 0.86 and more preferably greater than, or equal to, 0.87, grams per cubic centimeter ($g/cm^3$ or g/cc). In another embodiment, the composition has a density less than, or equal to, 1, preferably less than, or equal to, 0.97, more preferably less than, or equal to, 0.96 and even more preferably less than, or equal to, 0.95, $g/cm^3$. In one embodiment, the density is from 0.855 to 0.97, preferably from 0.86 to 0.95 and more preferably from 0.865 to 0.93, $g/cm^3$. The density of the composition is measured on a neat blend, i.e., a blend without other components that may significantly affect the measurement of the density. In those embodiments in which the composition comprises one or more filler, e.g., barium sulfate, talc, etc., the maximum density can exceed 1 $g/cm^3$, e.g., the maximum density can approach or exceed 1.4 $g/cm^3$ depending upon, among other things, the nature and amount of filler.

In one embodiment, the compositions, neat, and in fabricated form, have a tensile strength from 5 to 40, preferably from 8 to 30 and even more preferably from 9 to 20, MegaPascal (MPa).

In one embodiment, the compositions, neat, and in fabricated form, have an elongation in the machine direction or the cross machine direction from 50 to 600, or from 50 to 500, as measured according to ASTM D-638-03.

In one embodiment, the compositions in neat form have a melt strength from 0.5 to 50, and more preferably from 0.5 to 20 and even more preferably from 0.5 to 10, centiNewton (cN).

In one embodiment, the compositions in neat form have a surface tension from 10 to 100, and more preferably from 20 to 70 and even more preferably from 30 to 50, dyne per centimeter at room temperature or 23°C (dyn/cm).

In one embodiment, the compositions in neat form have a surface tension greater than or equal to 32, more preferably greater than or equal to 33, and even more preferably greater than or equal to 35, dyn/cm at room temperature or 23°C.

In one embodiment the an inventive composition, when extruded at a 200°C die temp (180°C - 190°C zone temps), at 80 lbs/hr, through a flat coathanger die, which is 40 mils in thickness and 2 feet in width, produces surface energies greater than 35 dyne/cm.

In one embodiment, an inventive composition is formed into an extruded sheet, which maintains at least 50 percent, preferably at least 60 percent of its original elongation after heat aging at 120°C for 500 hours (ASTM D-882-02).

In one embodiment, the invention provides compositions wherein the olefin multi-block interpolymer, and preferably an ethylene/α-olefin multi-block interpolymer, is present as a continuous or co-continuous phase with the thermoplastic polyurethane.

In one embodiment, the invention provides for such compositions wherein the olefin multi-block interpolymer, and preferably an ethylene/α-olefin multi-block interpolymer, is present as a co-continuous phase with the thermoplastic polyurethane.

The compositions of the invention may be prepared by combining one or more olefin multi-block interpolymers with one or more thermoplastic polyurethanes. Typically, the inventive compositions are prepared by post-reactor blending the polymer components (the ethylene/α-olefin interpolymer, the polyurethane and polydiene- or polydiol-based polyurethane). Illustrative of a post-reactor blending is an extrusion, in which two or more solid polymers are fed into an extruder, and physically mixed into a substantially homogeneous composition. The inventive compositions may be crosslinked and/or foamed. In a preferred embodiment, the inventive compositions are prepared by blending the ethylene/α-olefin interpolymer and the polydiene- or polydiol-based polyurethane in a melt process. In a further embodiment, the melt process is a melt extrusion process, and preferably an "in-line" process.

In another embodiment, the compositions further contain a polypropylene polymer component, such as a homopolymer of propylene, a copolymer of propylene with ethylene or at least one α-olefin, or a blend of a homopolymer and a copolymer, a nucleated homopolymer, a nucleated copolymer, or a nucleated blend of a homopolymer and a copolymer. The α-olefin in the propylene copolymer may be 1-butene, 1-pentene, 1-hexene, 1-heptene, 1-octene or 4-methyl-1- pentene. Ethylene is the preferred comonomer. The copolymer may be a random copolymer or a block copolymer or a blend of a random copolymer and a block copolymer. The polymers may also be branched. As such, this component is preferably selected from the group consisting of polypropylene homopolymers and propylene/ethylene copolymers, or mixtures thereof. This component may a melt flow rate (MFR) (230°C and 2.16 kg weight) from 0.1 g/10 min to 150 g/10 min, preferably from 0.3 g/10 min to 60 g/10 min, more preferably from 0.8 g/10 min to 40 g/10 min, and most preferably from 0.8 g/10 min to 25 g/10 min. All individual values and subranges from 0.1 to 150 g/10 min are included herein and disclosed herein. This component may also have a density from 0.84 g/cc to 0.92 g/cc, more

preferably from 0.85 g/cc to 0.91 g/cc, and most preferably from 0.86 g/cc to 0.90 g/cc. All individual values and subranges from 0.84 g/cc to 0.92 g/cc are included herein and disclosed herein. This component may have has a melting point greater than 125°C.

As used herein, "nucleated" refers to a polymer that has been modified by addition of a nucleating agent such as Millad®, a dibenzyl sorbitol commercially available from Milliken. Other conventional nucleating agents may also be used.

An inventive composition may comprise a combination of two or more suitable embodiments as described herein.

Applications

The invention provides an article comprising at least one component formed from an inventive composition. The inventive compositions are particularly suitable for extruded sheets and tie layers between extruded sheets, tie layers between cast sheets, tie layers between films, and tie layers between profiles. Additional articles include a carpet component, an adhesive, a fabric a dispersion, a wire sheath, a cable, a protective apparel, a coating, and a foam laminate.

In another embodiment, the article is an automotive skin; an awning; a tarp; a roofing construction article (for example, adhesives to epoxy, urethane or acrylic-based substrates for all roofing applications, such as insulation bonding, liquid roofing, façade sealant, expansion joints, wet-room sealants, pitched roof, acrylics-adhered roof, bitumen bonding, and PUR-adhered refurbishment); a steering wheel; a powder coating; a powder slush molding; a consumer durable; a grip; a handle; a computer component; a belt; an appliqués; a footwear component; a conveyor or timing belt; lubricants and engine oil components; fibers; fabrics; artificial leather; injection molded objects, such as injection molded toys; artificial turf; and dispersions.

Specific applications include adhesives to polyurethane films and foams, adhesives to polyesters; dyes; paint adhesives and paint adhesion enablers; weldability applications; automotive interiors and exteriors; compatibilizers for polymer compositions; and toughening agents for polymer compositions.

In particular, the inventive compositions can be used in the following applications: (a) outsoles, mid-soles and stiffeners, to be assembled with standard polyurethane adhesive systems currently used by footwear industry, (b) painting of soles and mid-soles with polyurethane paints, currently used by footwear industry, and (c) over-molding of polyolefins and bi-component polyurethanes for multilayered soles and mid-soles. In addition, the inventive compositions can be used in other applications, such as automotive applications and construction applications. Automotive applications include, but are not limited to, the manufacture of bumper fascias, vertical panels, soft TPO skins, and interior trim. Construction applications include, but are not limited to, the manufacture of furniture and toys.

Additional applications include adhesion of co-extruded films, where one or more substrates are compatible or reactive with hydroxyl groups, and the lamination of polyolefin based films to other polar substrates (for example, glass lamination). Further applications include artificial leather to be adhered to polar substrates, such as polyurethane, polyvinyl chloride (PVC), and others substrates. Artificial leather is used for automotive interiors adhering to polyurethane for seating, head liners.

The inventive compositions are also suitable for Health & Hygiene products, such as wipes, cleaning tissues, foams or directly dyeable fibers. The inventive compositions can be used to enhance hydrophilicity of the elastomer for novel membrane structures for separation or breathability. The inventive compositions are also suitable for use as self-adherable elastomers onto metal or textile structures for automotive. As discussed above, the inventive compositions are well suited for blends and compatibilizers with enhanced interaction towards polar polymers, such as TPU, EVA, PVC, PC, PET, PLA (polylactic acid), polyamide esters, and PBT. Such bends can be used for novel compounds for footwear, automotive, consumer, durables, appliances, electronic housing, apparel, and conveyor belts. The inventive compositions can also serve as compatibilizers between natural fibers and other polyolefins for use in applications, such as wood binding formulations or cellulose binding formulations. The compositions of the invention are also useful in blends with one or more polyether block amides, such as Pebax® polymers available from Arkema. The inventive compositions may also be used as impact modifiers for nylon.

The inventive compositions can also be used to enhance the interaction to fillers, such as silica, carbon black or clay, for use in formulations for toners, tires, coatings or other compounds. The inventive compositions may also be used in engine oil viscosity modifiers, engine oil dispersants, dyeable or printable fibers for apparel, paint adhesion promoters, adhesives for glass, metal and PVDC barrier resins, dispersions, components in primers and sizing agents.

Thus the invention also provides a painted substrate, the substrate formed from an inventive composition as described herein, and the paint comprising at least one of an acrylic polymer, alkyd resin, cellulose-based material, melamine resin, urethane resin, carbamate resin, polyester resin, vinyl acetate resin, polyol and alcohol. In a further embodiment, the paint is a water-based. In another embodiment, the paint is an organic solvent based. This embodiment of the invention works well with a wide variety of paint formulations. The major components of solvent-borne paints and coatings are solvents, binders, pigments, and additives. In paint, the combination of the binder and solvent is referred to as the paint vehicle. Pigment and additives are dispersed within the vehicle. The amount of each constituent varies

with the particular paint, but solvents traditionally make up about 60 percent of the total formulation. Typical solvents include toluene, xylene, methyl ethyl ketone, methyl isobutyl ketone and water. Binders account for about 30 weight percent, pigments for 7 to 8 weight percent, and additives for 2 to 3 weight percent. Some of the polymers and other additives used in paint formulations include: acrylic polymers, alkyd resins, cellulose based materials, such as cellulose acetate butyrate, melamine resins, carbamate resins, polyester resins, vinyl acetate resins, urethane resins, polyols, alcohols, inorganic materials such as titanium dioxide (rutile), mica flakes, iron oxide, silica, aluminum, and the like.

The invention also provides an over-molded article, the article formed from a polar substrate and a molded overlay formed from an inventive composition, as described herein. In another embodiment, the invention provides an over-molded article, the article formed from a substrate comprising an inventive composition, as described herein, and a molded overlay comprising a polar material. In further embodiment, the article is in the form of a grip, handle or belt.

In another embodiment, the invention provides an over molded article comprising a polycarbonate, as the base sheet having variable thickness, and preferably having at least textured face on which inventive compositions can be adhered, typically by a compression molding process, at a moderate temperature of 140°C. This article can be further laminated with polyolefin using conventional welding techniques, such as by pressure and heat, or a second polycarbonate sheet with a textured surface can be adhered to the exposed surface of the inventive composition.

The invention also provides a laminated structure comprising a first layer and a second layer, the first layer is formed from an inventive composition, as described herein, and the second layer is formed from a composition comprising a polar material. In a further embodiment, one of the layers is in the form of a foam. In another embodiment, one of the layers is in the form of a fabric. In a further embodiment, the laminated structure is in the form of an awning, a tarp, an automobile skin or a steering wheel.

In another embodiment, the invention provides a laminate structure comprising a polycarbonate, as the base sheet having variable thickness, and preferably having at least one textured surface on which an inventive composition of the invention can be adhered, typically by a compression molding process at moderate temperature of 140°C. This article can be further laminated with polyolefin using conventional welding techniques, for example, by pressure and heat. In addition, a second polycarbonate sheet with a textured surface, interfacing the inventive composition, can be laminated over the compatibilized blends.

Another embodiment of this invention is a multi-laminate structure of polycarbonate and polyolefin films, intercalated for increased toughness of the final structure. Another embodiment would be a compatibilized blend coating deposited on the surface of polycarbonate to provide a scratch resistant assembly coat, which could be thermoformed, for example at a thermoforming temperature of 160°C.

The invention also provides a molded article comprising a first component and a second component, the first component is formed from a polar material, and the second component formed from an inventive composition, as described herein. In a further embodiment, the article is in the form of an automobile skin, appliqué, footwear, conveyor belt, timing belt or consumer durable.

"Laminates", "laminations" and like terms mean two or more layers, for example, film layers, in intimate contact with one another. Laminates include molded articles bearing a coating. Laminates are not blends, although one or more layers of a laminate may comprise a blend.

"Polar", "polar polymer" and like terms mean that the polymer molecules have a permanent dipole, i.e., the polymer molecule has a positive end and a negative end. In other words, the electrons in a polar molecule are not shared equally among the atoms of the molecule. In contrast, "nonpolar", "nonpolar polymer" and like terms mean that the polymer molecules do not have a permanent dipole, i.e., the polymer does not have a positive end and a negative end. The electrons in a nonpolar molecule are essentially equally shared among the atoms of the molecule. Most hydrocarbon liquids and polymers are nonpolar.

Polymers substituted with carboxyl, hydroxyl, and the like, are often polar polymers. Articles prepared from nonpolar polymers have relatively low surface energy, that is, less than about 32 dyne per centimeter (dyne/cm), and articles prepared from polar polymers have relatively high surface energy, that is, 32, or more, dyne/cm. The nonpolar material of this invention typically comprises one or more nonpolar thermoplastic olefinic polymers, typically elastomers, free of any significant amount of polar functionality, for example, hydroxyl, carboxyl, carbonyl, ester, ether, amide, mercaptan, halide, and the like groups. The polar material of this invention typically comprises one or more polymers comprising one or more polar functionalities. Typical polymers comprising one more polar functionalities include, but are not limited to, polyesters, polyethers, polylactic acid, polycarbonates, nylons, polysulfides, polysulfones, polyurethanes, polyvinyl alcohol, poly(vinyl acetate), poly(vinyl chloride), acrylonitrile, ABS, polyamide esters, and polysiloxanes.

"Insignificant amount of polar functionality," and like terms, mean that a polymer does not comprise a sufficient number of polar functional groups to impart a surface energy of at least about 32 dyne/cm to an article made from it.

"Over-molding," and like terms, refer to a process in which one resin is injection into a mold containing a pre-placed substrate, and the resin is molded over this substrate. Over-molding is typically used to improve the performance and properties of a final product by over-molding one resin over another polymer substrate. Over-molding can be used

to form seamless, integrated parts. Examples of over-molded parts include flexible grip handles on power tools and kitchen utensils, which provide additional gripping properties, without the hygienic concern normally associated with mechanical assemblies. The substrate may be any suitable material, such as a plastic, metal or ceramic part.

"Molded overlay," and like terms, refer to an article comprising at least two parts (an injection molded part and a substrate) that are bound together. The injection molded part is placed on top of the substrate, outside the injection mold. An adhesive may be used to bind the injection molded part to the substrate. The substrate may be any suitable material, such as a plastic, metal or ceramic part.

The substrates to which an inventive composition can be applied, include a wide range of materials, both polar and nonpolar, such as, but not limited to, polymers, metal, wood, concrete, glass, ceramic, and various composites of two or more of these materials. Alternatively, these materials can be applied to an article formed from an inventive composition.

As discussed above, application methods include painting, printing, dying, over-molding, and the like, including the many variations on each, for example, spreading, spraying, dipping, extrusion, and other processes. The inventive compositions can be crosslinked before, during or after application to a substrate, and they can be crosslinked in any convenient manner, for example, peroxide, sulfur, moisture, silane, radiation, heat and the like. In one embodiment, the inventive composition is applied to a substrate, and the inventive composition is crosslinked, as it is applied, and/or after it is applied. For crosslinking, the inventive composition will usually contain unsaturation, for example, a diene-containing polyolefin (PO).

As discussed above, the inventive compositions can be used to form a tie layer between polar and nonpolar materials, particularly between polar and nonpolar polymeric materials, for example, between a film layer of a nonpolar-PO, such as polyethylene or polypropylene, and a film layer of a polar polymer, such as polylactic acid (PLA) or polyamide or polyester. The compositions of this invention are particularly well suited as tie layers for binding together the following: (a) a polyethylene or polypropylene film, or a polyethylene or polypropylene surface of a molded article, to (b) a film, or surface of a molded article, of an ethylene/acrylic acid copolymer (EAA) or a copolymer of PLA or polyethylene terephthalate (PET). Any processes that combine co-extrusion, extrusion lamination, adhesive lamination, and/or foam casting or extrusion can be used to create these laminated structures, including structures in which one layer comprises a foam.

The inventive compositions may also be used in dispersions, such as aqueous-based dispersions for use as primers in olefinic footwear that promote adhesion to PU glues and leather; fabric coating adhesion (adhesion to PET, Nylon, PP, elastomer rich TPO comprising of POE, EPDM or other non-polar elastomers or combination thereof etc.).

In one embodiment, the dispersions of this invention can be prepared by dispersing the TPU (based on any non-polar polyol) in a previously prepared polyolefin dispersion, i.e., the polyolefin dispersion serves as the aqueous phase in the dispersion process.

In other embodiments, the dispersion can be prepared by:

a) Preparing a polyurethane prepolymer using a non-polar polyol such as polybutadiene diol or a seed-oil based polyester polyol, and a diisocyanate, or

b) Dispersing the polyurethane prepolymer in an aqueous phase comprising a polyolefin dispersion and chain extender; the polyurethane prepolymer can be dispersed in the aqueous phase by incorporating a suitable surfactant or by making the prepolymer self-dispersing using a conventional functionalization approach, or

c) Physically blending a polyolefin dispersion and a polyurethane dispersion prepared using a non-polar polyol, such as polybutadiene diol or a seed-oil based polyol, or

d) Following the procedures of US 2005/0100754, incorporated herein by reference, or

e) Dispersing a pre-blend of an inventive composition, or post blending two or more dispersions.

In one embodiment, each polyurethane component of the dispersion is formed, independently, from an aliphatic isocyanate.

The dispersions of these compositions can also be used as paint adhesion promoters for non-polar thermoplastic and thermoset parts for automotive exteriors and interiors. They can also be used as primers for painting or printing of non-polar plastic parts for toys, and other molded or extruded parts and films.

In one embodiment, the polydiene-based polyurethane and, preferably, a polydiene diol-based polyurethane, is formed from at least one aliphatic or cyclo-aliphatic diisocyanate. In a further embodiment, both the polydiene-based polyurethane, and preferably a polydiene diol-based polyurethane, and the thermoplastic polyurethane are each, independently, formed from at least one aliphatic diisocyanate.

In another embodiment, the polydiol-based polyurethane is formed from at least one aliphatic or cyclo-aliphatic diisocyanate. In a further embodiment, both the poly diol-based polyurethane and the thermoplastic polyurethane are each, independently, formed from at least one aliphatic diisocyanate. In yet a further embodiment, the polydiol-based polyurethane comprises at least one diol made from one or more seed oil triglycerides selected from the group consisting of palmitic, stearic, oleic, linoleic and linolenic acid or ester.

Additional preferred applications include automotive thermoformed skins (for polyurethane (PU) foam adhesion without the use of current water based primers based on chlorinated maleated polyolefins), house wrap - where high Moisture Vapor Transmission Rate is required and good adhesion to polypropylene woven fabric (scrim); adhesive films (blown or cast); co-extruded films, where the POE/TPU is used as a thin adhesive tie layer (for example, roofing membrane that needs adhesion using PU glues). The compositions, with proper choice of diol, isocyanate, POE and compatibilizer, can be used in coatings, paints, adhesives, glues, films, printability, dyeability, artificial leather, protective clothing, artificial turf, carpet fibers, textiles, medical (blood bags, tubing), toys, flexible over-molded goods, soft grips, sportswear, and the like, where adhesion to the polyolefin is crucial, and the inventive composition results in increased surface energy (>37 dyne/cm) for adhesion to polar materials. If the polyurethane components were completely aliphatic (no aromaticity, no un-saturation), the POE/TPU composition can be used to form a weatherable coating layer (as opposed to adhesive tie layer).

Definitions

Any numerical range recited herein, includes all values from the lower value to the upper value, in increments of one unit, provided that there is a separation of at least two units between any lower value and any higher value. As an example, if it is stated that a compositional, physical or mechanical property, such as, for example, molecular weight, viscosity, melt index, etc., is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (for example, 1.1, 1.5, etc.), one unit is considered to be 0.0001, 0.001, 0.01 or 0.1, as appropriate. For ranges containing numbers less than ten (for example, 1 to 5), one unit is typically considered to be 0.1. These are only examples of what is specifically intended, and all possible combinations of numerical values between the lowest value and the highest value enumerated, are to be considered to be expressly stated in this application. Numerical ranges have been recited, as discussed herein, in reference to melt index, melt flow rate, molecular weight distribution, percent crystallinity, density and other properties.

"Composition" and like terms mean a mixture of two or more materials. Included in compositions are pre-reaction, reaction and post-reaction mixtures the latter of which will include reaction products and by-products as well as unreacted components of the reaction mixture and decomposition products, if any, formed from the one or more components of the pre-reaction or reaction mixture.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

"Polymer" means a polymeric compound prepared by polymerizing monomers, whether of the same or a different type. The generic term polymer thus embraces the term homopolymer, usually employed to refer to polymers prepared from only one type of monomer, and the term interpolymer as defined below. The terms "ethylene/α-olefin polymer" and "propylene/α-olefin polymer" are indicative of interpolymers as described below.

"Interpolymer" means a polymer prepared by the polymerization of at least two different monomers. This generic term includes copolymers, usually employed to refer to polymers prepared from two different monomers, and polymers prepared from more than two different monomers, e.g., terpolymers, tetrapolymers, etc.

"Olefin-based polymer", "polyolefin", "PO" and like terms means a polymer that comprises more than 50 mole percent units derived from polymerized olefin monomer, for example ethylene or propylene (based on the total amount of polymerizable monomers). Representative polyolefins include polyethylene, polypropylene, polybutene, polyisoprene and their various interpolymers. In the context of this disclosure, "olefin-based polymer" and like terms explicitly exclude olefin multi-block interpolymers.

"Ethylene-based polymer" and like terms means a polymer that comprises more than 50 mole percent polymerized ethylene monomer (based on the total amount of polymerizable monomers). As used in the context of this disclosure, ethylene-based polymer and like terms explicitly excludes ethylene multi-block interpolymers.

"Ethylene/α-olefin interpolymer" and like terms means an interpolymer that comprises more than 50 mole percent polymerized ethylene monomer (based on the total amount of polymerizable monomers), and at least one α-olefin. As used in the context of this disclosure, ethylene/α-olefin interpolymer and like terms explicitly excludes ethylene/α-olefin multi-block interpolymers.

"Random ethylene/α-olefin interpolymer" and like terms are used in this disclosure consistent with their use in the art in reference to polymers, and they refer to ethylene-based interpolymers in which the comonomer(s) is/are randomly distributed along the polymer chain. As used in the context of this disclosure, random ethylene/α-olefin interpolymer and like terms explicitly excludes ethylene/α-olefin multi-block interpolymers.

"Propylene-based polymer" and like terms means a polymer that comprises more than 50 mole percent polymerized propylene monomer (based on the total amount of polymerizable monomers). As used in the context of this

disclosure, propylene-based polymer and like terms explicitly excludes propylene multi-block interpolymers.

"Propylene/α-olefin interpolymer" and like terms means an interpolymer that comprises more than 50 mole percent polymerized propylene monomer (based on the total amount of polymerizable monomers), and at least one α-olefin. As used in the context of this disclosure, propylene/α-olefin interpolymer and like terms explicitly excludes propylene/α-olefin multi-block interpolymers.

The term, "propylene/ethylene interpolymer" and like terms means an interpolymer that comprises more than 50 mole percent polymerized propylene monomer (based on the total amount of polymerizable monomers) with the remainder of the interpolymer comprising at least some, e.g., typically at least 1 mole precent, polymerized ethylene monomer. This term, as used herein, does not refer to a propylene/ethylene multi-block interpolymer.

"Polydiene-based polyurethane" and like terms mean a polyurethane polymer formed, in part, from a polydiene containing at least one isocyanate-reactive group, e.g., hydroxyl and/or amine.

"Polydiol-based polyurethane" and like terms mean a polyurethane polymer formed, in part, from a polydiol containing at least two hydroxyl groups.

"Polydiene diol-based polyurethane" and like terms mean a polyurethane polymer formed, in part, from a polydiene containing at least two hydroxyl groups.

"Insignificant amount of polar functionality" and like terms mean that a polymer does not comprise a sufficient number of polar functional groups to impart a surface energy of at least 32 dyne/cm to an article made from it.

"Substantially free" and like terms means that the composition contains only insignificant amounts of a compound such that any presence of the compound does not have any material effect on the composition. Typically, a composition is considered substantially free of a compound when that compound is present in less than 0.1 wt% based on the weight of the composition.

Test Methods

Density is determined in accordance with American Society for Testing and Materials (ASTM) procedure ASTM D792-00, Method B.

Melt index ($I_2$) in g/10 min, is measured using ASTM D-1238-04 (version C), Condition 190°C/2.16 kg. The notation "$I_{10}$" refers to a melt index, in g/10 min, measured using ASTM D-1238-04, Condition 190°C/10.0 kg. The notation "$I_{21}$" refers to a melt index, in g/10 min, measured using ASTM D-1238-04, Condition 190°C/21.6 kg. Polyethylene is typically measured at 190C while polypropylene is typically measured at 230°C. MFR means melt flow rate for propylene based polymers and is measured using ASTM D-1238 condition 230°C/2.16kg. For urethane based polymers, including blend comprising such polymers, except PELLETHANE™ polymers, melt index is measured according to ASTM D-1238 condition 190°C/2.16kg. For PELLETHANE™ (Pellethane™ 2102-80A AND 2103-70A) melt index is measured according to ASTM D-1238 condition 190°C/8.7kg.

Differential Scanning Calorimeter (DSC) is performed using a TAI model Q1000 DSC equipped with an RCS cooling accessory and an auto-sampler. A nitrogen purge gas flow of 50 cc/min is used. The sample is pressed into a thin film and melted in the press at about 175°C and then air-cooled to room temperature (25°C). Material (3-10 mg) is then cut into a 3 mm diameter disk, accurately weighed, placed in a light aluminum pan (ca 50 mg), and then crimped shut. The thermal behavior of the sample is investigated with the following temperature profile. The sample is rapidly heated to 180°C and held isothermally for 3 minutes in order to remove any previous thermal history. The sample is then cooled to -90°C at 10°C/min cooling rate and held at -90°C for 3 minutes. The sample is then heated to 150°C at 10°C/min heating rate. The cooling and second heating curves are recorded.

Ultimate tensile strength and elongation at break are measured according to ASTM D-638-03. Both measurements are performed at 23°C on die-cut D638-type IV specimens. Melting temperature (Tm) is determined from the second heating curve. Crystallization temperature (Tc) is determined from the first cooling curve.

Surface tension is measured in accordance with ASTM D2578-04a, Method B, and DIN 53364 (1986). ARCOTEC test inks are used, which are fluids of defined surface tension, and are available in ranges from 28 to 56 mN/m. Tests are run at room temperature (23 C).

Surface energy is measured using ARCOTEC™ test inks and test pens available from Lotar Enterprises. As a starting point for each check, a test ink or test pen with a medium value should be applied, e.g., 38 mN/m (dyne/cm). If the line of ink stays unchanged, for at least 2 seconds on the surface of the material, without turning into droplets, the surface energy of the material is the same, or higher, than the surface tension of the fluid. In this case, the test ink/test pen with the next higher value is applied to the surface, e.g., 40 mN/m (dyne/cm). This check has to be repeated with the next higher value of surface tension, up to the point, at which, within 2 seconds, the line of fluid turns into separate droplets. If already at the starting point (38 mN/m (dyne/cm)) droplets are formed from the line of fluid, the check is continued with test inks/test pens of lower values, which is often the case with metals. As a general limit often 32 mN/m (dyne/cm) are mentioned. If the surface energy level is below this value, the adhesion will be poor, above this value the adhesion will be good or sufficient.

The Shore A hardness is measured according to ISO-868 on injection-molded plaques. The tensile properties are determined according to ISO-527-2 on injection-molded plaques.

Melt tension is measured on selected polymer samples on a Goettfert Rheotens melt tensile tester at a temperature of 190°C. The Rheotens tester is composed of two counter rotating wheels, which pull a molten strand, extruded from a capillary die, at a constant velocity. The wheels are equipped with a balance to measure the stress response of the melt, as the wheels accelerate. The wheels are allowed to accelerate until strand rupture. The force to break the strand is taken as the melt tension in centiNewton (cN).

The RR (V0.1 /V100) is determined by examining samples using melt rheology techniques on a Rheometric Scientific, Inc. ARES (Advanced Rheometric Expansion System) dynamic mechanical spectrometer (DMS). The samples are examined at 190°C, using the dynamic frequency mode, and 25 millimeter (mm) diameter parallel plate fixtures with a 2 mm gap. With a strain rate of 8%, and an oscillatory rate that is incrementally increased from 0.1 to 100 rad/sec, five data points are taken for each decade of frequency analyzed. Each sample (either pellets or bale) is compression molded into 3 inch (7.62 centimeter (cm)) diameter plaques by ⅛ inch (0.049 cm) thick at 20,000 psi (137.9 megapascals (MPa)) pressure for one minute at 180°C. The plaques are quenched and cooled (over a period of 1 minute) to room temperature. The "25 mm plaques" are cut from the center portion of larger plaques. These 25 mm diameter aliquots are then inserted into the ARES, at 190°C, and allowed to equilibrate for five minutes, prior to initiation of testing. The samples are maintained in a nitrogen environment throughout the analyses to minimize oxidative degradation. Data reduction and manipulation are accomplished by the ARES2/A5:RSI Orchestrator Windows 95 based software package. RR measures the ratio of the viscosity versus shear rate curve.

Interpolymer Mooney Viscosity, MV, (ML 1+4 at 125°C) is measured in accordance with ASTM D1646-04. The processing rheology ration, PRR, is calculated from the MV and the RR in accordance with the formula; PRR = RR + [3.82 - interpolymer Mooney Viscosity ($ML_{1+4}$ at 125°C)] x 0.3. ML refers to Mooney Large Rotor. The viscometer is a Monsanto MV2000 instrument.

Tear is measured in accordance with ISO-34-1 (Edition 2004) on injection-molded plaques.

*<u>Testing Methods Relating to the Characterization of the Olefin Multi-Block Interpolymers</u>*

*1. GPC Method for Samples 1-4 and A-C*

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx Rapid GPC system is used to determine the molecular weight data for each sample. A Gilson 350 pump set at 2.0 ml/min flow rate is used to pump helium-purged 1,2-dichlorobenzene stabilized with 300 ppm Ionol as the mobile phase through three Plgel 10 micrometer (μm) Mixed B 300mm x 7.5mm columns placed in series and heated to 160°C. A Polymer Labs ELS 1000 Detector is used with the Evaporator set to 250°C, the Nebulizer set to 165°C, and the nitrogen flow rate set to 1.8 SLM at a pressure of 60-80 psi (400-600 kPa) $N_2$. The polymer samples are heated to 160°C, and each sample injected into a 250 μl loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

*2. Standard CRYSTAF Method*

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

*3. DSC Standard Method (Excluding Samples 1-4 and A-C)*

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

*4. GPC Method (Excluding Samples 1-4 and A-C)*

*5.*

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm ofbutylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431 (M_{polystyrene})$.

Polyethylene equivalent molecular weight calculations are performed using Viscotek TriSEC software Version 3.0.

*5. Compression Set*

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°C, followed by cooling inside the press with cold running water at 86 MPa.

*6. Density*

Samples for density measurement are prepared according to ASTM D 1928. Measurements are made within one hour of sample pressing using ASTM D792, Method B.

*7. Flexural/Secant Modulus/ Storage Modulus*

Samples are compression molded using ASTM D 1928. Flexural and 2 percent secant moduli are measured according to ASTM D-790. Storage modulus is measured according to ASTM D 5026-01 or equivalent technique.

*8. Optical Properties*

Films of 0.4 mm thickness are compression molded using a hot press (Carver Model #4095-4PR1001R). The pellets are placed between polytetrafluoroethylene sheets, heated at 190 °C at 55 psi (380 kPa) for 3 min, followed by

1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.

Clarity is measured using BYK Gardner Haze-gard as specified in ASTM D 1746.

The 45° gloss is measured using BYK Gardner Glossmeter Microgloss 45° as specified in ASTM D-2457

Internal haze is measured using BYK Gardner Haze-gard based on ASTM D 1003 Procedure A. Mineral oil is applied to the film surface to remove surface scratches.

*9. Mechanical Properties - Tensile, Hysteresis, and Tear*

Stress-strain behavior in uniaxial tension is measured using ASTM D 1708 microtensile specimens. Samples are stretched with an Instron at 500 % $min^{-1}$ at 21°C. Tensile strength and elongation at break are reported from an average of 5 specimens.

The 100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21 °C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%\,Recovery = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the 1st unloading cycle.

Stress relaxation is measured at 50 percent strain and 37 °C for 12 hours using an Instron™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\%\ Stress\ Relaxation = \frac{L_0 - L_{12}}{L_0} \times 100$$

where $L_0$ is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

*10. TMA*

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with 1.5 mm radius tip (P/N N519-0416) is applied to the surface of the sample disc with 1N force. The temperature is raised at 5°C/min from 25°C. The probe penetration distance is measured as a function of temperature. The experiment ends when the probe has penetrated 1 mm into the sample.

*11. DMA*

Dynamic Mechanical Analysis (DMA) is measured on compression molded disks formed in a hot press at 180°C

at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mm (grip separation ΔL) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation ΔL increases with the temperature, particularly above the melting or softening point of the polymer sample. The test stops at the maximum temperature or when the gap between the fixtures reaches 65 mm.

*12. Melt Index*

Melt index, or $I_2$, is measured in accordance with ASTM D 1238, Condition 190°C/2.16 kg for polyethylene-based polymers (Condition 230C/2.16kg for polypropylene-based polymers). Melt index, or $I_{10}$ is also sometimes measured in accordance with ASTM D 1238, Condition 190°C/10 kg.

*13. ATREF*

Analytical temperature rising elution fractionation (ATREF) analysis is conducted according to the method described in U.S. Patent No. 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982), which are incorporated by reference herein in their entirety. The composition to be analyzed is dissolved in trichlorobenzene and allowed to crystallize in a column containing an inert support (stainless steel shot) by slowly reducing the temperature to 20°C at a cooling rate of 0.1 °C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

*14. $^{13}C$ NMR Analysis*

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989), which is incorporated by reference herein in its entirety.

*15. Polymer Fractionation by TREF*

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available from Pellets, Inc. 63 Industrial Drive, North Tonawanda, NY, 14120). The column is immersed in a thermally controlled oil jacket, set initially to 160 °C. The column is first cooled ballistically to 125 °C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetrafluoroethylene coated filter paper (available from Osmonics Inc., Cat# Z50WP04750). The filtrated fractions are dried overnight in a vacuum oven at 60 °C and weighed on an analytical balance before further testing.

*16. Melt Strength*

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 mm/sec$^2$. The required tensile force is recorded as a function of the take-up speed of the nip rolls. The maximum tensile force attained during the test is defined as the melt strength. In the case of polymer melt exhibiting draw resonance, the tensile force before the onset of draw resonance was taken as melt strength. The melt strength is recorded in centiNewtons ("cN").

The following examples illustrate, but do not, either explicitly or by implication, limit the present invention.

EXAMPLES

A. *Aqueous Dispersions*

Aqueous dispersions may be prepared by melt blending the inventive composition and water in an extruder to produce a stable, uniform dispersion with an average particle size, typically around 300 nm. The solids content of the dispersions is typically from 35 to 50 weight percent, based on the total weight of the dispersion. A dispersing agent, for example, UNICID™ 350 acid (6 wt% on a solids basis; of a synthetic C26 carboxylic acid converted to potassium salt, and available from Baker Petrolite), is added to the dispersion. The dispersions are then applied as a cast film to biaxially-oriented polypropylene (BOPP) film, and the surface energy measured.

The compositions of the invention may also be used as an adhesion promoter to polyurethane, either pure or in blends, extruded to provide artificial turf (or artificial grass yarn.).

For example, an inventive composition may be extruded on a tape extrusion line and stretched 5 times. Sample tapes can then bundled, and stacked as five strands on top of each other, mimicking bundles of artificial turf yarn after being tufted into a carpet. The bundles can be held in a mold, and a polycondensating diol-isocyanate blend, for example as shown in Table 6 below, may be injected into the mold onto one section of the bundle. After curing for about 30 minutes, at 25°C, a sample of the resultant polymer can be evaluated for adhesion to a polyurethane.

Table 6

| Diol Formulation | |
|---|---|
| Voranol EP 1900 | 90 pbw |
| 1,4 Butadiene | 10 pbw |
| Sylosiv P3 | 5 pbw |
| DABCO 33 LV | 0.2 pbw |
| Isocyanates | |
| Isonate M143 ratio | 40:100 |

Isonate M143 available from The Dow Chemical Company is a light-yellow, low viscosity, modified diphenylmethane diisocyanate containing a high percentage of pure diphenylmethane diisocyanate, and a lesser amount of polycarbodiimide adducts.

Voranol EP 1900 polyol available from The Dow Chemical Company is 4000 molecular weight diol based on propylene oxide with ethylene oxide capping.

SYLOSIV® zeolite powders available from Shimtek are non-toxic moisture scavengers for 1K- and 2K-Polyurethane systems.

DABCO 33 LV available from Air Products is a strong, multi-purpose gelation catalyst and is 33% crystalline triethylene diamine in 67% dipropylene glycol.

Thus, the inventive composition may be used as an adhesion promoter towards polyurethane, in artificial turf, and other applications, and which can be incorporated reactively into polyolefins, the latter being used for the production for artificial turf to improve the tuft lock of the yarn in the artificial turf carpet.

Adhesion is promoted via the functional group reacting to the polyurethane coating applied as a polymerizing mixture to the carpet backing. On the carpet backing side, the tufted artificial grass yarn / tape surface is exposed and the coating thereon applied. The concentration of the adhesion promoter can be 100 percent of an inventive composition, and can extend down to 10 percent of an inventive composition in a blend with any polyethylene or propylene deemed

appropriate for use in artificial grass yarn applications.

An inventive composition may also be used in the fabrication of hydrophilic artificial grass yam, with the purpose of creating a more "player friendly" surface properties. In particular, blends of thermoplastic polyurethane with polyethylenes compatibilized with an inventive composition may be used to form artificial turf.

B. *Screening of Various Compatibilized Compositions*

Table 7A reports various compositions of this invention and one comparative sample (i.e., Sample No. 12), and Table 7B reports various properties of these compositions as injection-molded plaques.

All the compositions in Table 7A are reported in weight percent based on the total weight of the composition, and contain 5 wt% of TPU-1 compatibilizer (polybutadiene diol-based TPU having a Tg of -34C, specific gravity @ 25C of 0.995, tensile strength of 1711 psi, $I_2$ of 1, hard segment content of 3 5 wt%, softening point of 90C, and 559% elongation available from Sartomer Company, Inc.). Two different types of olefin multi-block copolymers are used, i.e., OBC-1 and OBC-2 which are, respectively, ethylene/ethylene-octene block copolymer having an overall density of 0.877 g/cm$^3$ and an overall $I_2$ of 1 with a 70% soft (density 0.854 g/cm$^3$)/30% hard (density of 0.935 g/cm$^3$, $I_2$ of 1 g/10min) block split, and ethylene/ethylene-octene block copolymer having an overall density of 0.877 g/cm$^3$ and an overall $I_2$ of 1 with a 85% soft (density 0.855 g/cm$^3$)/15% hard (density of 0.935 g/cm$^3$, $I_2$ of 5.2 g/10min) block split, both made by The Dow Chemical Company. The thermoplastic polyurethane, TPU, is a polycaprolactam polyester diol-based TPU with methylene diisocyanate, and having a density of 1.18g/cm$^3$, a MFR (190°C/2.16 kg) of 5 g/10 min and a Shore A hardness of 80. SBS 401 is a styrene-butadiene-styrene rubber made by Total Petrochemicals having styrene/butadiene weight ratio of 22:28 wt% and a density of 0.93 g/cm$^3$.

Comparative Sample 12 uses as the compatibilizer a maleic anhydride grafted ethylene/octene copolymer containing about 1 wt% MAH graft, having a density of 0.87 g/cm$^3$ and an $I_2$ of 1g/10 min available from The Dow Chemical Company.

Table 7A

| Description of the Compatibilized Compositions | | | | |
|---|---|---|---|---|
| **Sample No.** | **OBC** | **OBC (wt%)** | **SBS 401 (wt%)** | **TPU (wt%)** |
| **1** | 1 | 25 | 25 | 45 |
| **2** | 2 | 0 | 40 | 55 |
| **3** | 2 | 0 | 60 | 35 |
| **4** | 1 | 40 | 0 | 55 |
| **5** | 2 | 25 | 25 | 45 |
| **6** | 2 | 60 | 0 | 35 |
| **7** | 2 | 40 | 0 | 55 |
| **8** | 1 | 0 | 40 | 55 |
| **9** | 1 | 0 | 60 | 35 |
| **10** | 1 | 60 | 0 | 35 |
| **11** | 2 | 10 | 30 | 55 |
| **12*** | 2 | 10 | 30 | 55 |

Table 7B

| Properties of the Compatibilized Compositions of Table 7A | | | | | | | |
|---|---|---|---|---|---|---|---|
| **Sample No.** | **Hardness (Shore A)** | **Density (g/cc)** | **Load @ Break (kg/cm$^2$)** | **Elongation (%)** | **Abrasion (mm$^3$)** | **Tear (kg/cm)** | **Melt Index ($I_5$)** |
| **1** | 69 | 1 | 13.5 | 1021 | 180 | 40 | 6 |
| **2** | 68 | 1.053 | 11.7 | 950 | 89 | 42 | 11 |

(continued)

| Properties of the Compatibilized Compositions of Table 7A | | | | | | | |
|---|---|---|---|---|---|---|---|
| **Sample No.** | **Hardness (Shore A)** | **Density (g/cc)** | **Load @ Break ($kg/cm^2$)** | **Elongation (%)** | **Abrasion ($mm^3$)** | **Tear (kg/cm)** | **Melt Index ($I_5$)** |
| **3** | 65 | 1.006 | 6.5 | 845 | 137 | 34 | 3 |
| **4** | 70 | 0.998 | 6.5 | 796 | 406 | 28 | 105 |
| **5** | 71 | 1.012 | 6.4 | 745 | 179 | 35 | 37 |
| **6** | 73 | 0.966 | 4.6 | 746 | 357 | 35 | 76 |
| **7** | 74 | 1.008 | 8.2 | 640 | 295 | 45 | 52 |
| **8** | 64 | 1.055 | 14 | 1087 | 59 | 43 | 9.6 |
| **9** | 61 | 1.007 | 6.7 | 802 | 95 | 37 | 2 |
| **10** | 71 | 0.926 | 5.4 | 776 | 466 | 32 | 39 |
| **11** | 68 | 1.039 | 10.5 | 32 | 93 | 42 | 18 |
| **12*** | 69 | 1.033 | 14.3 | 882 | 230 | 50 | 5 |
| 12* is a comparative sample. | | | | | | | |

All compositions contain 5 wt% compatibilizer.

The use of the TPU as the compatibilizer increases the melt index as compared to the comparative sample. At similar compositional make-up, abrasion resistance is higher with the TPU as compared to the traditional MAH-grafted resins.

Although the invention has been described in considerable detail in the preceding examples, this detail is for the purpose of illustration and is not to be construed as a limitation on the invention as described in the following claims. All U.S. patents and allowed U.S. patent applications or published U.S. patent applications are incorporated within this specification by reference.

## Claims

**1.** A composition comprising the following:

A) at least one olefin multi-block interpolymer;
B) at least one thermoplastic polyurethane; and
C) at least one polydiene-based or polydiol-based polyurethane.

**2.** A composition of Claim 1, wherein said olefin multi-block interpolymer is an ethylene/α-olefin multi-block interpolymer, which has one or more of the following characteristics:

(1) an average block index greater than zero and up to about 1.0 and a molecular weight distribution, Mw/Mn, greater than about 1.3;
(2) at least one molecular fraction which elutes between 40°C and 130°C when fractionated using TREF, **characterized in that** the fraction has a block index of at least 0.5 and up to about 1;
(3) an Mw/Mn from about 1.7 to about 3.5, at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)^2;$$

(4) an Mw/Mn from about 1.7 to about 3.5, and is **characterized by** a heat of fusion, ΔH in J/g, and a delta quantity, ΔT, in degrees Celsius, defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48^{o}C \text{ for } \Delta H \text{ greater than } 130 \text{ J/g},$$

wherein the CRYSTAF peak is determined using at least 5 percent of the cumulative polymer, and if less than 5 percent of the polymer has an identifiable CRYSTAF peak, then the CRYSTAF temperature is 30°C;
(5) an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of a cross-linked phase:

$$Re > 1481 - 1629(d);$$

(6) a molecular fraction which elutes between 40°C and 130°C when fractionated using TREF, **characterized in that** the fraction has a molar comonomer contentgreater than, or equal to, the quantity (- 0.2013) T + 20.07, where T is the numerical value of the peak elution temperature of the TREF fraction being compared, measured in °C; or
(7) a storage modulus at 25°C, G'(25°C), and a storage modulus at 100°C, G'(100°C), wherein the ratio of G'(25°C) to G'(100°C) is in the range of about 1:1 to about 9:1.

**3.** A composition of any of Claim 1 or Claim 2, wherein the at least one polydiene-based or polydiol-based polyurethane is present in an amount less than, or equal to, 20 weight percent, based on the total weight of the composition.

**4.** An article comprising at least one component formed from the composition of any of the preceding claims.

**5.** An extruded sheet formed from the composition of any of Claims 1-3.

**6.** An over-molded article comprising the following: (a) a substrate formed from a composition comprising a polar polymer, and (b) a molded overlay formed from the composition of any of Claims 1-3.

**7.** A laminated structure comprising a first layer and a second layer, and wherein the first layer is formed from the composition of any of Claims 1-3, and wherein the second layer is formed from a composition comprising a polar polymer.

**8.** A molded article comprising a first component and a second component, and wherein the first component is formed from a composition comprising a polar polymer, and wherein the second component is formed from the composition of any of Claims 1-3.

**9.** A dispersion comprising the composition of any of Claims 1-3.

**10.** An injection molded article comprising at least one component formed from the composition of any of Claims 1-3.

**11.** A footwear article comprising at least one component formed from the composition of any of Claims 1-3.

**12.** A thermoformed sheet comprising at least one layer formed from the composition of any of Claims 1-3.

**13.** An automotive part comprising at least one layer formed from the composition of any of Claims 1-3.

**14.** Artificial turf comprising at least one component formed from the composition of any of Claims 1-3.

**15.** An adhesive comprising at least one component formed from the composition of any of Claims 1-3.

**Patentansprüche**

1. Zusammensetzung, die das Folgende umfasst:

   A) mindestens ein Olefin-Multiblock-Interpolymer
   B) mindestens ein thermoplastisches Polyurethan; und
   C) mindestens ein Polydien-basiertes oder Polydiol-basiertes Polyurethan.

2. Zusammensetzung nach Anspruch 1, worin das Olefin-Multiblock-Interpolymer ein Ethylen-/α-Olefin-Multiblock-Interpolymer ist, welches eine oder mehrere der folgenden Eigenschaften aufweist:

   (1) einen durchschnittlichen Blockindex größer als Null und bis zu etwa 1,0 und eine Molekulargewichtsverteilung, Mw/Mn, größer als etwa 1,3;
   (2) mindestens eine molekulare Fraktion, welche zwischen 40 °C und 130 °C eluiert, wenn mittels TREF fraktioniert wird, **dadurch gekennzeichnet, dass** die Fraktion einen Blockindex von mindestens 0,5 und bis zu etwa 1 aufweist;
   (3) eine Mw/Mn von etwa 1,7 bis etwa 3,5, mindestens einen Schmelzpunkt, Tm, in Grad Celsius und eine Dichte, d, in Gramm/Kubikzentimeter, worin die Zahlenwerte von Tm und d der Beziehung

$$Tm > -2002{,}9 + 4538{,}5(d) - 2422{,}2(d)^2 \text{ entsprechen;}$$

   (4) eine Mw/Mn von etwa 1,7 bis etwa 3,5 und durch eine Schmelzwärme, ΔH in J/g, und eine Delta-Menge, ΔT, in Grad Celsius, definiert als der Temperaturunterschied zwischen dem höchsten DSC-Peak und dem höchsten CRYSTAF-Peak, **gekennzeichnet** ist, worin die Zahlenwerte von ΔT und ΔH die folgenden Beziehungen aufweisen:

$$\Delta T > -0{,}1299(\Delta H) + 62{,}81 \text{ für } \Delta H \text{ größer als Null und bis zu 130 J/g,}$$

$$\Delta T \geq 48\ °C \text{ für } \Delta H \text{ größer als 130 J/g,}$$

   worin der CRYSTAF-Peak mittels mindestens 5 Prozent des kumulativen Polymers bestimmt wird, und wenn weniger als 5 Prozent des Polymers einen identifizierbaren CRYSTAF-Peak aufweist, dann ist die CRYSTAF-Temperatur 30 °C;
   (5) eine elastische Erholung, Re, in Prozent bei 300 Prozent Belastung und 1 Zyklus, gemessen mit einer formgepressten Folie des Ethylen-/α-Olefin-Interpolymers, und weist ein Dichte, d, in Gramm/Kubikzentimeter auf, worin die Zahlenwerte von Re und d der folgenden Beziehung entsprechen, wenn das Ethylen-/α-Olefin-Interpolymer im wesentlichen keine vernetzte Phase aufweist:

$$Re > 1481 - 1629(d);$$

   (6) eine molekulare Fraktion, welche zwischen 40 °C und 130 °C eluiert, wenn mittels TREF fraktioniert wird, **dadurch gekennzeichnet, dass** die Fraktion einen molaren Comonomergehalt größer als oder gleich der Menge (-0,2013)T + 20,07 aufweist, worin T der Zahlenwert der Peakelutionstemperatur der TREF-Fraktion in °C gemessen, die verglichen wird, ist; oder
   (7) ein Speichermodul bei 25°C, G'(25 °C) und ein Speichermodul bei 100 °C, G'(100 °C), worin das Verhältnis von G'(25 °C) zu G'(100 °C) in dem Bereich von etwa 1:1 bis etwa 9:1 liegt.

3. Zusammensetzung nach Anspruch 1 oder Anspruch 2, worin das mindestens eine Polydien-basierte oder Polydiol-basierte Polyurethan in einer Menge mit weniger als oder gleich 20 Gewichtsprozent vorliegt, basierend auf dem Gesamtgewicht der Zusammensetzung.

4. Gegenstand, der mindestens einen Bestandteil umfasst, der aus der Zusammensetzung nach einem der vorhergehende Ansprüche gebildet wird.

5. Extrudierte Schicht, die aus der Zusammensetzung nach einem der Ansprüche 1-3 gebildet wird.

6. Überformter Gegenstand, der das Folgende umfasst: (a) ein Substrat, welches aus einer Zusammensetzung, die ein polares Polymer umfasst, gebildet wird und (b) eine geformte Auflage, die aus der Zusammensetzung nach einem der Ansprüche 1-3 gebildet wird.

7. Laminierte Anordnung, die eine erste Schicht und eine zweite Schicht umfasst, und worin die erste Schicht aus der Zusammensetzung nach einem der Ansprüche 1-3 gebildet wird, und worin die zweite Schicht aus einer Zusammensetzung, die ein polares Polymer umfasst, gebildet wird.

8. Geformter Gegenstand, der einen ersten Bestandteil und einen zweiten Bestandteil umfasst, und worin der erste Bestandteil aus einer Zusammensetzung, die ein polares Polymer umfasst, gebildet wird, und worin der zweite Bestandteil aus einer Zusammensetzung nach einem der Ansprüche 1-3 gebildet wird.

9. Dispersion, die eine Zusammensetzung nach einem der Ansprüche 1-3 umfasst.

10. Spritzgegossener Gegenstand, der mindestens einen Bestandteil umfasst, der aus der Zusammensetzung nach einem der Ansprüche 1-3 gebildet wird.

11. Schuherzeugnis, das mindestens einen Bestandteil umfasst, der aus der Zusammensetzung nach einem der Ansprüche 1-3 gebildet wird.

12. Thermogeformte Schicht, die mindestens eine Schicht umfasst, die aus der Zusammensetzung nach einem der Ansprüche 1-3 gebildet wird.

13. Automobilteil, das mindestens eine Schicht umfasst, die aus der Zusammensetzung nach einem der Ansprüche 1-3 gebildet wird.

14. Kunstrasen, der mindestens einen Bestandteil umfasst, der aus der Zusammensetzung nach einem der Ansprüche 1-3 gebildet wird.

15. Kleber, der mindestens einen Bestandteil umfasst, der aus der Zusammensetzung nach einem der Ansprüche 1-3 gebildet wird.

## Revendications

1. Composition comprenant ce qui suit :

   A) au moins un interpolymère multibloc d'oléfines,
   B)au moins un polyuréthane thermoplastique,
   C)et au moins un polyuréthane à base de polydiène ou de polydiol.

2. Composition conforme à la revendication 1, dans laquelle ledit interpolymère multibloc d'oléfines est un interpolymère multibloc d'éthylène et d'alpha-oléfine qui présente l'une ou plusieurs des caractéristiques suivantes :

   1) un indice de bloc moyen supérieur à 0 et valant jusqu'environ 1,0 et un indice de distribution des masses moléculaires Mw/Mn supérieur à environ 1,3 ;
   2) au moins une fraction moléculaire qui, en fractionnement TREF, est éluée entre 40 °C et 130 °C et qui est **caractérisée en ce qu'**elle présente un indice de bloc d'au moins 0,5 et valant jusqu'environ 1 ;
   3) un indice Mw/Mn d'environ 1,7 à environ 3,5, et au moins un point de fusion Tf et une masse volumique d dont les valeurs numériques, exprimées en degrés Celsius et en grammes par centimètre cube, vérifient l'inégalité suivante :

$$Tf > -2002,9 + 4538,5(d) - 2422,2(d)^2 ;$$

4) un indice Mw/Mn d'environ 1,7 à environ 3,5, et une chaleur de fusion ΔH et une quantité ΔT, définie comme étant la différence en température entre le plus grand pic observé en analyse AED et le plus grand pic observé en analyse CRYSTAF, dont les valeurs numériques, exprimées respectivement en joules par gramme et en degrés Celsius, vérifient l'une des relations suivantes :

$$\text{si } 0 < \Delta H \leq 130 \text{ J/g}, \Delta T > -0,1299(\Delta H) + 62,81$$

$$\text{si } \Delta H > 130 \text{ J/g}, \Delta T \geq 48\ °C$$

étant entendu que le pic CRYSTAF est déterminé à partir d'au moins 5 % du polymère en pourcentage cumulé, et si un pic CRYSTAF est identifiable pour moins de 5 % du polymère, on prend 30 °C pour valeur de la température du pic CRYSTAF ;
5) une recouvrance élastique Re, mesurée sur un film de l'interpolymère d'éthylène et d'alpha-oléfine préparé par moulage par compression, pour une déformation de 300 % et 1 cycle, et une masse volumique d dont les valeurs numériques, exprimées respectivement en pourcents et en grammes par centimètre-cube, vérifient la relation suivante, si l'interpolymère d'éthylène et d'alpha-oléfine ne comprend pratiquement pas de phase réticulée :

$$Re > 1481 - 1629(d)$$

6) une fraction moléculaire, éluée entre 40 et 180 °C en fractionnement TREF, **caractérisée en ce qu'**elle présente une teneur molaire en co-monomère supérieure ou égale à la valeur de l'expression -0,2013(T) + 20,07 où T représente la valeur numérique de la température d'élution de pic de la fraction TREF en question, exprimée en degrés Celsius ;
7) ou un module de conservation à 25 °C $G'_{25}$ et un module de conservation à 100 °C $G'_{100}$ tels que le rapport de $G'_{25}$ à $G'_{100}$ vaut d'environ 1/1 à environ 9/1.

**3.** Composition conforme à la revendication 1 ou 2, dans laquelle le polyuréthane à base de polydiène ou de polydiol au nombre d'au moins un se trouve en une quantité représentant au plus 20 % du poids total de la composition.

**4.** Article comprenant au moins un composant formé d'une composition conforme à l'une des revendications précédentes.

**5.** Feuille extrudée, formée d'une composition conforme à l'une des revendications 1 à 3.

**6.** Article à revêtement moulé, comprenant ce qui suit :

a) un substrat formé d'une composition comprenant un polymère polaire ;
b) et un revêtement moulé, formé d'une composition conforme à l'une des revendications 1 à 3.

**7.** Structure stratifiée comprenant une première couche et une deuxième couche, dans laquelle la première couche est formée d'une composition conforme à l'une des revendications 1 à 3 et la deuxième couche est formée d'une composition comprenant un polymère polaire.

**8.** Article moulé comprenant un premier composant et un deuxième composant, dans lequel le premier composant est formé d'une composition comprenant un polymère polaire et le deuxième composant est formé d'une composition conforme à l'une des revendications 1 à 3.

**9.** Dispersion comprenant une composition conforme à l'une des revendications 1 à 3.

**10.** Article moulé par injection, comprenant au moins un composant formé à partir d'une composition conforme à l'une

des revendications 1 à 3.

**11.** Article de type chaussure, comprenant au moins un composant formé à partir d'une composition conforme à l'une des revendications 1 à 3.

**12.** Feuille thermoformée, comprenant au moins une couche formée à partir d'une composition conforme à l'une des revendications 1 à 3.

**13.** Pièce d'automobile, comprenant au moins une couche formée à partir d'une composition conforme à l'une des revendications 1 à 3.

**14.** Gazon artificiel, comprenant au moins un composant formé à partir d'une composition conforme à l'une des revendications 1 à 3.

**15.** Adhésif comprenant au moins un composant formé à partir d'une composition conforme à l'une des revendications 1 à 3.

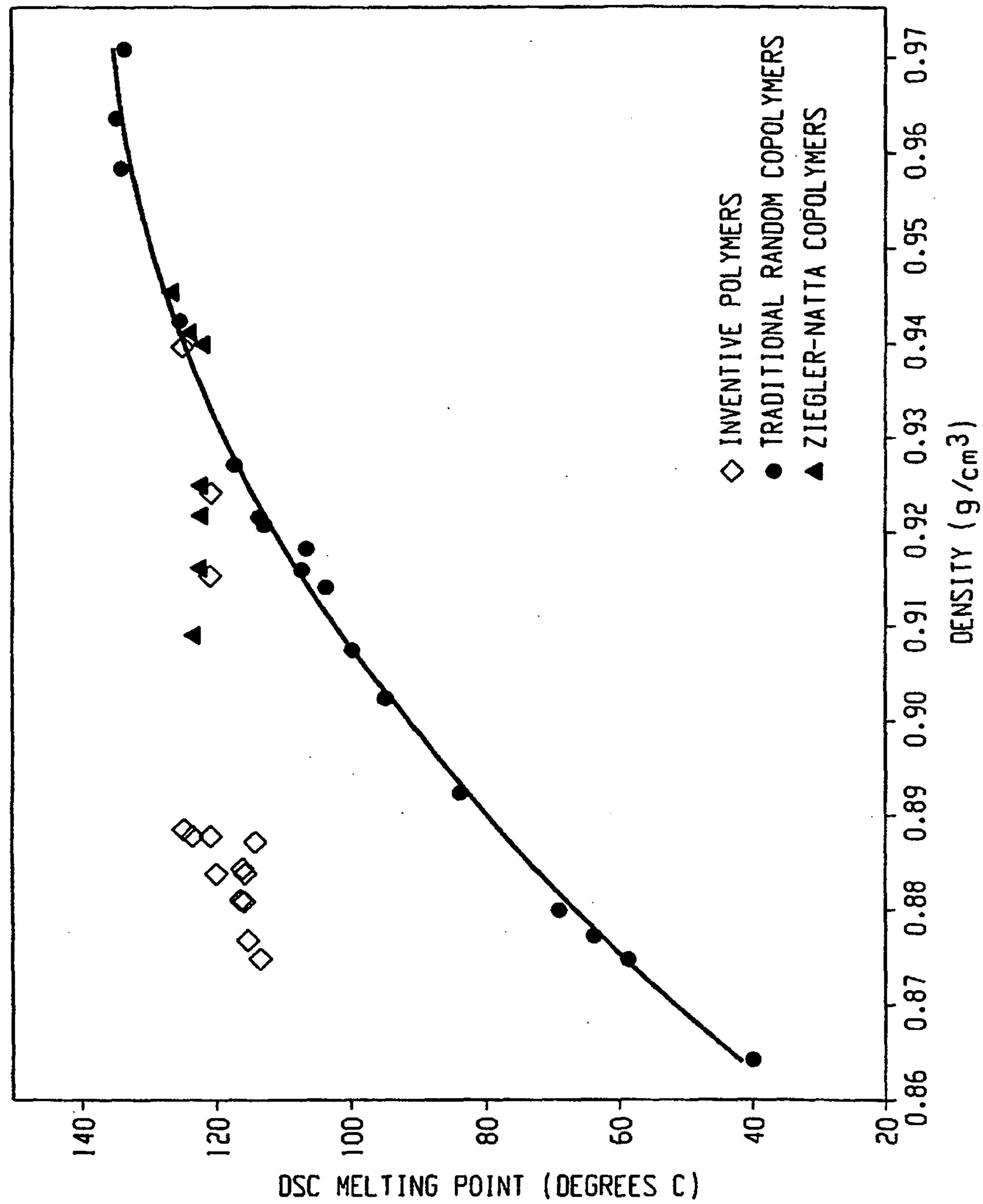

DSC MELTING POINT (DEGREES C)
140
120
100
80
60
40
20
DENSITY (g/cm3)
0.86
0.87
0.88
0.89
0.90
0.91
0.92
0.93
0.94
0.95
0.96
0.97
◇ INVENTIVE POLYMERS
● TRADITIONAL RANDOM COPOLYMERS
▲ ZIEGLER-NATTA COPOLYMERS


Fig. 1

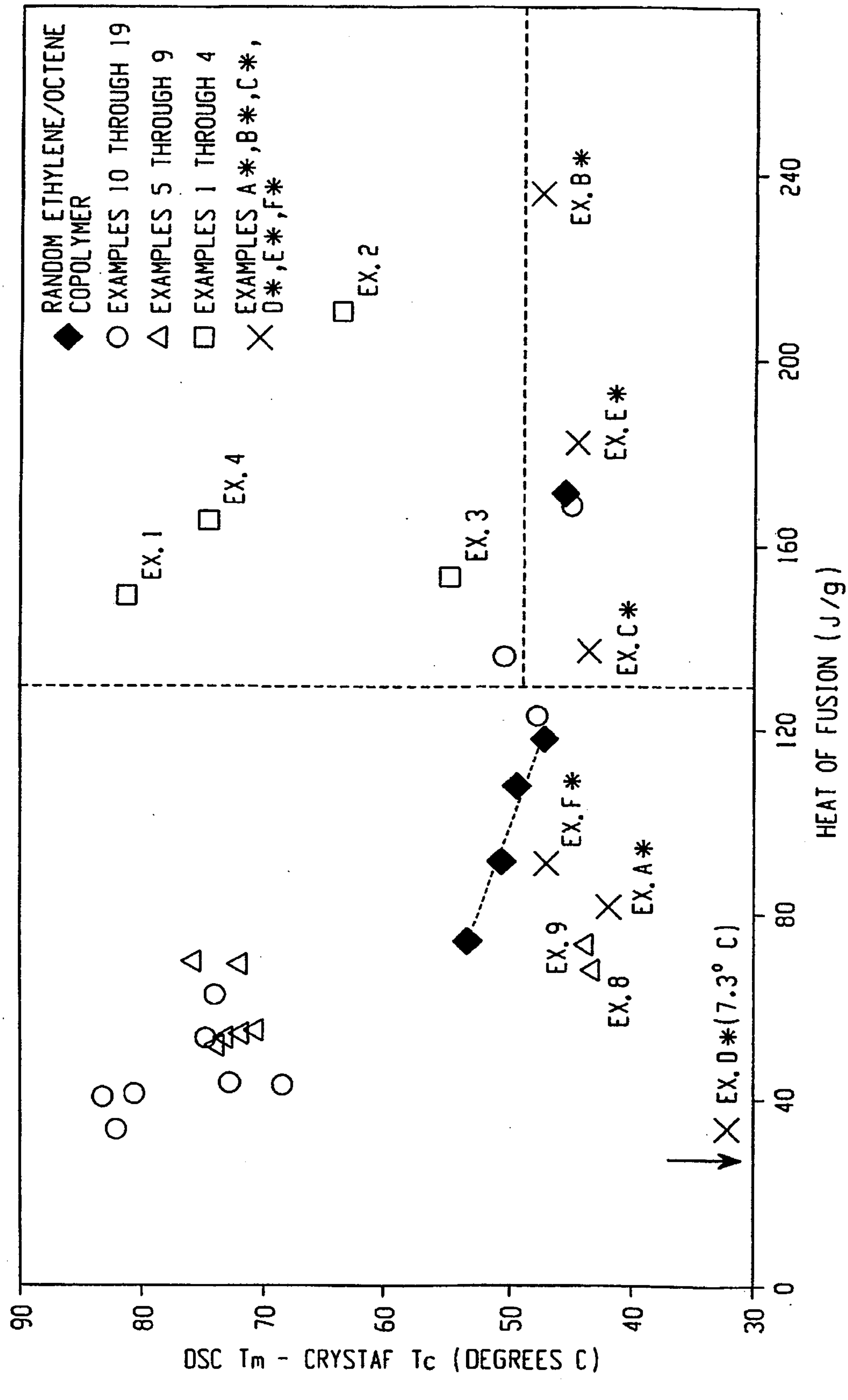
RANDOM ETHYLENE/OCTENE COPOLYMER
EXAMPLES 10 THROUGH 19
EXAMPLES 5 THROUGH 9
EXAMPLES 1 THROUGH 4
EXAMPLES A*,B*,C*, D*,E*,F*
EX. 1
EX. 2
EX. 3
EX. 4
EX. 8
EX. 9
EX. A*
EX. B*
EX. C*
EX. E*
EX. F*
EX. D* (7.3° C)
HEAT OF FUSION (J/g)
DSC Tm - CRYSTAF Tc (DEGREES C)
0
40
80
120
160
200
240
30
40
50
60
70
80
90

Fig. 2

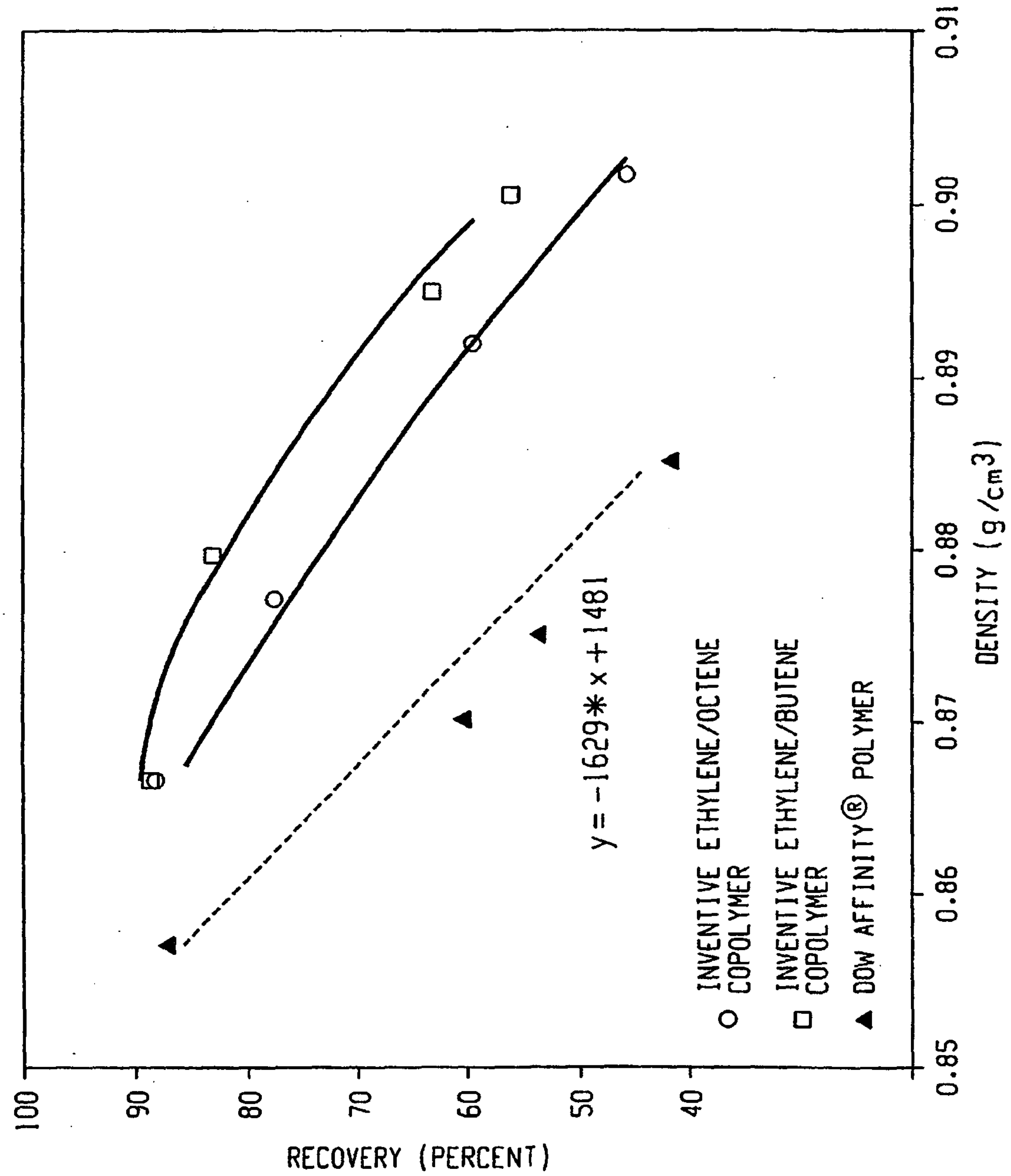
RECOVERY (PERCENT)
100
90
80
70
60
50
40
DENSITY (g/cm3)
0.85
0.86
0.87
0.88
0.89
0.90
0.91
y = -1629 * x + 1481
INVENTIVE ETHYLENE/OCTENE COPOLYMER
INVENTIVE ETHYLENE/BUTENE COPOLYMER
DOW AFFINITY® POLYMER

*Fig. 3*

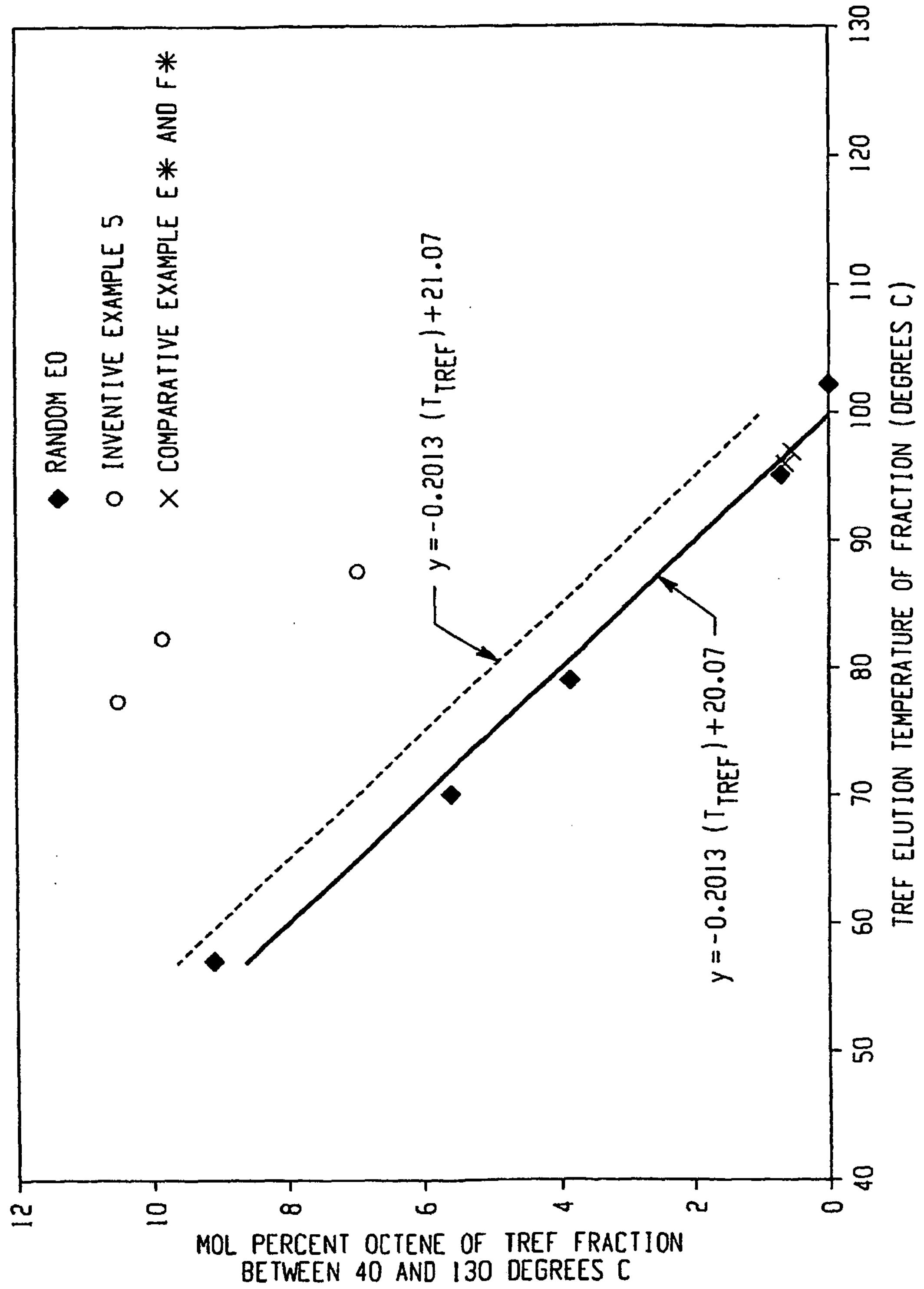
RANDOM EO
INVENTIVE EXAMPLE 5
COMPARATIVE EXAMPLE E* AND F*
y = -0.2013 (T TREF) + 21.07
y = -0.2013 (T TREF) + 20.07
MOL PERCENT OCTENE OF TREF FRACTION BETWEEN 40 AND 130 DEGREES C
TREF ELUTION TEMPERATURE OF FRACTION (DEGREES C)
0
2
4
6
8
10
12
40
50
60
70
80
90
100
110
120
130

Fig. 4

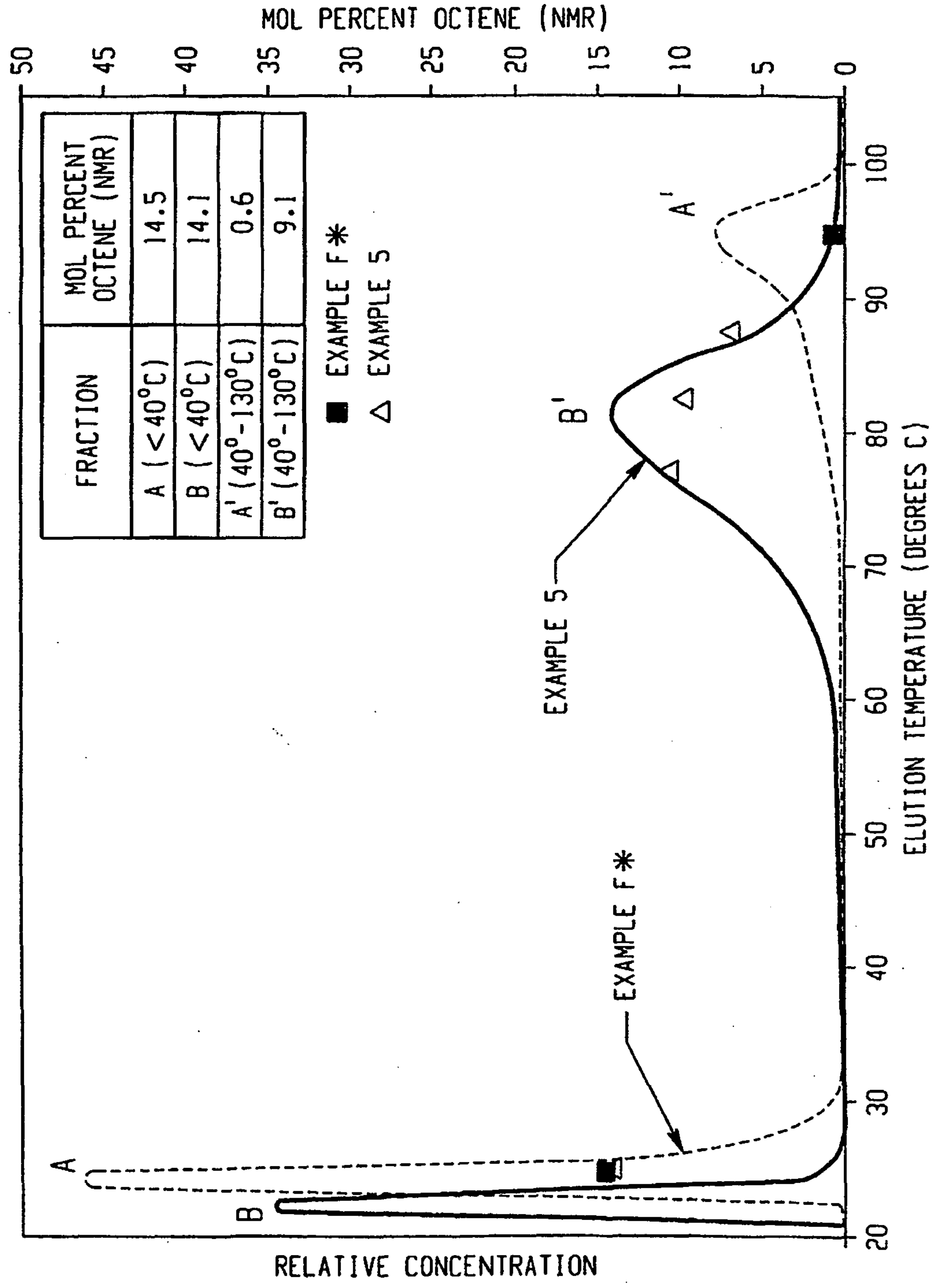
MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
■ EXAMPLE F*
△ EXAMPLE 5
A
B
A'
B'
EXAMPLE 5
EXAMPLE F*
20
30
40
50
60
70
80
90
100
ELUTION TEMPERATURE (DEGREES C)
RELATIVE CONCENTRATION

Fig. 5

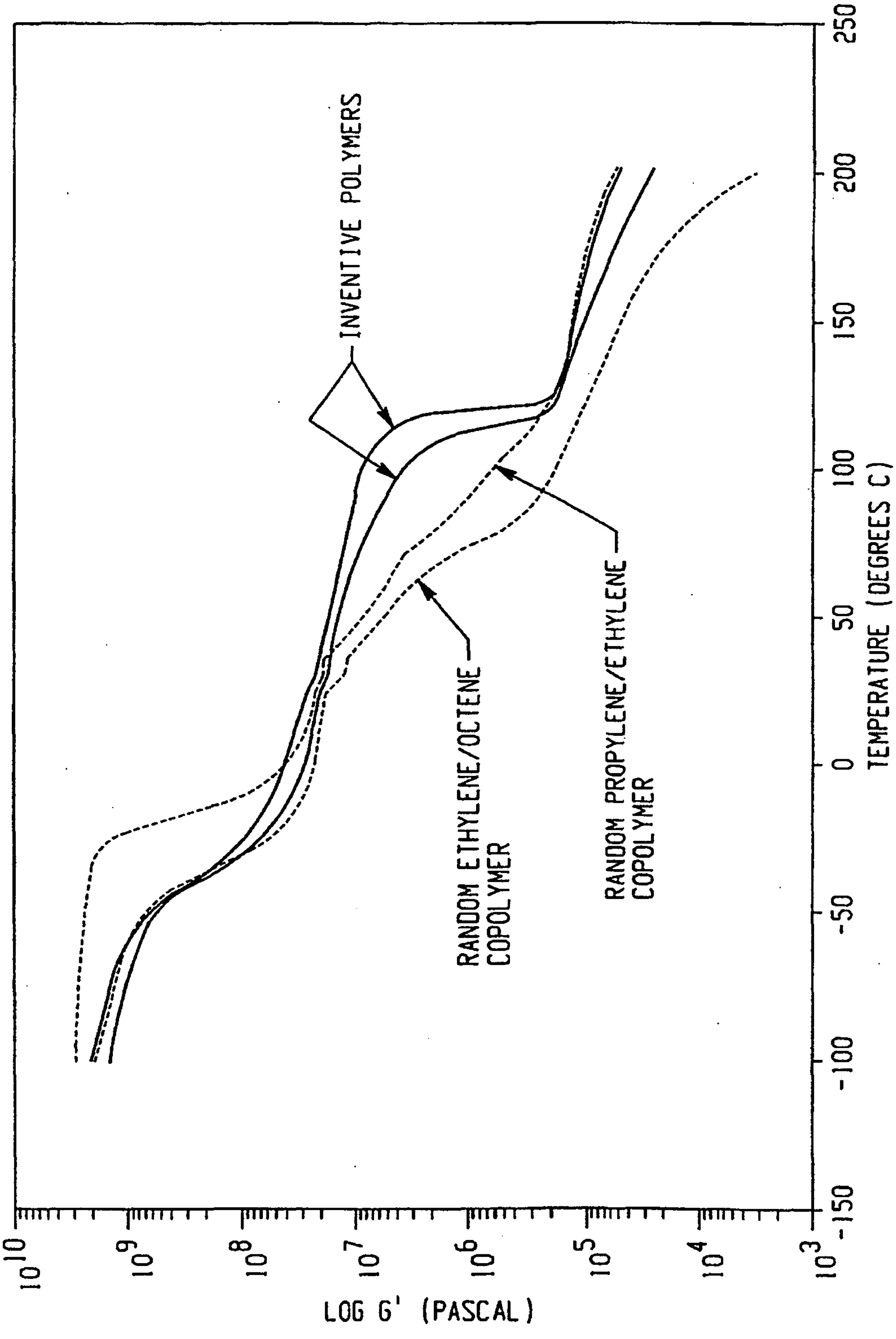

INVENTIVE POLYMERS
RANDOM PROPYLENE/ETHYLENE COPOLYMER
RANDOM ETHYLENE/OCTENE COPOLYMER
LOG G' (PASCAL)
TEMPERATURE (DEGREES C)


Fig. 6

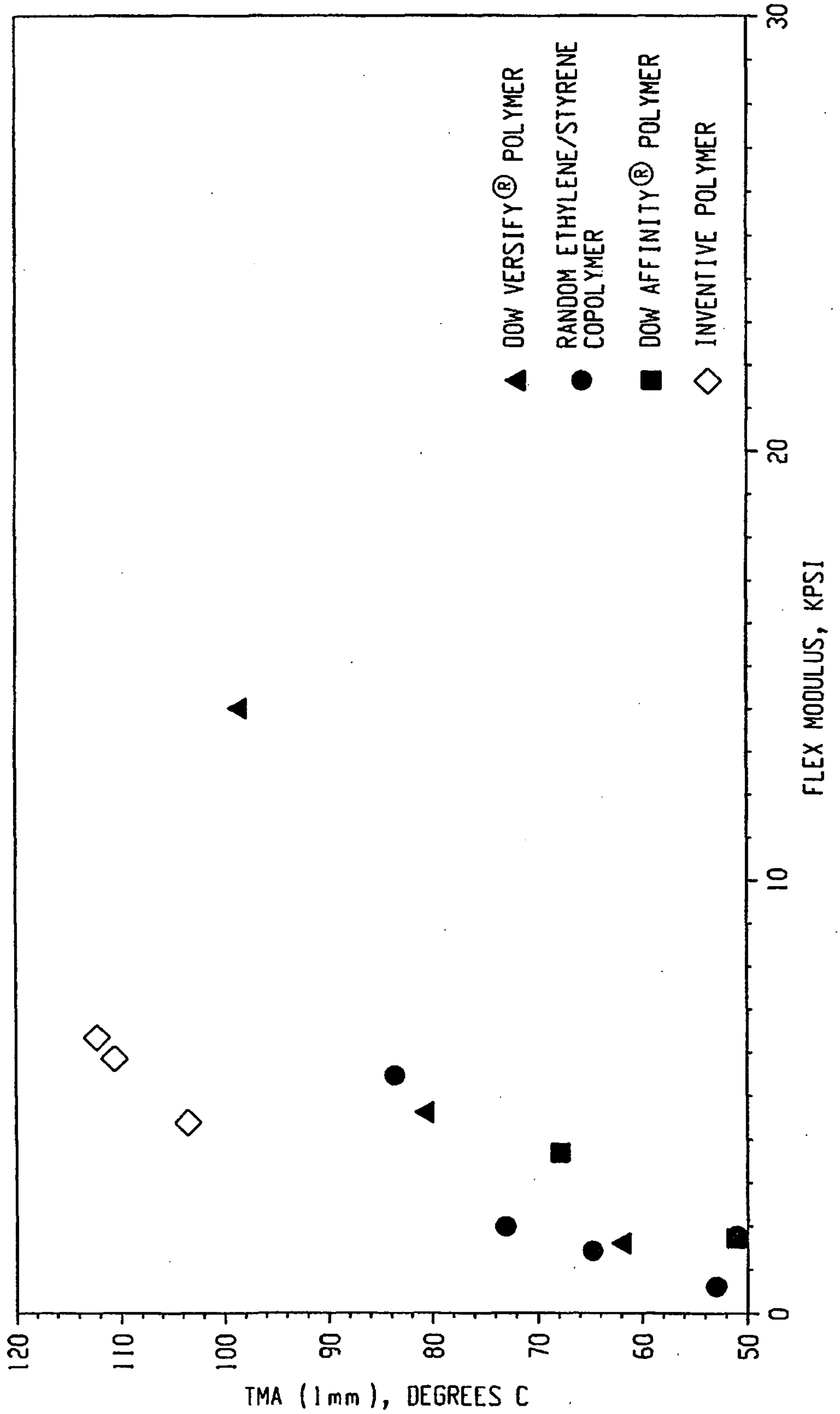
DOW VERSIFY® POLYMER
RANDOM ETHYLENE/STYRENE COPOLYMER
DOW AFFINITY® POLYMER
INVENTIVE POLYMER
TMA (1mm), DEGREES C
120
110
100
90
80
70
60
50
FLEX MODULUS, KPSI
0
10
20
30

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5902854 A
- US 6251982 B
- US 6054533 A
- US 6469099 B
- WO 0063293 A
- EP 0347794 A1
- WO 9627622 A
- US 4883837 A
- US 5623019 A
- US 20040106744 A
- WO 2007033117 A
- US 2006035384 W
- US P4039593 A
- WO 9902603 A
- EP 0994919 B1
- US P5039755 A
- US P5229464 A
- US P4385133 A
- US 4522975 A
- US 5167899 A
- US P5864001 A
- US 05008917 W
- US 20060199914 A
- US 876287 P
- US 37683506 A
- US 55390604 P
- US 66293705 P
- US 66293905 P
- US 605662938 A
- US 2005008916 W
- US 2005008915 W
- US 2005008917 W
- WO 03401952003 A
- US 0204017 A
- US SN10429024 A
- WO 0424740 A
- US 20040010103 A
- US P6268444 A
- US 2003004286 A
- US P59199883 A
- US P6395671 A
- US PS6248540 A
- US 6030917 A
- US 6362309 B
- US 6306658 B
- US 6316663 B
- US 2929800 A
- US 2948691 A
- US 3493634 A
- US 3620905 A
- US 3642964 A
- US 3963679 A
- US 4131604 A
- US 4169196 A
- US RE31671 E
- US 4245081 A
- US 4371684 A
- US 4379904 A
- US 4447590 A
- US 4523005 A
- US 4621 A
- US 113 A
- US 4631329 A
- US 3394164 A
- US 3644457 A
- US 3883571 A
- US 4031026 A
- US 4115429 A
- US 4118411 A
- US 4299347 A
- US 3384653 A
- US 4057595 A
- US 20050100754 A
- US 4798081 A


### Non-patent literature cited in the description


- **Kohler.** *J. Am. Chemical Soc.,* 1927, vol. 49, 31-81
- Novel Polybutadiene Diols for Thermoplastic Polyurethanes. **Pytela et al.** International Polyurethane Conference, PU Lat. Am. 2001
- **Pytela et al.** Novel Thermoplastic Polyurethanes for Adhesives and Sealants. *Adhesives & Sealant Industry,* June 2003, 45-51
- **Markovich, Ronald P. ; Hazlitt, Lonnie G. ; Smith, Linley.** Development of gel-permeation chromatography-Fourier transform infrared spectroscopy for characterization of ethylene-based polyolefin copolymers. *Polymeric Materials Science and Engineering,* 1991, vol. 65, 98-100

- **Deslauriers, P.J. ; Rohlfing, D.C. ; Shieh, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **Saunders ; Frisch.** Polyurethanes: Chemistry and Technology. Interscience Publishers, 1964, 767-769
- Polyurethane Handbook. Macmillan Publishing Co., Inc, 1985, 405-417
- **Saunders et al.** Polyurethanes, Chemistry and Technology. Interscience, 1963, 228-232
- **Britain et al.** *J. Applied Polymer Science,* 1960, vol. 4, 207-211
- **Williams ; Ward.** *J. Polym. Sci., Polym. Let.,* 1968, vol. 6, 621
- **Wilde, L. ; Ryle, T.R. ; Knobeloch, D.C. ; Peat, I.R.** Determination of Branching Distributions in Polyethylene and Ethylene Copolymers. *J. Polym. Sci.,* 1982, vol. 20, 441-455
- **Randall, J.C.** *JMS-Rev. Macromol. Chem. Phys.,* 1989, vol. C29, 201-317